(19) Europäisches Patentamt
European Patent Office
Office européen des brevets

(11) EP 1 743 527 A2

(12) EUROPÄISCHE PATENTANMELDUNG

(43) Veröffentlichungstag:
**17.01.2007 Patentblatt 2007/03**

(21) Anmeldenummer: **06008155.1**

(22) Anmeldetag: **02.12.2002**

(51) Int Cl.:
***A01N 43/54*** *(2006.01)* ***A01N 43/707*** *(2006.01)*
***A01N 43/653*** *(2006.01)* ***A01N 25/00*** *(2006.01)*

(84) Benannte Vertragsstaaten:
**AT BE BG CH CY CZ DE DK EE ES FI FR GB GR IE IT LI LU MC NL PT SE SI SK TR**
Benannte Erstreckungsstaaten:
**AL LT LV RO**

(30) Priorität: **05.12.2001 DE 10159659**

(62) Dokumentnummer(n) der früheren Anmeldung(en) nach Art. 76 EPÜ:
**02791758.2 / 1 453 377**

(71) Anmelder: **Bayer CropScience Aktiengesellschaft**
**40789 Monheim (DE)**

(72) Erfinder:
- **Feucht, Dieter**
  **65760 Eschborn (DE)**
- **Dahmen, Peter**
  **41470 Neuss (DE)**
- **Drewes, Mark Wilhelm**
  **40764 Langenfeld (DE)**
- **Pontzen, Rolf**
  **42799 Leichlingen (DE)**
- **Andree, Roland**
  **40764 Langenfeld (DE)**
- **Linker, Karl-Heinz**
  **51377 Leverkusen (DE)**

(74) Vertreter: **Schwenk, Norbert et al**
**Bayer CropScience GmbH**
**Patent- und Lizenzabteilung**
**Industriepark Höchst,**
**Gebäude K 607**
**65926 Frankfurt am Main (DE)**

Bemerkungen:
Diese Anmeldung ist am 20 - 04 - 2006 als Teilanmeldung zu der unter INID-Kode 62 erwähnten Anmeldung eingereicht worden.

# (54) Herbizide auf Basis von substituierten Carbonsäureaniliden

(57) Die Erfindung betrifft neue herbizide Wirkstoffkombinationen, die bekannte substituierte Carbonsäureanilide der Formel (I)

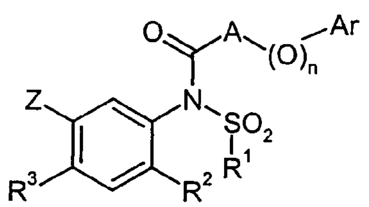

(I)

in welcher n, A, Ar, $R^1$, $R^2$, $R^3$ und Z die in der Beschreibung angegebene Bedeutung haben einerseits und eine oder mehrere bekannte herbizid wirksame Verbindung(en) andererseits und/oder gegebenenfalls eine die Kulturpflanzen-Verträglichkeit verbessernde Verbindung enthalten und deren Verwendung zur Unkrautbekämpfung in verschiedenen Nutzpflanzenkulturen sowie zur Bekämpfung von monokotylen und dikotylen Unkräutern im semi- und nicht-selektiven Bereich.

EP 1 743 527 A2

## Beschreibung

Die Erfindung betrifft neue herbizide Wirkstoffkombinationen, die bekannte substituierte Carbonsäureanilide einerseits und eine oder mehrere bekannte herbizid wirksame Verbindung(en) andererseits und/oder gegebenenfalls eine die Kulturpflanzen-Verträglichkeit verbessernde Verbindung enthalten und deren Verwendung zur Unkrautbekämpfung in verschiedenen Nutzpflanzenkulturen sowie zur Bekämpfung von monokotylen und dikotylen Unkräutern im semi- und nicht-selektiven Bereich.

Substituierte Carbonsäureanilide sind als wirksame Herbizide bekannt (WO-A-98/32746, WO-A-00/02867, WO-A-00/75119). Die Wirkung dieser Verbindungen ist bei alleiniger Anwendung dieser Verbindungen jedoch nicht unter allen Bedingungen ganz zufriedenstellend. So können sich gegenüber bestimmten Unkräutern Schwächen bei der Wirkung ergeben, weshalb es wünschenswert ist, solche Wirkungslücken durch die Verwendung eines oder mehrerer geeigneter Wirkstoffe zusammen mit den genannten Verbindungen zu schließen. Ebenso kann durch die Wahl eines geeigneten Mischpartners die herbizide Wirkung auf Grund eines Synergismus deutlich verbessert werden.

Überraschenderweise wurde nun gefunden, dass bestimmte Wirkstoffe aus der Reihe der substituierten Carbonsäureanilide bei gemeinsamer Anwendung mit bestimmten herbizid wirksamen Verbindungen synergistische Effekte hinsichtlich der Wirkung gegen Unkräuter zeigen und besonders vorteilhaft als wirksame Kombinationspräparate zur selelctiven Bekämpfung von monokotylen und dikotylen Unkräutern in Nutzpflanzenkulturen, wie z.B. in Baumwolle, Gerste, Kartoffeln, Mais, Raps, Reis, Roggen, Soja, Sonnenblumen, Weizen, Zuckerrohr und Zuckerrüben, aber auch zur Bekämpfung von monokotylen und dikotylen Unkräutern im semi- und nicht-selektiven Bereich verwendet werden können.

Gegenstand der Erfindung sind daher herbizide Mittel, gekennzeichnet durch einen wirksamen Gehalt an einer Wirkstoffkombination bestehend aus

(a) zumindest einem substituierten Carbonsäureanilid der allgemeinen Formel (I)

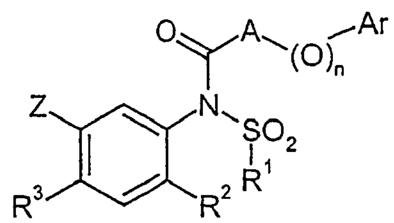

(I)

in welcher

n für die Zahlen 0 oder 1 steht,

A für Alkandiyl (Alkylen) oder Alkendiyl mit jeweils bis zu 6 Kohlenstoffatomen steht,

Ar für gegebenenfalls substituiertes Aryl mit 6 oder 10 Kohlenstoffatomen oder für gegebenenfalls substituiertes Heterocyclyl mit bis zu 9 Kohlenstoffatomen und 1 bis 4 Stickstoffatomen und/oder gegebenenfalls 1 oder 2 Sauerstoff- oder Schwefelatomen steht,
wobei die jeweils möglichen Substituenten aus folgender Aufzählung zu entnehmen sind:
Nitro, Cyano; Carboxy, Carbamoyl, Thiocarbamoyl, Halogen, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Halogenalkylthio, $C_1$-$C_4$-Alkylsulfinyl, $C_1$-$C_4$-Halogenalkylsulfinyl, $C_1$-$C_4$-Alkylsulfonyl, $C_1$-$C_4$-Halogenalkylsulfonyl, $C_1$-$C_4$-Alkylamino, Di-($C_1$-$C_4$-alkyl)-amino, $C_1$-$C_4$-Alkylcarbonyl, $C_1$-$C_4$-Alkoxycarbonyl, $C_1$-$C_4$-Alkylaminocarbonyl, Di-($C_1$-$C_4$-alkyl)-aminocarbonyl, Di-($C_1$-$C_4$-alkyl)-aminosulfonyl,

$R^1$ für gegebenenfalls durch Halogen substituiertes Alkyl mit 1 bis 6 Kohlenstoffatomen,
für gegebenenfalls durch Halogen substituiertes Alkenyl mit 2 bis 6 Kohlenstoffatomen,
für gegebenenfalls durch Halogen oder $C_1$-$C_4$-Alkyl substituiertes Cycloalkyl mit 3 bis 6 Kohlenstoffatomen,
für jeweils gegebenenfalls durch Nitro, Cyano, Halogen, $C_1$-$C_4$-Alkyl oder $C_1$-$C_4$-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil, oder

für gegebenenfalls durch Nitro, Cyano, Halogen, $C_1$-$C_4$-Alkyl oder $C_1$-$C_4$-Alkoxy substituiertes Heterocyclyl mit 5 Kohlenstoffatomen und 1 bis 4 Stickstoffatomen und/oder 1 oder 2 Sauerstoff- oder Schwefelatomen steht,

$R^2$ für Cyano, Carbamoyl, Thiocarbamoyl, Halogen, oder für jeweils gegebenenfalls durch Halogen substituiertes Alkyl oder Alkoxy mit jeweils 1 bis 4 Kohlenstoffatomen steht,

$R^3$ für Wasserstoff, Cyano, Carbamoyl, Thiocarbamoyl oder Halogen steht, und

Z für eine der nachstehend skizzierten Gruppierungen steht,

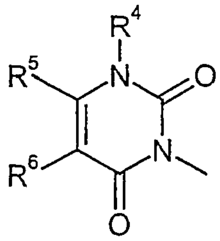

($Z^1$)

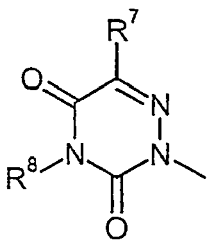

($Z^2$)

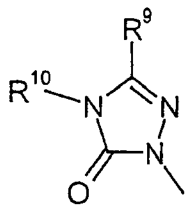

($Z^3$)

worin

$R^4$ für Wasserstoff, Amino oder gegebenenfalls durch Halogen substituiertes Allcyl mit 1 bis 4 Kohlenstoffatomen steht,

$R^5$ für Carboxy, Cyano, Carbamoyl, Thiocarbamoyl oder jeweils gegebenenfalls durch Halogen substituiertes Alkyl oder Alkoxycarbonyl mit jeweils 1 bis 4 Kohlenstoffatomen in den Alkylgruppen steht,

$R^6$ für Wasserstoff, Halogen oder gegebenenfalls durch Halogen substituiertes Alkyl mit 1 bis 4 Kohlenstoffatomen steht,

$R^7$ für Wasserstoff, Cyano, Halogen, oder für jeweils gegebenenfalls durch Cyano, Halogen oder $C_1$-$C_4$-Alkoxy substituiertes Alkyl, Alkoxy, Alkylthio, Alkylamino oder Dialkylamino mit jeweils 1 bis 4 Kohlenstoffatomen in den Alkylgruppen steht, und

$R^8$ für Wasserstoff oder für jeweils gegebenenfalls durch Cyano, Halogen oder $C_1$-$C_4$-Alkoxy substituiertes Alkyl, Alkoxy, Alkylamino, Alkylcarbonyl oder Alkoxycarbonyl mit jeweils 1 bis 4 Kohlenstoffatomen in den Alkylgruppen steht,

$R^9$ für Wasserstoff, Cyano, Halogen oder eine der Gruppierungen $-R^{11}$, $-O-R^{11}$, $S-R^{11}$, $SO-R^{11}$ oder $SO_2-R^{11}$ steht,

$R^{10}$ für Wasserstoff, Hydroxy, Amino, oder eine der Gruppierungen $-R^{11}$ oder $-O-R^{11}$ steht, und

$R^{11}$ für gegebenenfalls durch Cyano, Halogen oder $C_1$-$C_4$-Alkoxy substituiertes Alkyl mit 1 bis 6 Kohlenstoffatomen,
für jeweils gegebenenfalls durch Halogen substituiertes Alkenyl oder Alkinyl mit jeweils 2 bis 6 Kohlenstoffatomen,
für gegebenenfalls durch Cyano, Halogen oder $C_1$-$C_4$-Alkyl substituiertes Cycloalkyl mit 3 bis 6 Kohlenstoffatomen, oder
für jeweils gegebenenfalls durch Nitro, Cyano, Halogen, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl oder Benzyl steht,

("Wirkstoffe der Gruppe (1)")
und

(b) einer oder mehrerer Verbindung(en) aus einer zweiten Gruppe von Herbiziden, welche die nachstehend genannten Wirkstoffe enthält:
4,5-Dihydro-3-methoxy-4-methyl-5-oxo-N-[(2-triffuormethoxy-phenyl)-sulfonyl]-1-H-1,2,4-triazol-1-carboxamid-Natriumsalz (Flucarbazone-sodium), 2-Chlor-N-(ethoxymethyl)-N-(2-ethyl-6-methyl-phenyl)-acetamid (Acetochlor), 5-(2-Chlor-4-trifluormethyl-phenoxy)-2-nitro-benzoesäure (-Natriumsalz) (Acifluorfen (-sodium)), 2-Chlor-6-nitro-3-phenoxy-benzenamin (Aclonifen), 2-Chlor-N-(methoxymethyl)-N-(2,6-diethyl-phenyl)-acetamid (Alachlor), Methyl-4-hydroxy-6,6-dimethyl-2-oxo-3-[1-[(2-propenyloxy)-imino]-butyl]-3-cyclohexen-1-carboxylat (-Natriumsalz) (Alloxydim (-sodium)), N-Ethyl-N'-i-propyl-6-methylthio-l,3,5-triazin-2,4-diamm (Ametryn), 4-Amino-N-(1,1-Dimethylethyl)-4,5-dihydro-3-(1-methyl-ethyl)-5-oxo-1H-1,2,4-triazol-1-carboxamid (Amicarbazone), N-(4,6-Dimethoxy-pyrimidin-2-yl)-N'-(N-methyl-N-methylsulfonyl-sulfamoyl)-harnstoff (Amidosulfuron), 1H-1,2,4-Triazol-3-amin (Amitrole), S-[2-[(4-Chlor-phenyl)-(1-isopropyl)-amino]-2-oxo-ethyl]-O,O-dimethyl-phosphorodithioate (Anilofos), N-(4-Amino-phenyl-sulfonyl)-carbamidsäure-O-methylester (Asulam), 6-Chlor-4-ethylamino-2-isopropylamino-1,3,5-triazin (Atrazine), 2-[2,4-Dichlor-5-(2-propinyloxy)-phenyl]-5,6,7,8-tetra-hydro-1,2,4-triazolo-[4,3-a]-pyridin-3 (2H)-on (Azafenidin), N-(4,6-Dimethoxy-pyrimidin-2-yl)-N'-[1-methyl-4-(2-methyl-2H-tetrazol-5-yl)-1H-pyrazol-5-yl-sulfonyl]-harnstoff (Azimsulfuron), N-Benzyl-2-(4-fluor-3-trifluormethyl-phenoxy)-butanamid (Beflubutamid), 4-Chlor-2-oxo-3(2H)-benzthiazolessigsäure (-ethylester) (Benazolin, (-ethyl)), N-Butyl-N-ethyl-2,6-dinitro-4-trifluormethyl-benzenamin (Benfluralin), 2,3-Dihydro-3,3-dimethyl-5-benzofuranyl-ethansulfonat (Benfuresate), N-(4,6-Dimethoxy-pyrimidin-2-yl)-N'-(2-methoxycarbonyl-phenylmethylsulfonyl)-harnstoff (Bensulfuron-methyl), 3-i-Propyl-1H-2,1,3-benzothiadiazin-4(3H)-on-2,2-dioxid (Bentazone), S-[(4-Chlor-phenyl)-methyl]-diethylthiocarbamat (Benthiocarb, Thiobencarb), 2-[2-[4-(3,6-Dihydro-3-methyl-2,6-dioxo-4-trifluormethyl-1(2H)-pyrimidinylphenoxymethyl]-5-ethyl-phenoxy-propansäure-methylester (Benzfendizone), 3-(2-Chlor-4-methylsulfonyl-benzoyl)-4-phenylthio-bicyclo-[3.2.1]-oct-3-en-2-on (Benzobicyclon), 2-[[4-(2,4-Dichlor-3-methyl-benzoyl)-1,3-dimethyl-1H-pyrazol-5-yl]-oxy]-1-(4-methyl-phenyl)-ethanon (Benzofenap), Methyl-5-(2,4-dichlor-phenoxy)-2-nitro-benzoat (Bifenox), 2,6-Bis-(4,6-dimethoxy-pyrimidin-2-yl-oxy)-benzoesäure-Natriumsalz (Bispyribac-sodium), 5-Brom-6-methyl-3-(1-methyl-propyl)-2,4-(1H,3H)pyrimidindion (Bromacil), 2-Brom-3,3-dimethyl-N-(1-methyl-1-phenylethyl)-butanamid (Bromobutide), 3,5-Dibrom-4-hydroxy-benzaldehyd-O-(2,4-dinitro-phenyl)-oxim (Bromofenoxim), 3,5-Dibrom-4-hydroxy-benzonitril (Bromoxynil), N-Butoxymethyl-2-chlor-N-(2,6-diethyl-phenyl)-acetamid (Butachlor), 2-Chlor-5-(3,6-dihydro-3-methyl-2,6-dioxo-4-trifluormethyl-1 (2H)-pyrimidinyl)-benzoesäure-[1,1-dimethyl-2-oxo-2-(2-propenyloxy)]-ethylester (Butafenacil), 4-(1-t-Butyl)-N-(s-butyl)-2,6-dinitro-anilin (Butralin) 2-(1-Ethoximino-propyl)-3-hydroxy-5-[2,4,6-trimethyl-3-(1-oxo-butyl)-phenyl]-2-cyclohexen-1-on (Butroxydim), S-Ethyl-bis-(2-methyl-propyl)-thiocarbamat (Butylate), N,N-Diethyl-3-(2,4,6-trimethyl-phenylsulfonyl)-1H-1,2,4-triazol-1-carboxamid (Cafenstrole), (R)-N-Ethyl-2-[(phenylaminocarbonyl)-oxy]-propanamid (Carbetamide), 2-(4-Chlor-2-fluor-5-(2-chlor-2-ethoxycarbonyl-ethyl)-phenyl)-4-difluormethyl-5-methyl-2,4-dihydro-3H-1,2,4-triazol-3-on (Carfentrazone-ethyl), 2,4-Dichlor-1-(3-methoxy-4-nitro-phenoxy)-benzol (Chlomethoxyfen), 5-Amino-4-chlor-2-phenyl-3(2H)-pyriazinon (Chloridazon), N-(4-Chlor-6-methoxy-pyrimidin-2-yl)-N'-(2-etlioxycarbonyl-phenylsulfonyl)-harnstoff (Chlorimuron-ethyl), 1,3,5-Trichlor-2-(4-nitro-phenoxy)-benzol (Chlornitrofen), N'-(3-Chlor-4-methyl-phenyl)-N,N-dimethyl-harnstoff (Chlorotoluron), N-(4-Methoxy-6-methyl-1,3,5-triazin-2-yl)-N'-(2-chlor-phenylsulfonyl)-harnstoff (Chlorsulfuron), 2-Chlor-3-[2-chlor-5-(1,3,4,5,6,7-hexahydro-1,3-dioxo-2H-isoindol-2-yl)-phenyl]-2-propansäure-ethylester (Cinidon-ethyl), Exo-1-methyl-4-isopropyl-2-(2-methyl-phenyl-methoxy)-7-oxabicyclo-[2.2.1]-heptam (Cinmethylin), N-(4,6-Dimethoxy-1,3,5-triazin-2-yl)-N'-(2-(2-methoxy-ethoxy)-phenylsulfonyl)-harnstoff (Cinosulfuron), 2-[1-[2-(4-Chlor-phenoxy)-propoxyaminobutyl]-5-(tetrahydro-2H-thiopyran-3-yl)-1,3-cyclohexandion (Clefoxydim), (E,E)-(+)-2-[1-[[(3-Chlor-2-propenyl)-oxy]-imino]-propyl]-3-hydroxy-2-cyclohexen-1-on (Clethodim), (R)-(2-Propinyl)-2-[4-(5-chlor-3-fluor-pyridin-2-yl-oxy)-phenoxy-propanoat(Clodinafop-propargyl), 2-[(2-Chlor-phenyl)-methyl]-4,4,-dimethyl-3-isoxazolidinone (Clomazone), 2-(2,4-Dichlor-3-methyl-phenoxy)-N-phenyl-propanamid (Clomeprop), 3,6-Dichlor-pyridin-2-carbonsäure (Clopyralid), Methyl-3-chloro-2-[(5-ethoxy-7-fluor-[1,2,4]triazolo[1,5-c] pyrimidin-2-yl-sulfonyl)-amino]-benzoat (Cloransulam-methyl), N-[(2-Chlor-phenyl)-methyl]-N'-(1-methyl-1-phenylethyl)-harnstoff (Cumyluron), 2-Chlor-4-ethylamino-6-(1-cyano-1-methyl-ethylamino)-1,3,5-triazin (Cyanazine), N-(4,6-Dimethoxy-pyrimidin-2-yl)-N'-(2-cyclopropylcarbonyl-phenylsulfonyl)-harnstoff (Cyclosulfamuron), 2-(1-Ethoximinobutyl)-3-hydroxy-5-(tetrahydro-2H-thiopyran-3-yl)-2-cyclohexen-1-on (Cycloxydim), (R)-2-[4-(4-Cyano-2-fluor-phenoxy)-phenoxy]-propansäure-butylester (Cyhalofop-butyl), 2,4-Dichlor-phenoxyessigsäure (2,4-D), N-[3-(Phenylaminocarbonyloxy)-phenyl]-carbamidsäure-O-ethylester (Desmedipham), 3,6-Dichlor-2-methoxy-benzoesäure (Dicamba), 2,6-Dichlor-benzonitril (Dichlobenil), (R)-2-(2,4-Dichlor-phenoxy)-propansäure (Dichlorprop-P), Methyl-2-[4-(2,4-dichlor-phenoxy)-phenoxy]-propanoat (Diclofop-methyl), N-(2,6-Dichlorphenyl)-5-ethoxy-7-fluor-[1,2,4]-triazolo-[1,5-c]-pyrimidin-2-sulfonamid (Diclosulam), 1,2-Dünethyl-3,5-diphenyl-1H-pyrazolium-methylsulfat (Difenzoquat), N-(2,4-Difluor-phenyl)-2-(3-trifluormethyl-phenoxy)-pyridin-3-carboxamid (Diflufenican),

2-[1-[(3,5-Difluor-phenyl)-amino-carbonyl-hydrazono]-ethyl]-pyridin-3-carbonsäure (Diflufenzopyr), N'-[3-Chlor-4-(5-t-butyl-oxo-1,3,4-oxadiazol-3(2H)-yl)-phenyl]-N,N-dimethyl-harnstoff (Dimefuron), S-(1-Methyl-1-phenyl-ethyl)-1-piperidin-carbothioat (Dimepiperate), 2-Chlor-N-(2,6-dimethyl-phenyl)-N-(2-methoxy-ethyl)-acetamid (Dimethachlor), N-(1,2-Dimethyl-propyl)-N' -ethyl-6-methylthio-1,3,5-triazin-2,4-diamin (Dimethametryn), (S-) 2-Chlor-N-(2,4-dimethyl-3-thienyl)-N-(2-methoxy-1-methyl-ethyl)-acetamid (S-) (Dimethenamid), 2-Amino-4-(1-fluor-1-methyl-ethyl)-6-(1-methyl-2-(3,5-dimethyl-phenoxy)-ethylamino)-1,3,5-triazin (Dimexyflam), 6,7-Dihydro-dipyrido[1,2-a:2',1'-c]pyrazindiium dibromide (Diquat-dibromide), S,S-Dimethyl-2-difluormethyl-4-i-butyl-6-trifluormethyl-pyridin-3,5-dicarbothioat (Dithiopyr), N'-(3,4-Dichlor-phenyl)-N,N-dimethyl-hamstoff (Diuron), N-(4-Methyl-phenyl)-N'-(1-methyl-1-phenyl-ethyl)-harnstoff (Dymron, Daimuron), S-Ethyl-dipropylthiocarbamat (EPTC), S-(Phenylmetliyl)-N-ethyl-N-(1,2-dimethyl-propyl)-thiocarbamat (Esprocarb), N-Ethyl-N-(2-methyl-2-propenyl)-2,6-dinitro-4-trifluormethyl-benzenamin (Ethalfluralin), Methyl-2-[[[[(4-ethoxy-6-methylamino-1,3,5-triazin-2-yl)-amino]-carbonyl]-amino]-sulfonyl]-benzoate (Ethametsulfuron-methyl), 2-Ethoxy-2,3-dihydro-3,3-dimethyl-5-benzofuranyl-methansulfonat (Ethofumesate), (S)-(2-Ethoxy-1-methyl-2-oxoethyl)-2-chlor-5-(2-chlor-4-trifluormethyl-phenoxy)-benzoat (Ethoxyfen), N-(4,6-Dimethoxy-pyrimidin-2-yl)-N'-(2-ethoxy-phenoxysulfonyl)-harnstoff (Ethoxysulfuron), N-(2,3-Dichlor-phenyl)-4-ethoxymethoxy-benzamid (Etobenzanid), (R)-Ethyl-2-[4-(6-chlor-benzoxazol-2-yl-oxy)-phenoxy]-propanoat (Fenoxaprop-(P)-ethyl), 4-(2-Chlor-phenyl)-N-cyclohexyl-N-ethyl-4,5-dihydro-5-oxo-1H-tetrazol-1-carboxamid (Fentrazamide), Isopropyl-N-benzoyl-N-(3-chlor-4-fluor-phenyl)-D-alaninat (Flamprop-M-isopropyl), Methyl-N-benzoyl-N-(3-chlor-4-fluor-phenyl)-D-alaninat (Flamprop-M-methyl), N-[[(4,6-Dimethoxy-2-pyrimidinyl)-amino]-carbonyl]-3-trifluormethyl-2-pyridinsulfonamid (Flazasulfuron), N-(2,6-Difluor-phenyl)-8-fluor-5-methoxy-[1,2,4]-triazolo-[1,5-c]-pyrimidin-2-sulfonamid (Florasulam), (R)-2-[4-(5-Trifluormethyl-pyridin-2-yl-oxy)-phenoxy]-propansäure-butylester (Fluazifop-P-butyl), 5-(4-Brom-1-methyl-5-trifluormethyl-1H-pyrazol-3-yl)-2-chlor-4-fluor-benzoesäure-i-propylester (Fluazolate), N-(4-Fluor-phenyl)-N-i-propyl-2-(5-trifluormethyl-1,3,4-thiadiazol-2-yl-oxy)-acetamid (Flufenacet), Ethyl-[2-Chloro-4-fluoro-5-(5-methyl-6-oxo-4-trifluormethyl-1(6H)-pyridazinyl)-phenoxy]-acetate (Flufenpyr), N-(2,6-Difluor-phenyl)-5-methyl-1,2,4-triazolo[1,5-a]-pyrimidin-2-sulfonamid (Flumetsulam), Pentyl-[2-chlor-4-fluor-5-(1,3,4,5,6,7-hexahydro-1,3-dioxo-2H-isoindol-2-yl)-phenoxy]-acetat (Flumiclorac-pentyl), 2-[7-Fluor-3,4-dihydro-3-oxo-4-(2-propinyl)-2H-1,4-benzoxazin-6-yl]-4,5,6,7-tetrahydro-1H-isoindol-1,3-dion (Flumioxazin), 2-[4-Chlor-2-fluor-5-[(1-mefhyl-2-propinyl)-oxy]-phenyl]-4,5,6,7-tetrahydro-1H-isoindol-1,3 (2H)-dion , (Flumipropyn), N,N-Dimethyl-N'-(3-trifluormethyl-phenyl)-harnstoff (Fluometuron), 3-Chlor-4-chlormethyl-1-(3-trifluormethyl-phenyl)-2-pyrrolidinon (Fluorochloridone), 5-(2-Chlor-4-trifluormethyl-phenoxy)-2-nitro-benzoesäure-ethoxy-carbonylmethylester (Fluoroglycofen-ethyl), 1-(4-Chlor-3-(2,2,3,3,3-pentafluor-propoxymethyl)-phenyl)-5-phenyl-1H-1,2,4-triazol-3-carboxamid (Flupoxam), 1-Isopropyl-2-chlor-5-(3,6-dihydro-3-methyl-2,6-dioxo-4-trifluormethyl-1 (2H)-pyrimidyl)-benzoat (Flupropacil), N-(4,6-Dimethoxy-pyrimidin-2-yl)-N'-(3-methoxycarbonyl-6-trifluormethyl-pyridin-2-yl-sulfonyl)-hamstoff-Natriumsalz (Flupyrsulf uron-methyl-sodium), 9-Hydroxy-9H-fluoren-9-carbonsäure (Flurenol), (4-Amino-3,5-dichlor-6-fluor-pyridin-2-yl-oxy)-essigsäure (-2-butoxy-1-methyl-ethylester, -1-methyl-heptylester) (Fluroxypyr, -butoxypropyl, -meptyl), 5-Methylamino-2-phenyl-4-(3-trifluormethyl-phenyl)-3(2H)-furanon (Flurtamone), Methyl-[(2-chlor-4-fluor-5-(tetrahydro-3-oxo-1H,3H-[1,3,4]-thiadiazolo-[3,4-a]-pyridazin-1-yliden)-aminophenyl]-thio-acetat (Fluthiacet-methyl), 5-(2-Chlor-4-trifluormethyl-phenoxy)-N-methylsulfonyl-2-nitro-benzamid (Fomesafen), 2-[[[[(4,6-Dimethoxy-2-pyrimidinyl)-amino]-carbonyl]-amino]-sulfonyl]-4-formylamino-N,N-dimethyl-benzamid (Foramsulfuron), 2-Amino-4-(hydroxymethylphosphinyl)-butansäure (-ammoniumsalz) (Glufosinate (-ammonium)), N-Phosphonomethyl-glycin (-isopropylammmoniumsalz), (Glyphosate, -isopropylammonium), Methyl-3-chloro-5-[[[[(4,6-dimethoxy-2-pyrimidinyl)-amino]-carbonyl]-amino]-sulfonyl]-1-methyl-1H-pyrazol-4-carboxylate (Halosulfuron-methyl), (R)-2-[4-(3-Chlor-5-trifluormethyl-pyridin-2-yl-oxy)-phenoxy]-propansäure (-methylester, -2-ethoxy-ethylester, -buiylester) (Haloxyfop, - methyl, -P-methyl, -ethoxyethyl, -butyl), 3-Cyclohexyl-6-dimethylamino-1-methyl-1,3,5-triazin-2,4(1H,3H)-dion (Hexazinone), Methyl-2-(4,5-dihydro-4-methyl-4-isopropyl-5-oxo-1H-imidazol-2-yl)-4-methyl-benzoat (Imazamethabenz-methyl), 2-(4,5-Dihydro-4-methyl-4-isopropyl-5-oxo-1H-imidazol-2-yl)-5-methoxymethyl-pyridin-3-carbonsäure (Imazamox), 2-(4,5-Dihydro-4-methyl-4-isopropyl-5-oxo-1H-imidazol-2-yl)-5-methyl-pyridin-3-carbonsäure (Imazapic), 2-(4,5-Dihydro-4-methyl-4-(i-propyl)-5-oxo-1H-imidazol-2-yl)-3-pyridincarbonsäure (Imazapyr), 2-(4,5-Dihydro-4-methyl-4-isopropyl-5-oxo-1H-imidazol-2-yl)-chinolin-3-carbonsäure (Imazaquin), 2-(4,5-Dihydro-4-methyl-4-i-propyl-5-oxo-1H-imidazol-2-yl)-5-ethyl-pyridin-3-carbonsäure(Imazethapyr),N-(4,6-Dimethoxy-pyrimidin-2-yl)-N'-(2-chlor-imidazo[1,2-a]-pyridin-3-yl-sulfonyl)-harnstoff (Irnazosulfuron), 2-[2-(3-Chlor-phenyl)-oxiranylmethyl]-2-ethyl-1H-inden-1,3(2H)-dion (Indanofan), N-(4-Methoxy-6-methyl-1,3,5-triazin-2-yl)-N'-(5-iod-2-methoxycarbonyl-phenylsulfonyl)-harnstoff-Natriumsalz (Iodosulfuron-methyl-sodium), 4-Hydroxy-3,5-diiod-benzonitril (Ioxynil), N,N-Dimethyl-N'-(4-isopropyl-phenyl)-harnstoff (Isoproturon), N-(5-t-Butyl-3-isoxazolyl)-N',N'-dimethylharnstoff (Isouron), N-(3-(1-Ethyl-1-methyl-propyl)-isoxazol-5-yl)-2,6-dimethoxy-benzamid (Isoxaben), (4-Chlor-2-methylsulfonyl-phenyl)-(5-cyclopropyl-isoxazol-4-yl)-methanon (Isoxachlortole), (5-Cyclopropyl-isöxazol-4-yl)-(2-methylsulfonyl-4-trifluormethyl-phenyl)-methanon (Isoxaflutole), 2-[(2,3-Dihydro-5,8-dimethyl-1,1,-dioxidospiro[4H-1-benzothio-pyran-4,2'-[1,3]-dioxolan-6-yl)-carbonyl]-1,3-cyclohexan-dion (Ketospiradox), (2-Ethoxy-1-methyl-2-oxo-ethyl)-5-(2-chlor-4-trifluormethyl-phenoxy)-2-nitro-benzoat (Lactofen), 3-Cyclohexyl-6,7-dihydro-1H-cyclopentapyrimidin-2,4-(3H,5H)-dion (Lenacil), N'-(3,4-dichlor-phenyl)-N-methoxy-N-methyl-harnstoff (Linuron), (4-Chlor-2-methyl-phenoxy)-essigsäure (MCPA), (R)-2-(4-Chlor-2-methyl-phenoxy)-propionsäure (Mecoprop-P), 2-(2-Benzthiazolyloxy)-N-methyl-N-phenyl-acetamid (Mefenacet), 2-[[[[(4,6-Dimethoxy-2-pyrimidinyl)-amino]-carbonyl]-amino]-sulfonyl]-4-[[(methylsulfonyl)-amino]methyl]-benzoesäure-methylester (Mesosulfuron), 2-(4-Methylsulfonyl-2-nitro-benzoyl)-1,3-cyclohexandion (Mesotrione), 4-Amino-3-methyl-6-phenyl-1,2,4-triazin-5(4H)-on (Metamitron), 2-Chlor-N-(2,6-dimethylphenyl)-N-(1H-pyrazol-1-yl-methyl)-acetamid (Metazachlor), N-(2-Benzthiazolyl)-N,N'-dimethyl-harnstoff (Methabenzthiazuron), N'-(4-Brom-phenyl)-N-methoxy-N-methylharnstoff (Metobromuron), (S)-2-Chlor-N-(2-ethyl-6-methyl-phenyl)-N-(2-methoxy-1-methyl-ethyl)-acet-amid (Metolachlor, S-Metolachlor), N-(2,6-Dichlor-3-methyl-phenyl)-5,7-dimethoxy-1,2,4-triazolo[1,5-a]-pyrimidin-2-sulfonamid (Metosulam), N'-(3-Chlor-4-methoxy-phenyl)-N,N-dimethyl-harnstoff (Metoxuron), 4-Amino-6-tert-butyl-3-methylthio-1,2,4-triazin-5(4H)-on (Metribuzin), N-(4-Methoxy-6-methyl-1,3,5-triazin-2-yl)-N'-(2-methoxycarbonyl-phenylsulibnyl)-hamstoff (Metsulfuron-methyl), S-Ethyl-hexahydro-1H-azepin-1-carbothioat (Molinate), 2-(2-Naphthyloxy)-N-phenyl-propanamid (Naproanilide), N,N-Diethyl-2-(1-naphthalenyloxy)-propanamide (Napropamide), N-Butyl-N'-(3,4-dichlor-phenyl)-N-methyl-hamstoff (Neburon), N-(4,6-Dimethoxy-pyrimidin-2-yl)-N'-(3-dimethylcarbamoyl-pyridin-2-yl-sulfonyl)-harnstoff (Nicosulfuron), 4-Chlor-5-methylamino-2-(3-trifluormethyl-phenyl)-3(2H)pyridazinon (Norflurazon), S-(2-Chlor-benzyl)-N,N-diethyl-thiocarbamat (Orbencarb), 4-Dipropylamino-3,5-dinitro-benzensulfonamid (Oryzalin), 3-[2,4-Dichlor-5-(2-propinyloxy)-phenyl]-5-(t-butyl)-1,3,4-oxadiazol-2(3H)-on (Oxadiargyl), 3-[2,4-Dichlor-5-(1-methyl-ethoxy)-phenyl]-5-(t-butyl)-1,3,4-oxadiazol-2(3H)-on (Oxadiazon), N-(4,6-Dimethyl-pyrimidin-2-yl)-N'-(2-oxetan-3-yl-oxycarbonyl-phenylsulfonyl)-harnstoff (Oxasulfuron), 3-[1-(3,5-Dichlor-phenyl)-1-i-propyl]-2,3-dihydro-6-methyl-5-phenyl-4H-1,3-oxazin-4-on (Oxaziclomefone), 2-Chlor-1-(3-ethoxy-4-nitro-phenoxy)-4-trifluormethyl-benzen (Oxyfluorfen), 1,1'-Dimethyl-4,4'-bipyridinium (Paraquat), 1-Amino-N-(1-ethyl-propyl)-3,4-dimethyl-2,6-dinitro-benzol (Pendimethalin), 4-(t-Butyl)-N-(1-ethyl-propyl)-2,6-dinitro-benzenamin (Pendralin), 2-(2,2-Difluorethoxy)-N-(5,8-dimethoxy[1,2,4] triazolo[1,5-c]pyrimidin-2-yl)-6-trifluormethyl-benzensulfonamid (Penoxsulam), 3-(4-Chlor-5-cyclo-pentyloxy-2-fluor-phenyl)-5-(1-methyl-ethyliden)-2,4-oxazolidin-dion (Pentoxazone), 2-Chlor-N-(2-ethoxy-ethyl)-N-(2-methyl-1-phenyl-1-propenyl)-acetamid (Pethoxamid), N-[3-(3-Methyl-phenylaminocarbonyloxy)-phenyl]-carbamidsäure-O-methylester (Phenmedipham), 4-Amino-3,5,6-trichlor-pyridin-2-carbonsäure (Picloram), N-(4-Fluor-phenyl)-6-(3-trifluormethyl-phenoxy)-pyridin-2-carboxamid (Picolinafen), S-[2-(2-Methyl-1-piperidinyl)-2-oxo-ethyl]-O,O-dipropyl-phosphorodithioat (Piperophos), 2-Chlor-N-(2,6-diethyl-phenyl)-N-(2-propoxy-ethyl)-acetamid (Pretilachlor), N-(4,6-Bis-difluormethoxy-pyrimidin-2-yl)-N'-(2-methoxycarbonyl-phenylsulfonyl)-harnstoff (Primisulfuron-methyl), 1-Chlor-N-[2-chlor-4-fluor-5-[(6S,7aR)-6-fluor-tetrahydro-1,3-dioxo-1H-pyrrolo[1,2-c]imidazol-2(3H)-yl]-phenyl]-methan-sulfonamid (Profluazol), 2-[1-[[2-(4-Chlor-phenoxy)-propoxy]-imino]-butyl]-3-hydroxy-5-(tetrahydro-2H-thiopyranyl)-2-cyclohexen-1-on (Profoxydim), N,N'-Bis-i-propyl-6-methylthio-1,3,5-triazin-2,4-diamin (Prometryn), 2-Chlor-N-isopropyl-N-phenyl-acetamid (Propachlor), N-(3,4-Dichlor-phenyl)-propanamid (Propanil), (R)-[2-[[(1-Methyl-ethyliden)-amino]-oxy]-ethyl]-2-[4-(6-chlor-2-chinoxalinyloxy)-phenoxy]-propanoat (Propaquizafop), 2-Chlor-N-(2-ethyl-6-methyl-phenyl)-N-[(1-methyl-ethoxy)-methyl]-acetamid (Propisochlor), 2-[[[(4,5-Dihydro-4-methyl-5-oxo-3-propoxy-1H-1,2,4-triazol-1-yl)-carbonyl]-amino]-sulfonyl]-benzoesäure-methylester-Natriumsalz (Propoxycarbazone-sodium), 3,5-Dichlor-N-(1,1-dimethyl-2-propinyl)-benzamid (Propyzamide), S-Phenylmethyl-N,N-dipropyl-thiocarbamat (Prosulfocarb), N-(4-Methoxy-6-methyl-1,3,5-triazin-2-yl)-N'-(2-(3,3,3-trifluor-propyl)-phenylsulfonyl)-harnstoff (Prosulfuron), 1-(3-Chlor-4,5,6,7-tetrahydropyrazolo[1,5-a]pyridin-2-yl)-5-(methyl-2-propinylamino)-1H-pyrazol-4-carbonitril (Pyraclonil), Ethyl-[2-chlor-5-(4-chlor-5-difluormethoxy-1-methyl-1H-pyrazol-3-yl)-4-fluorphenoxy]-acetat (Pyraflufen-ethyl), 4-(2,4-Dichlor-benzoyl)-1,3-dimethyl-5-(4-methyl-phenylsulfonyloxy)-pyrazol (Pyrazolate), N-(4,6-Dimethoxy-pyrimidin-2-yl)-N'-(4-ethoxycarbonyl-1-methyl-pyrazol-5-yl-sulfonyl)-harnstoff (Pyrazosulfuron-ethyl), 4-(2,4-Dichlor-benzoyl)-1,3-dimethyl-5-(phenylcarbonylmethoxy)-pyrazol (Pyrazoxyfen), Diphenylmethanon-O-[2,6-bis-(4,6-dimethoxy-pyrimidin-2-yl-oxy)-benzoyl]-oxim (Pyribenzoxim), O[3-(1,1-Dimethyl-ethyl)-phenyl]-(6-methoxy-2-pyridinyl)-methylthiocarbamat (Pyributicarb), 6-Chlor-3-phenyl-4-pyridazinol (Pyridafol), O-(6-Chlor-3-phenyl-pyridazin-4-yl)-S-octyl-thiocarbonat (Pyridate), 6-Chlor-3-phenyl-pyridazin-4-ol (Pyridatol), 7-[(4,6-Dimethoxy-2-pyrimidinyl)-thio]-3-methyl-1(3H)-isobenzofuranon (Pyriftalid), 2-(4,6-Dimethoxy-pyrimidin-2-yl-oxy)-benzoesäure-methylester (Pyriminobac-methyl), 2-Chlor-6-(4,6-dimethoxy-pyrimidin-2-ylthio)-benzoesäure-Natriumsalz (Pyrithiobac-sodium), 3,7-Dichlor-chinolin-8-carbonsäure (Quinchlorac), 7-Chlor-3-methyl-chinolin-8-carbonsäure (Quinmerac), 2-Amino-3-chlor-1,4-naphthalindion (Quinoclamine), (R)-2-[4-(6-Chlor-2-chinoxalinyloxy)-phenoxy]-propansäure (-ethylester, -tetrahydro-2-furanyl-methylester) (Quizalofop, -ethyl, -P-ethyl, -P-tefuryl), N-(4,6-Dimethoxy-pyrimidin-2-yl)-N'-(3-ethylsulfonyl-pyridin-2-yl-sulfonyl)-harnstoff (Rimsulfuron), 2-(1-Ethox-iminobutyl)-5-(2-ethylthiopropyl)-3-hydroxy-2-cyclohexen-1-on (Sethoxydim), 6-Chlor-2,4-bis-ethylamino-1,3,5-triazin (Simazine), 2-(2-Chlor-4-methylsulfonyl-benzoyl)-cyclohexan-1,3-dion (Sulcotrione), 2-(2,4-Dichlor-5-methylsulfonylaminophenyl)-4-difluormethyl-5-methyl-2,4-dihydro-3H-1,2,4-triazol-3-on (Sulfentrazone), Methyl 2-[[[[(4,6-dimethyl-2-pyrimidinyl)-amino]-carbonyl]-amino]-sulfonyl]-benzoate (Sulfometuron-methyl), N-Phosphonomethyl-glycin-trimethylsulfonium (Sulfosate), N-(4,6-Dimethoxy-pyrimidin-2-yl)-N'-(2-ethylsulfonyl-imidazo[1,2-a]pyridin-3-sulfonamid (Sulfosulfuron), N-(5-t-Butyl-1,3,4-thiadiazol-2-yl)-N,N'-dimethyl-hamstoff (Tebuthiuron), 2-[1-[(3-Chlor-2-propenyl)-oxy-imino]-propyl]-3-hydroxy-5-(tetrahydro-2H-pyran-4-yl)-2-cyclohexen-1-on (Tepraloxydim), 6-Chlor-4-ethylamino-2-t-butylamino-1,3,5-triazin (Terbuthylazine), 2-t-Butylamino-4-ethylamino-6-methylthio-1,3,5-triazin (Terbutryn), 2-Chlor-N-(2,6-dimethyl-phenyl)-N-(3-methoxy-2-thienyl-methyl)-acetamid (Thenylchlor), 2-Difluormethyl-5-(4,5-dihydro-thiazol-2-yl)-4-(2-methyl-propyl)-6-trifluormethyl-pyridin-3-carbonsäure-methylester(Thiazopyr),N-(4-Meihoxy-6-methyl-1,3,5-triazin-2-yl)-N'-(2-methoxycarbonyl-thien-3-yl-sulfonyl)-harnstoff (Thifensulfuron-methyl), S-Phenylmethyl-bis-s-butyl-carbamothioate (Tiocarbazil), 2-(Ethoximino-propyl)-3-hydroxy-5-(2,4,6-trimethyl-phenyl)-2-cyclohexen-1-on (Tralkoxydim), S-(2,3,3-Trichlor-2-propenyl)-diisopropylcarbamothioat (Triallate), N-(4-Methoxy-6-methyl-1,3,5-triazin-2-yl)-N'-[2-(2-chlor-ethoxy)-phenylsulfonyl]-hamstoff (Triasulfuron), N-Methyl-N-(4-methoxy-6-methyl-1,3,5-triazin-2-yl)-N'-(2-methoxycarbonylphenylsulfonyl)-harnstoff (Tribenuron-methyl), (3,5,6-Trichlor)-pyridin-2-yl-oxy-essigsäure (Triclopyr), 2-(3,5-Dichlor-phenyl)-2-(2,2,2-trichlor-ethyl)-oxiran (Tridiphane), N-[[(4,6-Dimethoxy-2-pyrimidinyl)-amino]-carbonyl]-3-(2,2,2-trifluor-ethoxy)-2-pyridinsulfonamid-Natriumsalz (Trifloxysulfuron), 1-Amino-2,6-dinitro-N,N-dipropyl-4-trifluormethyl-benzol (Trifluralin), N-[4-Dimethylamino-6-(2,2,2-trifluorethoxy)-1,3,5-triazin-2-yl]-N'-(2-methoxycarbonyl-phenylsulfonyl)-harnstoff (Triflusulfuron-methyl), N-(4-Methoxy-6-trifluormethoxy-1,3,5-triazin-2-yl)-N'-(2-trifluormethyl-phenylsulfonyl)-harnstoff (Tritosulfuron), N-[[(4,6-Dimethoxy-2-pyrimidinyl)-amino]-carbonyl]-3-(N-methyl-N-methylsulfonyl-amino])-2-pyridinsulfonamid, (vgl. WO-A-92/10660), N-[[(4,6-Dimethoxy-2-pyrimidinyl)-amino]-carbonyl]-3-(N-methyl-N-methylsulfonyl-amino)-2-pyridinsulfonamid, (vgl. WO-A-92/10660), 4-(4,5-Dihydro-4-methyl-5-oxo-3-trifluonnethyl-1H-1,2,4-triaz ol-1-yl)-2-(ethylsulfonylamino)-5-fluor-benzolcarbothioamid (HWH4991, vgl. WO-A-95/30661), 2-Chlor-N-[1-(2, 6-dichlor-4-difluormethyl-phenyl)-4-nitro-1H-pyrazol-5-yl]-propan-carbonsäureamid (SLA5599, vgl. EP-A-303153), [2-Chlor-3-(4,5-dihydro-3-isoxazolyl)-4-methylsulfonyl-phenyl]-(5-hydrox-1-methyl-1H-pyrazo l-4-yl)-methanon (vgl.WO-A-96/26206, WO-A-98/31681), [3-(4,5-Dihydro-3-isoxazolyl)-2-methyl-4-methylsulfonyl-phenyl]-(5-hydrox-1-methyl-1H-pyrazol-4-yl)-methanon (vgl.WO-A-96/26206, WO-A-98/31681), [3-[2-Chlor-3[(2,6-dioxo-cyclohexyl)-carbonyl]-6-ethylsulfonyl-phenyl]-5-isoxazolyl]-acetonitril (vgl. WO-A-01/28341), 2-[2-Chlor-4-methylsulfonyl-3-[(2,2,2-trifluor-ethoxy)-methyl]-benzoyl]-1,3-cyclohexandion (vgl. WO-A-01/28341), 2-[[5,8-Dimethyl-1,1-dioxido-4-(2-pyrimidinyloxy)-3,4-dihydro-2H-thiochromen-6-yl]-carbonyl]-1,3-cyclohexandion (vgl. WO-A-01/28341)
("Wirkstoffe der Gruppe (2)"),
und/oder

(c) gegebenenfalls einer die Kulturpflanzen-Verträglichkeit verbessernden Verbindung aus der folgenden Gruppe von Verbindungen:
4-Dichloracetyl-1-oxa-4-aza-spiro[4.5]-decan(AD-67), 1-Dichloracetyl-hexahydro-3,3,8a-trimethylpyrrolo[1,2-a]-pyrimidin-6(2H)-on (BAS-145138), 4-Dichloracetyl-3,4-dihydro-3-methyl-2H-1,4-benzoxazin (Benoxacor), 4-Carboxy-3,4-dihydro-2H-1-benzopyran-4-essigsäure (CL-304415), 5-Chlor-chinolin-8-oxy-essigsäure-(1-methyl-hexylester) (Cloquintocet-mexyl), α-(Cyanomethoximino)-phenylacetonitril (Cyometrinil), 2,4-Dichlor-phenoxy-essigsäure (2,4-D), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methyl-phenyl)-N'-(1-methyl-1-phenylethyl)-harnstoff (Daimuron, Dymron), 4,6-Dichlor-2-phenyl-pyrimidin (Fenclorim), 1-(2,4-Dichlor-phenyl)-5-trichlonnethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), (4-Chlor-2-methyl-phenoxy)-essigsäure (MCPA), (+-)-2-(4-Chlor-2-methyl-phenoxy)-propansäure (Mecoprop), Diethyl-1-(2,4-dichlorphenyl)-4,5-dihydro-5-methyl-1H-pyrazol-3,5-dicarboxylat (Mefenpyr-diethyl) 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2,5-trimethyl-oxazolidin (R-29148), N-Cyclopropyl-4-[[(2-methoxy-5-methyl-benzoyl)-amino]-sulfonyl]-benzamid, N-[[(4-Methoxyacetylamino)-phenyl]-sulfonyl-2-methoxy-benzamid und N-[[(4-Methylaminocarbonylamino)-phenyl]-sulfonyl-2-methoxy-benzamid (letztere jeweils bekannt aus WO-A-99/66795), (3-Oxo-isochroman-4-yliden-methoxy)-essigsäure-methylester und (3-Oxo-1H-2-benzothiopyran-4-(3H)-yliden-methoxy)-essigsäure-methylester (letztere jeweils bekannt aus WO-A-98/13361), 1-Ethyl-4-hydroxy-3(1H-tetrazolyl-5-yl-carbonyl)-2(1H)-chinolin (bekannt aus WO-A-99/00020)
("Wirkstoffe der Gruppe (3)").

Die Erfindung betrifft also herbizide Wirkstoffkombinationen, welche
entweder aus Wirkstoffen der Gruppen (1) und (2),
oder aus Wirkstoffen der Gruppen (1) und (3),
oder aus Wirkstoffen der Gruppen (1) und (2) und (3)

zusammengesetzt sind.

Bevorzugte Bedeutungen der oben in Zusammenhang mit der Formel (I) aufgeführten Gruppen werden im Folgenden definiert.

n steht bevorzugt für die Zahl 0.

A steht bevorzugt für Alkandiyl (Alkylen) mit 1 bis 5 Kohlenstoffatomen oder Alkendiyl mit 2 bis 5 Kohlenstoffatomen.

Ar steht bevorzugt für jeweils gegebenenfalls substituiertes Phenyl oder Naphthyl, oder für jeweils gegebenenfalls substituiertes Heterocyclyl aus der Reihe Furyl, Tetrahydrofuryl, Thienyl, Tetrahydrothienyl, Benzofuryl, Dihydrobenzofuryl, Benzothienyl, Pyrrolyl, Pyrazolyl, Pyranyl, Benzopyranyl, Dihydrobenzopyranyl, Tetrahydrobenzopyranyl, Pyridinyl, Chinolinyl oder Pyrimidinyl,
wobei die jeweils möglichen Substituenten vorzugsweise aus folgender Aufzählung zu entnehmen sind:

Nitro, Cyano, Carboxy, Carbamoyl, Thiocarbamoyl, Fluor, Chlor, Brom, Methyl, Ethyl, n- oder i-Propyl, n-; i-, s- oder t-Butyl, Trifluormethyl, Methoxy, Ethoxy, n- oder i-Propoxy, n-, i-, s- oder t-Butoxy, Difluormethoxy, Trifluormethoxy, Methylthio, Ethylthio, n- oder i-Propylthio, n-, i-, s- oder t-Butylthio, Difluormethylthio, Trifluormetlrylthio, Methylsulfmyl, Ethylsulfinyl, n- oder i-Propylsulfinyl, Trifluormethylsulfinyl, Methylsulfonyl, Ethylsulfonyl, n- oder 1-Propylsulfonyl, Trifluormethylsulfonyl, Methylamino, Ethylamino, n- oder i-Propylamino, n-, i-, s- oder t-Butylamino, Dimethylamino, Diethyl-amino, Acetyl, Propionyl, n- oder i-Butyroyl, Methoxycarbonyl, Ethoxycarbonyl, n- oder i-Propoxycarbonyl, Methylaminocarbonyl, Ethylaminocarbonyl, n- oder i-Propylaminocarbonyl, Dimethylaminocarbonyl, Diethylaminocarbonyl, Dimethylaminosulfonyl, Diethylaminosulfonyl.

$R^1$ steht bevorzugt für gegebenenfalls durch Fluor, Chlor und/oder Brom substituiertes Alkyl mit 1 bis 5 Kohlenstoffatomen,
für gegebenenfalls durch Fluor, Chlor und/oder Brom substituiertes Alkenyl mit 2 bis 5 Kohlenstoffatomen,
für gegebenenfalls durch Fluor, Chlor und/oder Brom oder $C_1$-$C_4$-Alkyl substituiertes Cycloalkyl mit 3 bis 6 Kohlenstoffatomen,
für jeweils gegebenenfalls durch Nitro, Cyano, Fluor, Chlor und/oder Brom, Methyl, Ethyl, n- oder i-Propyl, n-, i-, s- oder t-Butyl, Methoxy, Ethoxy, n- oder i-Propoxy, n-, i-, s- oder t-Butoxy substituiertes Aryl oder Arylalkyl mit jeweils 6 oder 10 Kohlenstoffatomen in der Arylgruppe und gegebenenfalls 1 bis 3 Kohlenstoffatomen im Alkylteil, oder
für gegebenenfalls durch Nitro, Cyano, Fluor, Chlor und/oder Brom, Methyl, Ethyl, n- oder i-Propyl, n-, i-, s- oder t-Butyl, Methoxy, Ethoxy, n- oder i-Propoxy, n-, i-, s- oder t-Butoxy substituiertes Heterocyclyl mit 5 Kohlenstoffatomen und 1 bis 3 Stickstoffatomen und/oder 1 oder 2 Sauerstoff- oder Schwefelatomen.

$R^2$ steht bevorzugt für Cyano, Carbamoyl, Thiocarbamoyl, Fluor, Chlor, Brom, oder für jeweils gegebenenfalls durch Fluor, Chlor und/oder Brom substituiertes Methyl, Ethyl, n- oder i-Propyl, Methoxy, Ethoxy oder n- oder i-Propoxy.

$R^3$ steht bevorzugt für Wasserstoff, Cyano, Carbamoyl, Thiocarbamoyl, Fluor, Chlor oder Brom.

$R^4$ steht bevorzugt für Wasserstoff, Amino oder gegebenenfalls durch Fluor, Chlor und/oder Brom substituiertes Methyl, Ethyl oder n- oder i-Propyl.

$R^5$ steht bevorzugt für Carboxy, Cyano, Carbamoyl, Thiocarbamoyl oder jeweils gegebenenfalls durch Fluor, Chlor und/oder Brom substituiertes Methyl, Ethyl, n- oder i-Propyl, Methoxycarbonyl, Ethoxycarbonyl oder n- oder i-Propoxycarbonyl.

$R^6$ steht bevorzugt für Wasserstoff, Fluor, Chlor, Brom oder jeweils gegebenenfalls durch Fluor, Chlor und/oder Brom substituiertes Methyl, Ethyl oder n- oder i-Propyl.

$R^7$ steht bevorzugt für Wasserstoff, Cyano, Fluor, Chlor, Brom oder jeweils gegebenenfalls durch Cyano, Fluor, Chlor, Brom, Methoxy, Ethoxy, n- oder i-Propoxy, n-, i-, s- oder t-Butoxy substituiertes Alkyl, Alkoxy, Alkylthio, Alkylamino oder Dialkylamino mit jeweils 1 bis 3 Kohlenstoffatomen in den Alkylgruppen.

$R^8$ steht bevorzugt für Wasserstoff oder jeweils gegebenenfalls durch Cyano, Fluor, Chlor, Brom oder Methoxy, Ethoxy, n- oder i-Propoxy, n-, i-, s- oder t-Butoxy substituiertes Alkyl, Alkoxy, Alkylamino, Alkylcarbonyl oder Alkoxycarbonyl mit jeweils 1 bis 3 Kohlenstoffatomen in den Alkylgruppen.

$R^9$ steht bevorzugt für Wasserstoff, Cyano, Fluor, Chlor, Brom oder eine der Gruppierungen $-R^{11}$, $-O-R^{11}$, $S-R^{11}$ oder $SO_2-R^{11}$.

$R^{10}$ steht bevorzugt für Wasserstoff, Hydroxy, Amino oder die Gruppierung $-R^{11}$.

$R^{11}$ steht bevorzugt für gegebenenfalls durch Cyano, Fluor, Chlor, Brom, Methoxy, Ethoxy, n- oder i-Propoxy, n-, i-, s- oder t-Butoxy substituiertes Alkyl mit 1 bis 4 Kohlenstoffatomen,
für jeweils gegebenenfalls durch Halogen substituiertes Alkenyl oder Alkinyl mit jeweils 2 bis 4 Kohlenstoffatomen,
für gegebenenfalls durch Cyano, Fluor, Chlor, Brom, Ethyl, Methyl, n- oder i-Propyl oder n-, i-, s- oder t-Butyl substituiertes Cycloalkyl mit 3 bis 6 Kohlenstoffatomen, oder
für jeweils gegebenenfalls durch Nitro, Cyano, Fluor, Chlor, Brom, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl oder Benzyl.

A steht besonders bevorzugt für Methylen, Ethan-1,1-diyl (Ethyliden), Ethan-1,2-diyl (Dimethylen), Propan-1,1-diyl (Propyliden), Propan-1,2-diyl, Propan-1,3-diyl (Trimethylen), Ethen-1,2-diyl, Propen-1,2-diyl oder Propen-2,3-diyl.

Ar steht besonders bevorzugt für gegebenenfalls substituiertes Phenyl, oder für gegebenenfalls substituiertes Heterocyclyl aus der Reihe Furyl, Tetrahydrofuryl, Thienyl, Benzofuryl, Dihydrobenzofuryl, Benzothienyl, Pyrrolyl, Pyrazolyl, Benzopyranyl, Dihydrobenzopyranyl, Tetrahydrobenzopyranyl, Pyridinyl oder Pyrimidinyl,
wobei die jeweils möglichen Substituenten vorzugsweise aus folgender Aufzählung zu entnehmen sind:

Nitro, Cyano, Carboxy, Carbamoyl, Thiocarbamoyl, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy, Trifluormethoxy, Methylthio, Ethylthio, n- oder i-Propylthio, Difluormethylthio, Trifluormethylthio, Methylsulfinyl, Ethylsulfinyl, Trifluormethylsulfinyl, Methylsulfonyl, Ethylsulfonyl, Trifluormethylsulfonyl, Methylamino, Ethylamino, n- oder i-Propylamino, Dimethylamino, Diethyl-amino, Acetyl, Propionyl, n- oder i-Butyroyl,

Methoxycarbonyl, Ethoxycarbonyl, n- oder i-Propoxycarbonyl, Methylaminocarbonyl, Ethylaminocarbonyl, n- oder i-Propylaminocarbonyl, Dimethylaminocarbonyl, Diethylaminocarbonyl, Dimethylaminosulfonyl, Diethylaminosulfonyl.

$R^1$ steht besonders bevorzugt für jeweils gegebenenfalls durch Fluor, Chlor und/oder Brom substituiertes Methyl, Ethyl, n- oder i-Propyl, n-, i-, s- oder t-Butyl,
für jeweils gegebenenfalls durch Fluor, Chlor und/oder Brom substituiertes Ethenyl, Propenyl oder Butenyl,
für jeweils gegebenenfalls durch Fluor, Chlor, Brom, Methyl, Ethyl, n- oder i-Propyl substituiertes Cyclopropyl, Cyclobutyl, Cyclopentyl oder Cyclohexyl,
für jeweils gegebenenfalls durch Nitro, Cyano, Fluor, Chlor, Brom, Methyl, Ethyl, n- oder i-Propyl, n-, i-, s- oder t-Butyl, Methoxy, Ethoxy, n- oder i-Propoxy substituiertes Phenyl, Naphthyl, Benzyl oder Phenylethyl, oder
für jeweils gegebenenfalls durch Fluor, Chlor, Brom, Methyl, Ethyl, n- oder i-Propyl, n-, i-, s- oder t-Butyl, Methoxy, Ethoxy, n- oder i-Propoxy substituiertes Heterocyclyl aus der Reihe Furyl, Thienyl, Pyrazolyl oder Pyridinyl.

$R^2$ steht besonders bevorzugt für Cyano, Carbamoyl, Thiocarbamoyl, Fluor, Chlor, Brom, oder für jeweils gegebenenfalls durch Fluor und/oder Chlor substituiertes Methyl, Ethyl, Methoxy oder Ethoxy.

$R^3$ steht besonders bevorzugt für Wasserstoff, Cyano, Fluor oder Chlor.

$R^4$ steht besonders bevorzugt für Wasserstoff, Amino oder jeweils gegebenenfalls durch Fluor substituiertes Methyl oder Ethyl.

$R^5$ steht besonders bevorzugt für Carboxy, Cyano, Carbamoyl, Thiocarbamoyl oder jeweils gegebenenfalls durch Fluor und/oder Chlor substituiertes Methyl, Ethyl, Methoxycarbonyl oder Ethoxycarbonyl.

$R^6$ steht besonders bevorzugt für Wasserstoff, Fluor, Chlor, Brom oder jeweils gegebenenfalls durch Fluor und/oder Chlor substituiertes Methyl oder Ethyl.

$R^7$ steht besonders bevorzugt für Wasserstoff, Cyano, Fluor, Chlor, Brom oder jeweils gegebenenfalls durch Cyano, Fluor, Chlor, Methoxy, Ethoxy, n- oder i-Propoxy substituiertes Methyl, Ethyl, n- oder i-Propyl, Methoxy, Ethoxy,

n- oder i-Propoxy, Methylthio, Ethylthio, n- oder i-Propylthio, , Methylamino, Ethylamino, n- oder i-Propylamino, Dimethylamino oder Diethylamino.

$R^8$ steht besonders bevorzugt für Wasserstoff oder jeweils gegebenenfalls durch Cyano, Fluor, Chlor, Methoxy, Ethoxy, n- oder i-Propoxy substituiertes Methyl, Ethyl, n- oder i-Propyl, Methoxy, Ethoxy, n- oder i-Propoxy, Methylamino, Ethylamino, n- oder i-Propylamino, Acetyl, Propionyl, n- oder i-Butyroyl, Methoxycarbonyl, Ethoxycarbonyl, n- oder i-Propoxycarbonyl.

$R^9$ steht besonders bevorzugt für Wasserstoff, Cyano, Fluor, Chlor, Brom oder die Gruppierung $-O-R^{11}$ oder $SO_2-R^{11}$.

$R^{10}$ steht besonders bevorzugt für Wasserstoff oder die Gruppierung $-R^{11}$.

$R^{11}$ steht besonders bevorzugt für jeweils gegebenenfalls durch Cyano, Fluor, Chlor, Brom, Methoxy, Ethoxy, n- oder i-Propoxy substituiertes Methyl, Ethyl, n- oder i-Propyl, n-, i-, s- oder t-Butyl, für jeweils gegebenenfalls durch Fluor, Chlor und/oder Brom substituiertes Ethenyl, Propenyl, Butenyl, Ethinyl, Propinyl oder Butinyl,
für jeweils gegebenenfalls durch Cyano, Fluor, Chlor, Brom, Methyl, Ethyl, n- oder i-Propyl substituiertes Cyclopropyl, Cyclobutyl, Cyclopentyl oder Cyclohexyl, oder
für jeweils gegebenenfalls durch Nitro, Cyano, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy substituiertes Phenyl oder Benzyl.

A steht ganz besonders bevorzugt für Methylen, Ethan-1,1-diyl (Ethyliden), Ethan-1,2-diyl (Dimethylen), Propan-1,1-diyl (Propyliden), Ethen-1,2-diyl, Propen-1,2-diyl oder Propen-2,3-diyl.

Ar steht ganz besonders bevorzugt für gegebenenfalls substituiertes Phenyl, Pyridinyl oder Pyrimidinyl,
wobei die jeweils möglichen Substituenten vorzugsweise aus folgender Aufzählung zu entnehmen sind:

Cyano, Carbamoyl, Thiocarbamoyl, Fluor, Chlor, Brom, Methyl, Ethyl, Trifluormethyl, Methoxy, Ethoxy und Trifluormethoxy.

$R^1$ steht ganz besonders bevorzugt für jeweils gegebenenfalls durch Fluor und/oder Chlor substituiertes Methyl, Ethyl, n- oder i-Propyl, n-, i- oder s-Butyl, für gegebenenfalls durch Fluor, Chlor oder Methyl substituiertes Cyclopropyl, für jeweils gegebenenfalls durch Fluor, Chlor, Brom, Methyl, Ethyl, Methoxy oder Ethoxy substituiertes Phenyl oder Benzyl, oder für jeweils gegebenenfalls durch Fluor, Chlor, Brom, Methyl, Ethyl, Methoxy oder Ethoxy substituiertes Heterocyclyl aus der Reihe Furyl, Thienyl, Pyrazolyl oder Pyridinyl.

$R^2$ steht ganz besonders bevorzugt für Cyano, Chlor, Brom oder Trifluormethyl.

$R^3$ steht ganz besonders bevorzugt für Wasserstoff, Fluor oder Chlor.

$R^4$ steht ganz besonders bevorzugt für Wasserstoff, Amino oder Methyl.

$R^5$ steht ganz besonders bevorzugt für Cyano oder Trifluormethyl.

$R^6$ steht ganz besonders bevorzugt für Wasserstoff, Chlor, Brom oder Methyl.

$R^7$ steht ganz besonders bevorzugt für Wasserstoff, Cyano, Fluor, Chlor, Brom oder jeweils gegebenenfalls durch Fluor und/oder Chlor substituiertes Methyl oder Ethyl.

$R^8$ steht ganz besonders bevorzugt für Wasserstoff oder jeweils gegebenenfalls durch Fluor substituiertes Methyl oder Ethyl.

$R^9$ steht ganz besonders bevorzugt für Wasserstoff, Chlor, Brom oder die Gruppierung $-R^{11}$.

$R^{11}$ steht ganz besonders bevorzugt für jeweils gegebenenfalls durch Fluor, Chlor, Methoxy oder Ethoxy substituiertes Methyl, Ethyl, n- oder i-Propyl, oder für gegebenenfalls durch Fluor, Chlor oder Methyl substituiertes Cyclopropyl.

Eine ganz besonders bevorzugte Gruppe der erfindungsgemäßen Wirkstoff-Komponenten der Formel (I) sind

diejenigen Verbindungen, bei denen Z für die mit $Z^1$ bezeichnete Gruppierung steht, und n, A, Ar, $R^1$, $R^2$ und $R^3$ eine der vorstehend genannten Bedeutungen haben.

Eine weitere ganz besonders bevorzugte Gruppe der erfindungsgemäßen Wirkstoff-Komponenten der Formel (I) sind diejenigen Verbindungen, bei denen Z für die mit $Z^2$ bezeichnete Gruppierung steht, und n, A, Ar, $R^1$, $R^2$ und $R^3$ eine der vorstehend genannten Bedeutungen haben.

Eine weitere ganz besonders bevorzugte Gruppe der erfindungsgemäßen Wirkstoff-Komponenten der Formel (I) sind diejenigen Verbindungen, bei denen Z für die mit $Z^3$ bezeichnete Gruppierung steht, und n, A, Ar, $R^1$, $R^2$ und $R^3$ eine der vorstehend genannten Bedeutungen haben.

Beispiele für die als erfindungsgemäße Wirkstoff-Komponenten ganz besonders bevorzugten Verbindungen der Formel (I) sind in der nachstehenden Tabelle 1 aufgeführt.

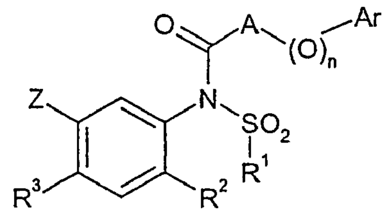

(I)

Tabelle 1:Beispiele für die Verbindungen der Formel (I)

| Bsp.-Nr. | n | A | Ar | $R^1$ | $R^2$ | $R^3$ | Z |
|---|---|---|---|---|---|---|---|
| I-1 | 1 | $CH_2$ | 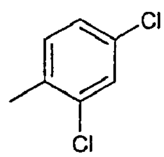 | $C_2H_5$ | CN | F | 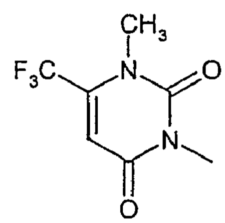 |
| I-2 | 0 | $CH_2CH_2$ | 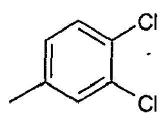 | $C_2H_5$ | CN | F | 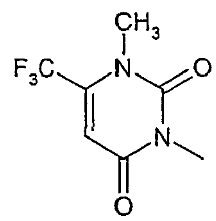 |
| I-3 | 0 | $CH_2$ | 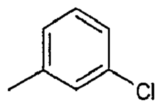 | $C_2H_5$ | CN | F | 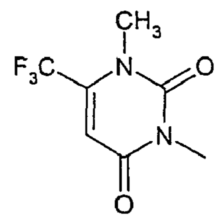 |
| I-4 | 1 | $CH_2$ | 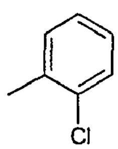 | $C_2H_5$ | CN | F | 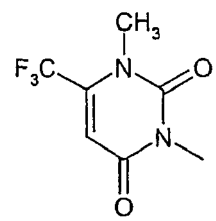 |

(fortgesetzt)

| Bsp.-Nr. | n | A | Ar | $R^1$ | $R^2$ | $R^3$ | Z |
|---|---|---|---|---|---|---|---|
| I-5 | 0 | $CH(CH_3)$ | 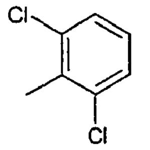 | $C_2H_5$ | CN | F | 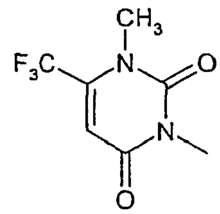 |
| I-6 | 1 | $CH_2$ | 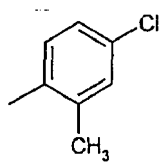 | $C_2H_5$ | CN | F | 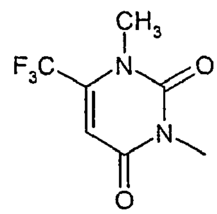 |
| I-7 | 0 | $CH_2$ | 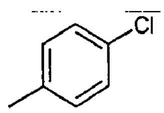 | $C_2H_5$ | CN | F | 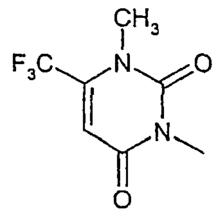 |
| I-8 | 1 | $CH_2$ | 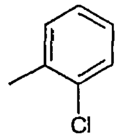 | $CH_3$ | CN | F | 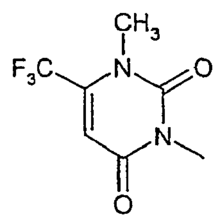 |
| I-9 | 1 | $CH_2$ | 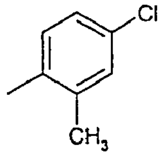 | $CH_3$ | CN | F | 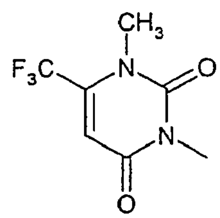 |
| I-10 | 0 | $CH_2$ | 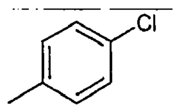 | $CH_3$ | CN | F | 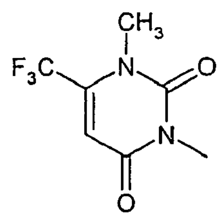 |
| I-11 | 1 | $CH_2$ | 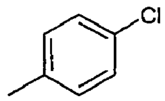 | $CH_3$ | CN | F | 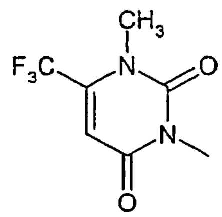 |

(fortgesetzt)

| Bsp.-Nr. | n | A | Ar | $R^1$ | $R^2$ | $R^3$ | Z |
|---|---|---|---|---|---|---|---|
| I-12 | 0 | $CH_2CH_2$ | 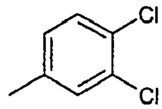 | $CH_3$ | CN | F | 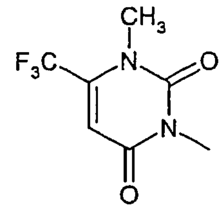 |
| I-13 | 0 | $CH_2$ | 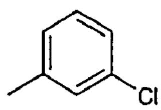 | $CH_3$ | CN | F | 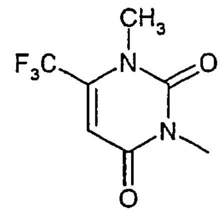 |
| I-14 | 0 | $CH_2CH_2$ | 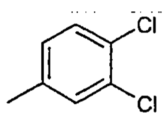 | $C_2H_5$ | CN | F | 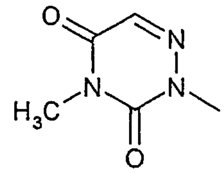 |
| I-15 | 1 | $CH_2$ | 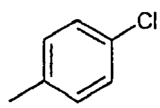 | $C_2H_5$ | CN | F | 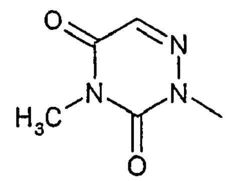 |
| I-16 | 1 | $CH_2$ | 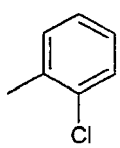 | $C_2H_5$ | CN | F | 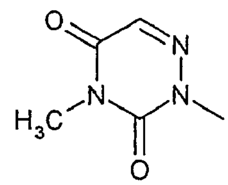 |
| I-17 | 0 | $CH_2$ | 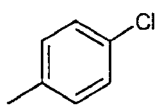 | $C_2H_5$ | CN | F | 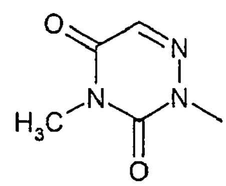 |
| I-18 | 1 | CH2 | 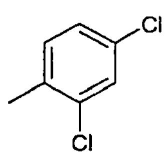 | $C_2H_5$ | CN | F | 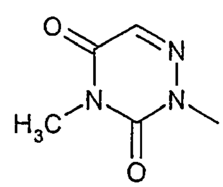 |
| I-19 | 1 | $CH_2$ | 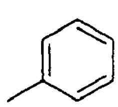 | $C_2H_5$ | CN | F | 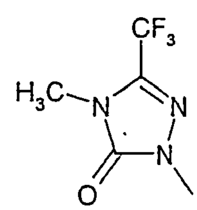 |

(fortgesetzt)

| Bsp.-Nr. | n | A | Ar | $R^1$ | $R^2$ | $R^3$ | Z |
|---|---|---|---|---|---|---|---|
| I-20 | 0 | $CH_2CH_2$ | 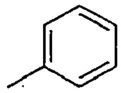 | $C_2H_5$ | CN | F | 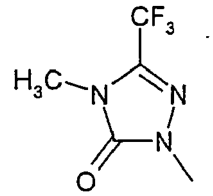 |
| I-21 | 1 | CH(CH3) | 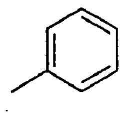 | $C_2H_5$ | CN | F | 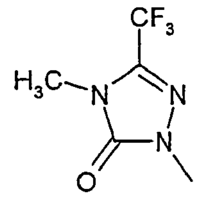 |
| I-22 | 0 | CH=CH | 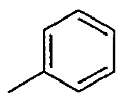 | $C_2H_5$ | CN | F | 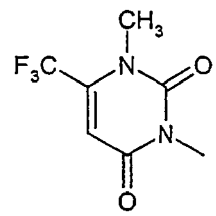 |
| I-23 | 0 | CH=CH | 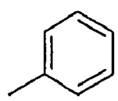 | $CH_3$ | CN | F | 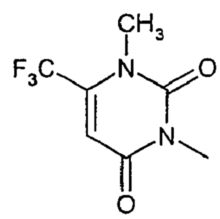 |
| I-24 | 0 | $CH_2CH_2$ | 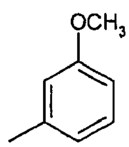 | $C_2H_5$ | CN | F | 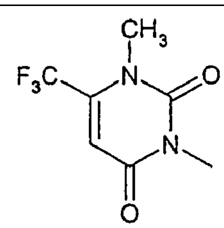 |
| I-25 | 0 | $CH_2CH_2$ | 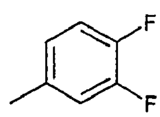 | $C_2H_5$ | CN | F | 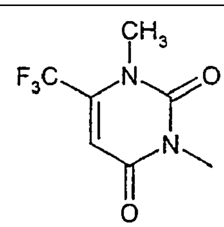 |
| I-26 | 0 | $CH_2CH_2$ | 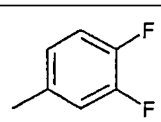 | $CH_3$ | CN | F | 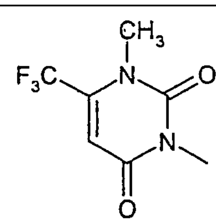 |

(fortgesetzt)

| Bsp.-Nr. | n | A | Ar | $R^1$ | $R^2$ | $R^3$ | Z |
|---|---|---|---|---|---|---|---|
| I-27 | 0 | CH=CH | 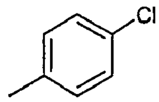 | $C_2H_5$ | CN | F | 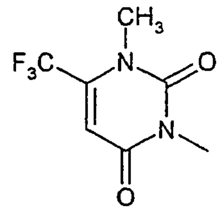 |
| I-28 | 0 | CH=CH | 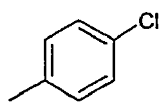 | $CH_3$ | CN | F | 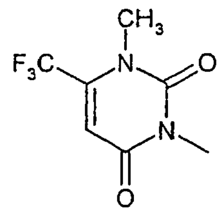 |
| I-29 | 0 | $C(CH_3)=CH$ | 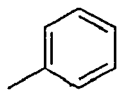 | $C_2H_5$ | CN | F | 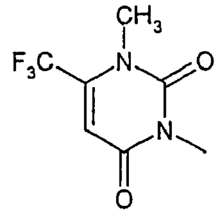 |
| I-30 | 0 | $CH=C(CH_3)$ | 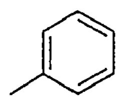 | $CH_3$ | CN | F | 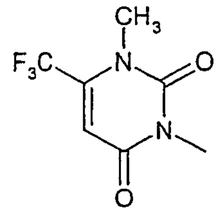 |
| I-31 | 0 | CH=CH | 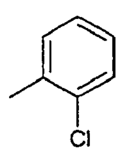 | $C_2H_5$ | CN | F | 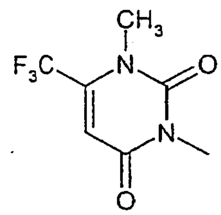 |
| I-32 | 0 | CH=CH | 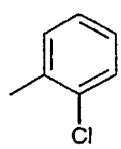 | $CH_3$ | CN | F | 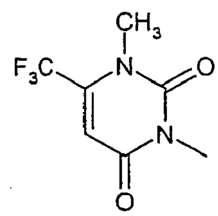 |
| I-33 | 0 | $CH_2CH_2$ | 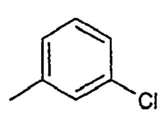 | $C_2H_5$ | CN | F | 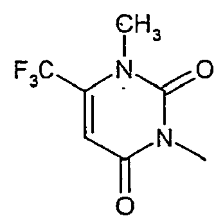 |

(fortgesetzt)

| Bsp.-Nr. | n | A | Ar | $R^1$ | $R^2$ | $R^3$ | Z |
|---|---|---|---|---|---|---|---|
| I-34 | 0 | CH=CH | 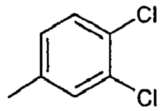 | $C_2H_5$ | CN | F | 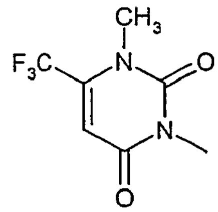 |
| I-35 | 0 | CH=CH | 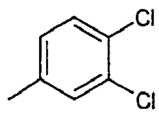 | $CH_3$ | CN | F | 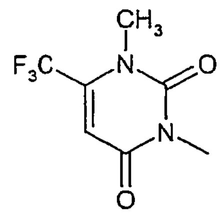 |
| I-36 | 0 | CH=CH | 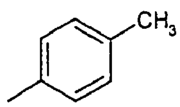 | $C_2H_5$ | CN | F | 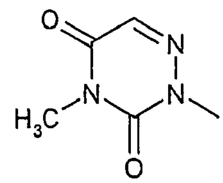 |
| I-37 | 0 | CH=CH | 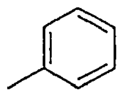 | $C_2H_5$ | CN | F | 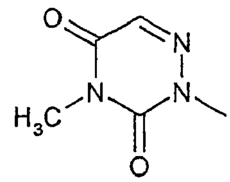 |
| I-38 | 0 | CH=CH | 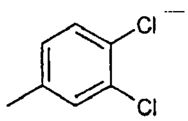 | $C_2H_5$ | CN | F | 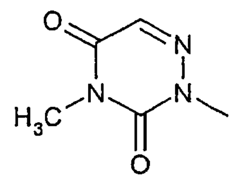 |
| I-39 | 0 | $C(CH_3)=CH$ | 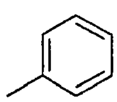 | $C_2H_5$ | CN | F | 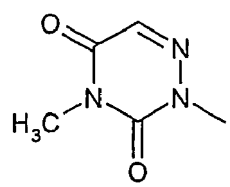 |
| I-40 | 0 | $CH_2CH(CH_3)$ | 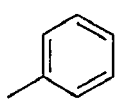 | $C_2H_5$ | CN | F | 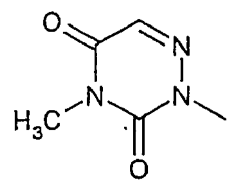 |
| I-41 | 0 | $CH_2CH_2$ | 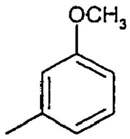 | $C_2H_5$ | CN | F | 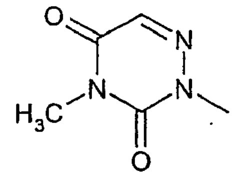 |

(fortgesetzt)

| Bsp.-Nr. | n | A | Ar | $R^1$ | $R^2$ | $R^3$ | Z |
|---|---|---|---|---|---|---|---|
| I-42 | 0 | $CH_2CH_2$ | 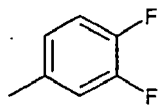 | $C_2H_5$ | CN | F | 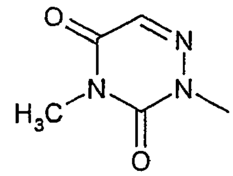 |
| I-43 | 0 | $CH_2CH_2$ | 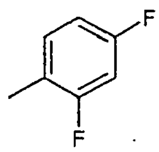 | $C_2H_5$ | CN | F | 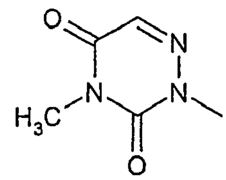 |
| I-44 | 0 | $CH_2CH_2$ | 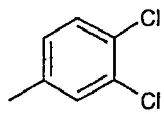 | $C_2H_5$ | CN | F | 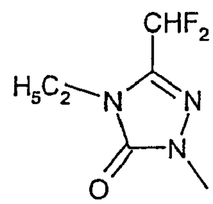 |
| I-45 | 0 | CH2CH2 | 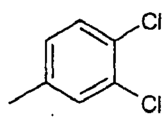 | $C_2H_5$ | CN | F | 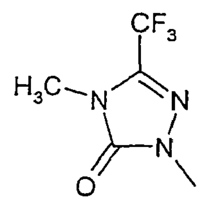 |
| I-46 | 0 | $CH_2CH_2$ | 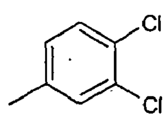 | $C_2H_5$ | CN | F | 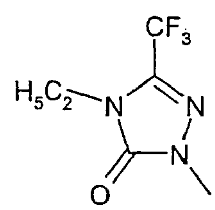 |

Die Wirkstoffe der Gruppe (2) können ihrer chemischen Struktur entsprechend folgenden Wirkstoffklassen zugeordnet werden:

Amide (z.B. Isoxaben, Picolinafen, Propanil), Arylheterocyclen (z.B. Azafenidin, Benzfendizone, Butafenacil-allyl, Carfentrazone-ethyl, Cinidon-ethyl, Fluazolate, Flumiclorac-pentyl, Flumioxazin, Flupropacil, Fluthiacet-methyl, Oxadiazon, Oxadiargyl, Profluazol, Pyraflufen-ethyl, Pyndate, Pyridafol, Sulfentrazone, 4-[4,5-Dihydro-4-methyl-5-oxo-(3-trifluormethyl)-1H-1,2,4-triazol-1-yl]-2-[(ethylsulfonyl)-amino]-5-fluor-benzolcarbothioamid), Aryloxyphenoxypropionate (z.B. Clodinafop-propargyl, Cyhalofop-butyl, Diclofop-methyl, Fenoxaprop-P-ethyl, Fluazifop-P-butyl, Haloxyfop-P-methyl, Quizalofop-P-ethyl), Carbonsäurederivate (z.B. Clopyralid, Dicamba, Fluroxypyr, Picloram, Triclopyr), Benzothiadiazole (z.B. Bentazon), Chloracetamide (z.B. Acetochlor, Alachlor, Butachlor, (S-) Dimethenamid, Metazachlor, Metolachlor, Pretilachlor, Propachlor, Propisochlor), Cyclohexandione (z.B. Butroxydim, Clefoxydim, Cycloxydim, Sethoxydim, Tralkoxydim), Dinitroaniline (z.B. Benfluralin, Ethalfluralin, Oryzalin, Pendimethalin, Trifluralin), Diphenylether (z.B. Acifluorfen-sodium, Aclonifen, Bifenox, Fluoroglycofen-ethyl, Fomesafen, Lactofen, Oxyfluorfen), Harnstoffe (z.B. Chlortoluron, Diuron, Isoproturon, Linuron, Metobromuron, Metoxuron), Imidazolinone (z.B. Imazamethabenz-methyl, Imazamox, Imazaquin, Imazethapyr), Isoxazole (z.B. Isoxaflutole), Nicotinanilide (z.B. Diflufenican), Nitrile (z.B. Bromoxynil, Ioxynil), Organophosphor-Verbindungen (z.B. Anilofos, Glufosinate-ammonium, Glyphosate-isopropylammonium, Sulfosate), Oxyacetamide (z.B. Flufenacet, Mefenacet), Phenoxycarbonsäurederivate (z.B. 2,4-D, Dichlorprop-P, MCPA, MCPB, Mecoprop), Pyrazole (z.B. Pyrazolate, Pyrazoxyfen), Pyridazinone (z.B. Norflurazon), Pyridine (z.B. Dithiopyr, Thiazopyr), Pyrimidinyl(thio)benzoate (z.B.

Bispyribac, Pyribenzoxim, Pyrithiobac, Pyriminobac), Sulfonylharnstoffe (z.B. Amidosulfuron, Azimsulfuron, Bensulfuron-methyl, Chlorimuron-ethyl, Chlorsulfuron, Cinosulfuron, Cyclosulfamuron, Ethoxysulfuron, Flupyrsulfuron-methyl-sodium, Foramsulfuron, Iodosulfuron-methyl-sodium, Imazosulfuron, Metsulfuron-methyl, Nicosulfaron, Oxasulfuron, Primisulfuron-methyl, Prosulfuron, Pyrazosulfuron-ethyl, Rimsulfuron, Sulfometuron-methyl, Sulfosulf uron, Thifensulfuron-methyl, Triasulfuron, Tribenuron-methyl, Trifloxysulfuron, Triflusulfuron-methyl, Tritosulfuron), Tetrazolinone (z.B. Fentrazamide), Thiocarbamate (z.B. Butylate, Dimepiperate, EPTC, Esprocarb, Molinate, Orbencarb, Prosulfocarb, Triallate), Triazine (z.B. Ametryn, Atrazine, Cyanazine, Dimexyflam, Simazin, Terbuthylazine, Terbutryn), Triazinone (z.B. Hexazinone, Metamitron, Metribuzin), Triazole (z.B. Amitrole), Triazolinone (z.B. Amicarbazone, Flucarbazone-sodium, Propoxycarbazone-sodium) Triazolopyrimidine (z.B. Cloransulam-methyl, Diclosulam, Florasulam, Flumetsulam, Mefosulam), Triketone (z.B. Mesotrione, Sulcotrione), Uracile (z.B. Bromacil).

Eine besonders bevorzugte Gruppe von Verbindungen der Gruppe (2) sind die Triazolinone, Sulfonylharnstoffe (insbesondere Iodsulfuron-methyl-sodium), Aryloxyphenoxypropionate (insbesondere Fenoxaprop-p-ethyl) und Isoxazole.

Als Mischungskomponenten aus den Wirkstoffen der Gruppe (2) werden weiter besonders hervorgehoben:

Flucarbazone-sodium, Acetochlor, Aclonifen, Alachlor, Amicarbazone, Amidosulfuron, Amitrole, Anilofos, Asulam, Atrazine, Beflubutamid, Benazolin (-ethyl), Benfuresate, Bentazone, Bifenox, Bispyribac-sodium, Bromoxynil, Butylate, Carfentrazone-ethyl, Chlorotoluron, Chlorsulfuron, Cinidon-ethyl, Clodinafop-propargyl, Clopyralid, Cyanazine, 2,4-D, Desmedipham, Dicamba, Dichlorprop-P, Diclofop-methyl, Difenzoquat, Diflufenican, Diflufenzopyr, Dimethenamid, S-Dimethenamid, EPTC, Ethofumesate, Ethoxysulfaron, Fenoxaprop-ethyl, Fenoxaprop-P-ethyl, Fentrazamide, Flamprop-M-isopropyl, Flamprop-M-methyl, Florasulam, Fluazifop-P-butyl, Fluazolate, Flufenacet, Flumetsulam, Fluoroglycofen-ethyl, Flupyrsulfuron-methyl-sodium, Fluroxypyr, -butoxypropyl, -meptyl, Flurtamone, Fluthiacet-methyl, Foramsulfuron, Glufosinate, Glufosinate-ammonium, Halosulfuron-methyl, Haloxyfop-P-methyl, Imazamethabenz-methyl, Imazamox, Imazapic, Imazapyr, Imazaquin, Imazethapyr, Iodosulfuron-methyl-sodium, Ioxynil, Isoproturon, Isoxaben, Isoxachlortole, Isoxaflutole, Lactofen, Linuron, MCPA, Mecoprop-P, Mefenacet, Mesosulfuron, Mesotrione, Metamitron, Metazachlor, Methabenzthiazuron, Metolachlor, S-Metolachlor, Metosulam, Metribuzin, Metsulfuron-methyl, Naproanilide, Neburon, Nicosulfuron, Oxadiargyl, Oxadiazon, Oxaziclomefone, Oxyfluorfen, Pendimethalin, Penoxsulam, Phenmedipham, Picolinafen, Primisulfuron-methyl, Profluazol, Propanil, Propoxycarbazone-sodium, Prosulfocarb, Prosulfuron, Pyraclonil, Pyraflufen-ethyl, Pyribenzoxim, Pyridafol, Pyridate, Qinclorac; Quinmerac, Rimsulfuron, Sulcotrione, Sulfosate, Sulfosulfaron, Terbuthylazine, Thifensulfuron-methyl, Tralkoxydim, Triallate, Triasulfaron, Tribenuron-methyl, Tritosulfuron, 4-(4,5-Dihydro-4-methyl-5-oxo-3-trifluormethyl-1H-1,2,4-triazol-1-yl)-2-(ethylsulfonylamino)-5-fluor-benzolcarbothioamid (HWH4991) und 2-Chlor-N-[1-(2,6-dichlor-4-difluormethyl-phenyl)-4-nitro-1H-pyrazol-5-yl]-propancarbonsäureamid (SLA5599).

Insbesondere werden aus den Wirkstoffen der Gruppe (2) die folgenden Mischungskomponenten hervorgehoben:

Aclonifen, Amicarbazone, Amidosulfuron, Amitrole, Anilofos, Asulam, Benazolin-ethyl, Benfuresate, Bifenox, Bispyribac-sodium, Bromoxynil, Desmedipham, Diclofop-methyl, Diflufenican, Ethofumesate, Ethoxysulfuron, Fenoxaprop-ethyl, Fenoxaprop-P-ethyl, Fentrazamide, Fluazifop-P-butyl, Fluazolate, Flucarbazone-sodium, Flufenacet, Flurtamone, Foramsulfuron, Glufosinate, Glufosinate-anunonium, Iodosulfuron, Ioxynil, Isoproturon, Isoxachlortole, Isoxaflutole, Lactofen, Linuron, Mefenacet, Mesosulfuron, Metamitron, Methabenzthiazuron, Metribuzin, Neburon, Oxadiargyl, Oxadiazon, Oxaziclomefone, Phenmedipham, Propanil, Propoxycarbazone-sodium, Pyraclonil, Pyraflufen-ethyl und Sulcotrione.

Als Mischungskomponenten aus den Wirkstoffen der Gruppe (3) werden besonders hervorgehoben:

5-Chlor-chinolin-8-oxy-essigsäure-(1-methyl-hexylester) (Cloquintocet-mexyl), Ethyl-4,5-dihydro-5,5-diphenyl-3-isoxazolcarboxylat (Isoxadifen-ethyl) und Diethyl-1-(2,4-dichlor-phenyl)-4,5-dihydro-5-methyl-1H-pyrazol-3,5-dicarboxylat (Mefenpyr-diethyl), besonders geeignet zur Verbesserung der Verträglichkeit in Gerste und Weizen sowie in gewissem Umfang auch in Mais und Reis, sowie 4-Dichloracetyl-1-oxa-4-aza-spiro[4.5]-decan (AD-67), 1-Dichloracetyl-hexahydro-3,3,8a-trimethyl-pyrrolo[1,2-a]-pyrimidin-6(2H)-on (BAS-145138), 4-Dichloracetyl-3,4-dihydro-3-methyl-2H-1,4-benzoxazin (Benoxacor), 2,2-Dichlor-N,N-di-2-propenyl-acetamid (Dichlormid), 3-Dichloracetyl-5-(2-furanyl)-2,2-dimethyl-oxazolidin (Furilazole, MON-13900) und 3-Dichloracetyl-2,2,5-trimethyl-oxazolidin (R-29148), besonders geeignet zur Verbesserung der Verträglichkeit in Mais. Mefenpyr-diethyl ist als Wirkstoff der Gruppe (3) insbesondere von Interesse.

Vorzugsweise enthalten die erfindungsgemäßen Mittel einen oder zwei Wirkstoffe der Gruppe (1) und ein bis drei Wirkstoffe der Gruppe (2) und/oder gegebenenfalls einen Wirkstoff der Gruppe (3).

Insbesondere enthalten die erfindungsgemäßen Mittel einen Wirkstoff der Gruppe (1) und einen oder zwei Wirkstoffe der Gruppe (2) und/oder gegebenenfalls einen Wirkstoff der Gruppe (3).

Beispiele für erfindungsgemäße Kombinationen aus jeweils einem Wirkstoff der Gruppe (1) und ein oder zwei Wirkstoffen der Gruppe (2) sowie Kombinationen aus jeweils einem Wirkstoff der Gruppe (1), ein oder zwei Wirkstoffen der Gruppe (2) und einer Verbindung der Gruppe (3) sind nachstehend in Tabelle 2 aufgeführt. Die Bezeichnung der Wirkstoffe der Formel (I) (Wirkstoffe der Gruppe (1)) sind dabei jeweils der Tabelle 1 entnommen.

Tabelle 2: Beispiele für Kombinationen bestehend aus einem Wirkstoff der Gruppe (1) und einem oder zwei Wirkstoffen der Gruppe (2) sowie gegebenenfalls einem Wirkstoff der Gruppe (3).

| **Wirkstoff der Gruppe (1)** | **Wirkstoff der Gruppe (2) + gegebenenfalls Wirkstoff der Gruppe (3)** |
|---|---|
| (I-1) | Aclonifen |
| (I-1) | Amicarbazone |
| (I-1) | Amidosulfuron |
| (I-1) | Amitrole |
| (I-1) | Anilofos |
| (I-1) | Asulam |
| (I-1) | Benazolin-ethyl |
| (I-1) | Benfuresate |
| (I-1) | Bifenox |
| (I-1) | Bispyribac-sodium |
| (I-1) | Bromoxynil |
| (I-1) | Desmedipham |
| (I-1) | Diclofop-methyl |
| (I-1) | Diflufencan |
| (I-1) | Ethofumesate |
| (I-1) | Ethoxysulfuron |
| (I-1) | Fenoxaprop-ethyl |
| (I-1) | Fenoxaprop-P-ethyl |
| (I-1) | Fentrazamide |
| (I-1) | Fluazifop-P-butyl |
| (I-1) | Fluazolate |
| (I-1) | Flucarbazone-sodium |
| (I-1) | Flufenacet |
| (I-1) | Flurtamone |
| (I-1) | Foramsulfuron |
| (I-1) | Glufosinate |
| (I-1) | Glufosinate-ammonium |
| (I-1) | Iodosulfuron |
| (I-1) | Ioxynil |
| (I-1) | Isoproturon |

(fortgesetzt)

| Wirkstoff der Gruppe (1) | Wirkstoff der Gruppe (2) + gegebenenfalls Wirkstoff der Gruppe (3) |
|---|---|
| (I-1) | Isoxachlortole |
| (I-1) | Isoxaflutole |
| (I-1) | Lactofen |
| (I-1) | Linuron |
| (I-1) | Mefenacet |
| (I-1) | Mesosulfuron |
| (I-1) | Metamitron |
| (I-1) | Methabenzthiazuron |
| (I-1) | Metribuzin |
| (I-1) | Neburon |
| (I-1) | Oxadiargyl |
| (I-1) | Oxadiazon |
| (I-1) | Oxaziclomefone |
| (I-1) | Phenmedipham |
| (I-1) | Propanil |
| (I-1) | Propoxycarbazone-sodium |
| (I-1) | Pyraclonil |
| (I-1) | Pyraflufen-ethyl |
| (I-1) | Sulcotrione |
| (I-2) | Aclonifen |
| (I-2) | Amicarbazone |
| (I-2) | Amidosulfuron |
| (I-2) | Amitrole |
| (I-2) | Anilofos |
| (I-2) | Asulam |
| (I-2) | Benazolin-ethyl |
| (I-2) | Benfuresate |
| (I-2) | Bifenox |
| (I-2) | Bispyribac-sodium |
| (I-2) | Bromoxynil |
| (I-2) | Desmedipham |
| (I-2) | Diclofop-methyl |
| (I-2) | Diflufenican |
| (I-2) | Ethofumesate |
| (I-2) | Ethoxysulfuron |
| (I-2) | Fenoxaprop-ethyl |
| (I-2) | Fenoxaprop-P-ethyl |

(fortgesetzt)

| Wirkstoff der Gruppe (1) | Wirkstoff der Gruppe (2) + gegebenenfalls Wirkstoff der Gruppe (3) |
|---|---|
| (I-2) | Fenoxaprop-P-ethyl + Mefenpyr-diethyl |
| (I-2) | Fenoxaprop-P-ethyl + Isoxadifen-ethyl |
| (I-2) | Fentrazamide |
| (I-2) | Fluazifop-P-butyl |
| (I-2) | Fluazolate |
| (I-2) | Flucarbazone-sodium |
| (I-2) | Flufenacet |
| (I-2) | Flurtamone |
| (I-2) | Foramsulfuron |
| (I-2) | Glufosinate |
| (I-2) | Glufosinate-ammonium |
| (I-2) | Iodosulfuron |
| (I-2) | Ioxynil |
| (I-2) | Isoproturon |
| (I-2) | Isoxachlortole |
| (I-2) | Isoxaflutole |
| (I-2) | Lactofen |
| (I-2) | Linuron |
| (I-2) | Mefenacet |
| (I-2) | Mesosulfuron |
| (I-2) | Metamitron |
| (I-2) | Methabenzthiazuron |
| (I-2) | Metribuzin |
| (I-2) | Neburon |
| (I-2) | Oxadiargyl |
| (I-2) | Oxadiazon |
| (I-2) | Oxaziclomefone |
| (I-2) | Phenmedipham |
| (I-2) | Propanil |
| (I-2) | Propoxycarbazone-sodium |
| (I-2) | Pyraclonil |
| (I-2) | Pyraflufen-ethyl |
| (I-2) | Sulcotrione |
| (I-6) | Aclonifen |
| (I-6) | Amicarbazone |
| (I-6) | Amidosulfuron |
| (I-6) | Amitrole |

(fortgesetzt)

| Wirkstoff der Gruppe (1) | Wirkstoff der Gruppe (2) + gegebenenfalls Wirkstoff der Gruppe (3) |
|---|---|
| (I-6) | Anilofos |
| (I-6) | Asulam |
| (I-6) | Benazolin-ethyl |
| (I-6) | Benfuresate |
| (I-6) | Bifenox |
| (I-6) | Bispyribac-sodium |
| (I-6) | Bromoxynil |
| (I-6) | Desmedipham |
| (I-6) | Diclofop-methyl |
| (I-6) | Diflufenican |
| (I-6) | Ethofumesate |
| (I-6) | Ethoxysulfuron |
| (I-6) | Fenoxaprop-ethyl |
| (I-6) | Fenoxaprop-P-ethyl |
| (I-6) | Fentrazamide |
| (I-6) | Fluazifop-P-butyl |
| (I-6) | Fluazolate |
| (I-6) | Flucarbazone-sodium |
| (I-6) | Flufenacet |
| (I-6) | Flurtamone |
| (I-6) | Foramsulfuron |
| (I-6) | Glufosinate |
| (I-6) | Glufosinate-ammoniuni |
| (I-6) | Iodosulfuron |
| (I-6) | Ioxynil |
| (I-6) | Isoproturon |
| (I-6) | Isoxachlortole |
| (I-6) | Isoxaflutole |
| (I-6) | Lactofen |
| (I-6) | Linuron |
| (I-6) | Mefenacet |
| (I-6) | Mesosulfuron |
| (I-6) | Metamitron |
| (I-6) | Methabenzthiazuron |
| (I-6) | Metribuzin |
| (I-6) | Neburon |
| (I-6) | Oxadiargyl |

(fortgesetzt)

| Wirkstoff der Gruppe (1) | Wirkstoff der Gruppe (2) + gegebenenfalls Wirkstoff der Gruppe (3) |
|---|---|
| (I-6) | Oxadiazon |
| (I-6) | Oxaziclomefone |
| (I-6) | Phenmedipham |
| (I-6) | Propanil |
| (I-6) | Propoxycarbazone-sodium |
| (I-6) | Pyraclonil |
| (I-6) | Pyraflufen-ethyl |
| (I-6) | Sulcotrione |
| (I-9) | Aclonifen |
| (I-9) | Amicarbazone |
| (I-9) | Amidosulfuron |
| (I-9) | Amitrole |
| (I-9) | Anilofos |
| (I-9) | Asulam |
| (I-9) | Benazolin-ethyl |
| (I-9) | Benfuresate |
| (I-9) | Bifenox |
| (I-9) | Bispyribac-sodium |
| (I-9) | Bromoxynil |
| (I-9) | Desmedipham |
| (I-9) | Diclofop-methyl |
| (I-9) | Diflufenican |
| (I-9) | Ethofumesate |
| (I-9) | Ethoxysulfuron |
| (I-9) | Fenoxaprop-ethyl |
| (I-9) | Fenoxaprop-P-ethyl |
| (I-9) | Fentrazamide |
| (I-9) | Fluazifop-P-butyl |
| (I-9) | Fluazolate |
| (I-9) | Flucarbazone-sodium |
| (I-9) | Flufenacet |
| (I-9) | Flurtamone |
| (I-9) | Foramsulfuron |
| (I-9) | Glufosinate |
| (I-9) | Glufosinate-ammonium |
| (I-9) | Iodosulfuron |
| (I-9) | Ioxynil |

(fortgesetzt)

| Wirkstoff der Gruppe (1) | Wirkstoff der Gruppe (2) + gegebenenfalls Wirkstoff der Gruppe (3) |
|---|---|
| (I-9) | Isoproturon |
| (I-9) | Isoxachlortole |
| (I-9) | Isoxaflutole |
| (I-9) | Lactofen |
| (I-9) | Linuron |
| (I-9) | Mefenacet |
| (I-9) | Mesosulfuron |
| (I-9) | Metamitron |
| (I-9) | Methabenzthiazuron |
| (I-9) | Metribuzin |
| (I-9) | Neburon |
| (I-9) | Oxadiargyl |
| (I-9) | Oxadiazon |
| (I-9) | Oxaziclomefone |
| (I-9) | Phenmedipham |
| (I-9) | Propanil |
| (I-9) | Propoxycarbazone-sodium |
| (I-9) | Pyraclonil |
| (I-9) | Pyraflufen-ethyl |
| (I-9) | Sulcotrione |
| (I-11) | Aclonifen |
| (I-11) | Amicarbazone |
| (I-11) | Amidosulfuron |
| (I-11) | Amitrole |
| (I-11) | Anilofos |
| (I-11) | Asulam |
| (I-11) | Benazolin-ethyl |
| (I-11) | Benfuresate |
| (I-11) | Bifenox |
| (I-11) | Bispyribac-sodium |
| (I-11) | Bromoxynil |
| (I-11) | Desmedipham |
| (I-11) | Diclofop-methyl |
| (1-11) | Diflufenican |
| (I-11) | Ethofumesate |
| (I-11) | Ethoxysulfuron |
| (I-11) | Fenoxaprop-ethyl |

(fortgesetzt)

| Wirkstoff der Gruppe (1) | Wirkstoff der Gruppe (2) + gegebenenfalls Wirkstoff der Gruppe (3) |
|---|---|
| (I-11) | Fenoxaprop-P-ethyl |
| (I-11) | Fentrazamide |
| (I-11) | Fluazifop-P-butyl |
| (I-11) | Fluazolate |
| (I-11) | Flucarbazone-sodium |
| (I-11) | Flufenacet |
| (I-11) | Flurtamone |
| (I-11) | Foramsulfuron |
| (I-11) | Glufosinate |
| (I-11) | Glufosinate-amnionium |
| (I-11) | Iodosulfuron |
| (I-11) | Ioxynil |
| (I-11) | Isoproturon |
| (I-11) | Isoxachlortole |
| (I-11) | Isoxaflutole |
| (I-11) | Lactofen |
| (I-11) | Linuron |
| (I-11) | Mefenacet |
| (I-11) | Mesosulfuron |
| (I-11) | Metamitron |
| (I-11) | Methabenzthiazuron |
| (I-11) | Metribuzin |
| (I-11) | Neburon |
| (I-11) | Oxadiargyl |
| (I-11) | Oxadiazon |
| (I-11) | Oxaziclomefone |
| (I-11) | Phenmedipham |
| (I-11) | Propanil |
| (I-11) | Propoxycarbazone-sodium |
| (I-11) | Pyraclonil |
| (I-11) | Pyraflufen-ethyl |
| (I-11) | Sulcotrione |
| (I-12) | Aclonifen |
| (I-12) | Amicarbazone |
| (I-12) | Amidosulfizron |
| (I-12) | Amitrole |
| (I-12) | Anilofos |

(fortgesetzt)

| Wirkstoff der Gruppe (1) | Wirkstoff der Gruppe (2) + gegebenenfalls Wirkstoff der Gruppe (3) |
|---|---|
| (I-12) | Asulam |
| (I-12) | Benazolin-ethyl |
| (I-12) | Benfuresate |
| (I-12) | Bifenox |
| (I-12) | Bispyribac-sodium |
| (I-12) | Bromoxynil |
| (I-12), | Desmedipham |
| (I-12) | Diclofop-methyl |
| (I-12) | Diflufenican |
| (I-12) | Ethofumesate |
| (I-12) | Ethoxysulfuron |
| (I-12) | Fenoxaprop-ethyl |
| (I-12) | Fenoxaprop-P-ethyl |
| (I-12) | Fentrazamide |
| (I-12) | Fluazifop-P-butyl |
| (I-12) | Fenoxaprop-P-ethyl + Mefenpyr-diethyl |
| (I-12) | Fenoxaprop-P-ethyl + Isoxadifen-ethyl |
| (I-12) | Fluazolate |
| (I-12) | Flucarbazone-sodium |
| (I-12) | Flufenacet |
| (I-12) | Flurtamone |
| (I-12) | Foramsulfuron |
| (I-12) | Glufosinate |
| (I-12) | Glufosinate-ammonium |
| (I-12) | Iodosulfuron |
| (I-12) | Ioxynil |
| (I-12) | Isoproturon |
| (I-12) | Isoxachlortole |
| (I-12) | Isoxaflutole |
| (I-12) | Lactofen |
| (I-12) | Linuron |
| (I-12) | Mefenacet |
| (I-12) | Mesosulfuron |
| (I-12) | Metamitron |
| (I-12) | Methabenzthiazuron |
| (I-12) | Metribuzin |
| (I-12) | Neburon |

(fortgesetzt)

| Wirkstoff der Gruppe (1) | Wirkstoff der Gruppe (2) + gegebenenfalls Wirkstoff der Gruppe (3) |
|---|---|
| (I-12) | Oxadiargyl |
| (I-12) | Oxadiazon |
| (I-12) | Oxaziclomefone |
| (I-12) | Phenmedipham |
| (I-12) | Propanil |
| (I-12) | Propoxycarbazone-sodium |
| (I-12) | Pyraclonil |
| (I-12) | Pyraflufen-ethyl |
| (I-12) | Sulcotrione |
| (I-14) | Aclonifen |
| (I-14) | Amicarbazone |
| (I-14) | Amidosulfuron |
| (I-14) | Amitrole |
| (I-14) | Anilofos |
| (I-14) | Asulam |
| (I-14) | Benazolin-ethyl |
| (I-14) | Benfuresate |
| (I-14) | Bifenox |
| (I-14) | Bispyribac-sodium |
| (I-14) | Bromoxynil |
| (I-14) | Desmedipham |
| (I-14) | Diclofop-methyl |
| (I-14) | Diflufenican |
| (I-14) | Ethofumesate |
| (I-14) | Ethoxysulfuron |
| (I-14) | Fenoxaprop-ethyl |
| (I-14) | Fenoxaprop-P-ethyl |
| (I-14) | Fentrazamide |
| (I-14) | Fluazifop-P-butyl |
| (I-14) | Fenoxaprop-P-ethyl + Mefenpyr-diethyl |
| (I-14) | Fenoxaprop-P-ethyl + Isoxadifen-ethyl |
| (I-14) | Fluazolate |
| (I-14) | Flucarbazone-sodium |
| (I-14) | Flufenacet |
| (I-14) | Flurtamone |
| (I-14) | Foramsulfuron |
| (I-14) | Glufosinate |

(fortgesetzt)

| Wirkstoff der Gruppe (1) | Wirkstoff der Gruppe (2) + gegebenenfalls Wirkstoff der Gruppe (3) |
|---|---|
| (I-14) | Glufosinate-ammonium |
| (I-14) | Iodosulfuron |
| (I-14) | Ioxynil |
| (I-14) | Isoproturon |
| (I-14) | Isoxachlortole |
| (I-14) | Isoxaflutole |
| (I-14) | Lactofen |
| (I-14) | Linuron |
| (I-14) | Mefenacet |
| (I-14) | Mesosulfuron |
| (I-14) | Metamitron |
| (I-14) | Methabenzthiazuron |
| (I-14) | Metribuzin |
| (I-14) | Neburon |
| (I-14) | Oxadiargyl |
| (I-I4) | Oxadiazon |
| (I-14) | Oxaziclomefone |
| (I-14) | Phenmedipham |
| (I-14) | Propanil |
| (I-14) | Propoxycarbazone-sodium |
| (I-14) | Pyraclonil |
| (I-14) | Pyraflufen-ethyl |
| (I-14) | Sulcotrione |
| (I-15) | Aclonifen |
| (I-15) | Amicarbazone |
| (I-15) | Amidosulfuron |
| (I-15) | Amitrole |
| (I-15) | Anilofos |
| (I-15) | Asulam |
| (I-15) | Benazolin-ethyl |
| (I-15) | Benfuresate |
| (I-15) | Bifenox |
| (I-15) | Bispyribac-sodium |
| (I-15) | Bromoxynil |
| (I-15) | Desmedipham |
| (I-15) | Diclofop-methyl |
| (I-15) | Diflufenican |

(fortgesetzt)

| Wirkstoff der Gruppe (1) | Wirkstoff der Gruppe (2) + gegebenenfalls Wirkstoff der Gruppe (3) |
|---|---|
| (I-15) | Ethofumesate |
| (I-15) | Ethoxysulfuron |
| (I-15) | Fenoxaprop-ethyl |
| (I-15) | Fenoxaprop-P-ethyl |
| (I-15) | Fentrazamide |
| (I-15) | Fluazifop-P-butyl |
| (I-15) | Fenoxaprop-P-ethyl + Mefenpyr-diethyl |
| (I-15) | Fenoxaprop-P-ethyl + Isoxadifen-ethyl |
| (I-15) | Fluazolate |
| (I-15) | Flucarbazone-sodium |
| (I-15) | Flufenacet |
| (I-15) | Flurtamone |
| (I-15) | Foramsulfuron |
| (I-15) | Glufosinate |
| (I-15) | Glufosinate-ammonium |
| (I-15) | Iodosulfuron |
| (I-15) | Ioxynil |
| (I-15) | Isoproturon |
| (I-15) | Isoxachlortole |
| (I-15) | Isoxaflutole |
| (I-15) | Lactofen |
| (I-15) | Linuron |
| (I-15) | Mefenacet |
| (I-15) | Mesosulfuron |
| (I-15) | Metamitron |
| (I-15) | Methabenzthiazuron |
| (I-15) | Metribuzin |
| (I-15) | Neburon |
| (I-15) | Oxadiargyl |
| (I-15) | Oxadiazon |
| (I-15) | Oxaziclomefone |
| (I-15) | Phenmedipham |
| (I-15) | Propanil |
| (I-15) | Propoxycarbazone-sodium |
| (I-15) | Pyraclonil |
| (I-15) | Pyraflufen-ethyl |
| (I-15) | Sulcotrione |

(fortgesetzt)

| Wirkstoff der Gruppe (1) | Wirkstoff der Gruppe (2) + gegebenenfalls Wirkstoff der Gruppe (3) |
|---|---|
| (I-18) | Aclonifen |
| (I-18) | Amicarbazone |
| (I-18) | Amidosulfuron |
| (I-18) | Amitrole |
| (I-18) | Anilofos |
| (I-18) | Asulam |
| (I-18) | Benazolin-ethyl |
| (I-18) | Benfuresate |
| (I-18) | Bifenox |
| (I-18) | Bispyribac-sodium |
| (I-18) | Bromoxynil |
| (I-18) | Desmedipham. |
| (I-18) | Diclofop-methyl |
| (I-18) | Diflufenican |
| (I-18) | Ethofumesate |
| (I-18) | Ethoxysulfuron |
| (I-18) | Fenoxaprop-ethyl |
| (I-18) | Fenoxaprop-P-ethyl |
| (I-18) | Fentrazamide |
| (I-18) | Fluazifop-P-butyl |
| (I-18) | Fenoxaprop-P-ethyl + Mefenpyr-diethyl |
| (I-18) | Fenoxaprop-P-ethyl + Isoxadifen-ethyl |
| (I-18) | Fluazolate |
| (I-18) | Flucarbazone-sodium |
| (I-18) | Flufenacet |
| (I-18) | Flurtamone |
| (I-18) | Foramsulfuron |
| (I-18) | Glufosinate |
| (I-18) | Glufosinate-ammonium |
| (I-18) | Iodosulfuron |
| (I-18) | Ioxynil |
| (I-18) | Isoproturon |
| (I-18) | Isoxachlortole |
| (I-18) | Isoxaflutole |
| (I-18) | Lactofen |
| (I-18) | Linuron |
| (I-18) | Mefenacet |

(fortgesetzt)

| Wirkstoff der Gruppe (1) | Wirkstoff der Gruppe (2) + gegebenenfalls Wirkstoff der Gruppe (3) |
|---|---|
| (I-18) | Mesosulfuron |
| (I-18) | Metamitron |
| (I-18) | Methabenzthiazuron |
| (I-18) | Metribuzin |
| (I-18) | Neburon |
| (I-18) | Oxadiargyl |
| (I-18) | Oxadiazon |
| (I-18) | Oxaziclomefone |
| (I-18) | Phenmedipham |
| (I-18) | Propanil |
| (I-18) | Propoxycarbazone-sodium |
| (I-18) | Pyraclonil |
| (I-18) | Pyraflufen-ethyl |
| (I-18) | Sulcotrione |
| (I-24) | Aclonifen |
| (I-24) | Amicarbazone |
| (I-24) | Amidosulfuron |
| (I-24) | Amitrole |
| (I-24) | Anilofos |
| (I-24) | Asulam |
| (I-24) | Benazolin-ethyl |
| (I-24) | Benfuresate |
| (I-24) | Bifenox |
| (I-24) | Bispyribac-sodium |
| (I-24) | Bromoxinil |
| (I-24) | Desmedipham |
| (I-24) | Diclofop-methyl |
| (I-24) | Diflufenican |
| (I-24) | Ethofumesate |
| (I-24) | Ethoxysulfuron |
| (I-24) | Fenoxaprop-ethyl |
| (I-24) | Fenoxaprop-P-ethyl |
| (I-24) | Fentrazamide |
| (I-24) | Fluazifop-P-butyl |
| (I-24) | Fenoxaprop-P-ethyl + Mefenpyr-diethyl |
| (I-24) | Fenoxaprop-P-ethyl + Isoxadifen-ethyl |
| (I-24) | Fluazolate |

(fortgesetzt)

| Wirkstoff der Gruppe (1) | Wirkstoff der Gruppe (2) + gegebenenfalls Wirkstoff der Gruppe (3) |
|---|---|
| (I-24) | Flucarbazone-sodium |
| (I-24) | Flufenacet |
| (I-24) | Flurtamone |
| (I-24) | Foramsulfuron |
| (I-24) | Glufosinate |
| (I-24) | Glufosinate-ammonium |
| (I-24) | Iodosulfuron |
| (I-24) | Ioxynil |
| (I-24) | Isoproturon |
| (I-24) | Isoxachlortole |
| (I-24) | Isoxaflutole |
| (I-24) | Lactofen |
| (I-24) | Linuron |
| (I-24) | Mefenacet |
| (I-24) | Mesosulfuron |
| (I-24) | Metamitron |
| (I-24) | Methabenzthiazuron |
| (I-24) | Metribuzin |
| (I-24) | Neburon |
| (I-24) | Oxadiargyl |
| (I-24) | Oxadiazon |
| (I-24) | Oxaziclomefone |
| (I-24) | Phenmedipham |
| (I-24) | Propanil |
| (I-24) | Propoxycarbazone-sodium |
| (I-24) | Pyraclonil |
| (I-24) | Pyraflufen-ethyl |
| (I-24) | Sulcotrione |
| (I-25) | Aclonifen |
| (I-25) | Amicarbazone |
| (I-25) | Amidosulfuron |
| (I-25) | Amitrole |
| (I-25) | Anilofos |
| (I-25) | Asulam |
| (I-25) | Benazolin-ethyl |
| (I-25) | Benfuresate |
| (I-25) | Bifenox |

(fortgesetzt)

| Wirkstoff der Gruppe (1) | Wirkstoff der Gruppe (2) + gegebenenfalls Wirkstoff der Gruppe (3) |
|---|---|
| (I-25) | Bispyribac-sodium |
| (I-25) | Bromoxynil |
| (I-25) | Desmedipham |
| (I-25) | Diclofop-methyl |
| (I-25) | Diflufenican |
| (I-25) | Ethofumesate |
| (I-25) | Ethoxysulfuron |
| (I-25) | Fenoxaprop-ethyl |
| (I-25) | Fenoxaprop-P-ethyl |
| (I-25) | Fentrazamide |
| (I-25) | Fluazifop-P-butyl |
| (I-25) | Fenoxaprop-P-ethyl + Mefenpyr-diethyl |
| (I-25) | Fenoxaprop-P-ethyl + Isoxadifen-ethyl |
| (I-25) | Fluazolate |
| (I-25) | Flucarbazone-sodium |
| (I-25) | Flufenacet |
| (I-25) | Flurtamone |
| (I-25) | Foramsulfuron |
| (I-25) | Glufosinate |
| (I-25) | Glufosinate-ammonium |
| (I-25) | Iodosulfuron |
| (I-25) | Ioxynil |
| (I-25) | Isoproturon |
| (I-25) | Isoxachlortole |
| (I-25) | Isoxaflutole |
| (I-25) | Lactofen |
| (I-25) | Linuron |
| (I-25) | Mefenacet |
| (I-25) | Mesosulfuron |
| (I-25) | Metamitron |
| (I-25) | Methabenzthiazuron |
| (I-25) | Metribuzin |
| (I-25) | Neburon |
| (I-25) | Oxadiargyl |
| (I-25) | Oxadiazon |
| (I-25) | Oxaziclomefone |
| (I-25) | Phenmedipham |

(fortgesetzt)

| Wirkstoff der Gruppe (1) | Wirkstoff der Gruppe (2) + gegebenenfalls Wirkstoff der Gruppe (3) |
|---|---|
| (I-25) | Propanil |
| (I-25) | Propoxycarbazone-sodium |
| (I-25) | Pyraclonil |
| (I-25) | Pyraflufen-ethyl |
| (I-25) | Sulcotrione |
| (I-26) | Aclonifen |
| (I-26) | Amicarbazone |
| (I-26) | Amidosulfuron |
| (I-26) | Amitrole |
| (I-26) | Anilofos |
| (I-26) | Asulam |
| (I-26) | Benazolin-ethyl |
| (I-26) | Benfuresate |
| (I-26) | Bifenox |
| (I-26) | Bispyribac-sodium |
| (I-26) | Bromoxynil |
| (I-26) | Desmedipham |
| (I-26) | Diclofop-methyl |
| (I-26) | Diflufenican |
| (I-26) | Ethofumesate |
| (I-26) | Ethoxysulfuron |
| (I-26) | Fenoxaprop-ethyl |
| (I-26) | Fenoxaprop-P-ethyl |
| (I-26) | Fentrazamide |
| (I-26) | Fluazifop-P-butyl |
| (I-26) | Fenoxaprop-P-ethyl + Mefenpyr-diethyl |
| (I-26) | Fenoxaprop-P-ethyl + Isoxadifen-ethyl |
| (I-26) | Fluazolate |
| (I-26) | Flucarbazone-sodium |
| (I-26) | Flufenacet |
| (I-26) | Flurtamone |
| (I-26) | Foramsulfuron |
| (I-26) | Glufosinate |
| (I-26) | Glufosinate-ammonium |
| (I-26) | Iodosulfuron |
| (I-26) | Ioxynil |
| (I-26) | Isoproturon |

(fortgesetzt)

| Wirkstoff der Gruppe (1) | Wirkstoff der Gruppe (2) + gegebenenfalls Wirkstoff der Gruppe (3) |
|---|---|
| (I-26) | Isoxachlortole |
| (I-26) | Isoxaflutole |
| (I-26) | Lactofen |
| (I-26) | Linuron |
| (I-26) | Mefenacet |
| (I-26) | Mesosulfuron |
| (I-26) | Metamitron |
| (I-26) | Methabenzthiazuron |
| (I-26) | Metribuzin |
| (I-26) | Neburon |
| (I-26) | Oxadiargyl |
| (I-26) | Oxadiazon |
| (I-26) | Oxaziclomefone |
| (I-26) | Phenmedipham |
| (I-26) | Propanil |
| (I-26) | Propoxycarbazone-sodium |
| (I-26) | Pyraclonil |
| (I-26) | Pyraflufen-ethyl |
| (I-26) | Sulcotrione |
| (I-27) | Aclonifen |
| (I-27) | Amicarbazone |
| (I-27) | Amidosulfuron |
| (I-27) | Amitrole |
| (I-27) | Anilofos |
| (I-27) | Asulam |
| (I-27) | Benazolin-ethyl |
| (I-27) | Benfuresate |
| (I-27) | Bifenox |
| (I-27) | Bispyribac-sodium |
| (I-27) | Bromoxynil |
| (I-27) | Desmedipham |
| (I-27) | Diclofop-methyl |
| (I-27) | Diflufenican |
| (I-27) | Ethofumesate |
| (I-27) | Ethoxysulfuron |
| (I-27) | Fenoxaprop-ethyl |
| (I-27) | Fenoxaprop-P-ethyl |

(fortgesetzt)

| Wirkstoff der Gruppe (1) | Wirkstoff der Gruppe (2) + gegebenenfalls Wirkstoff der Gruppe (3) |
|---|---|
| (I-27) | Fentrazamide |
| (I-27) | Fluazifop-P-butyl |
| (I-27) | Fenoxaprop-P-ethyl + Mefenpyr-diethyl |
| (I-27) | Fenoxaprop-P-ethyl + Isoxadifen-ethyl |
| (I-27) | Fluazolate |
| (I-27) | Flucarbazone-sodium |
| (I-27) | Flufenacet |
| (I-27) | Flurtamone |
| (I-27) | Foramsulfuron |
| (I-27) | Glufosinate |
| (I-27) | Glufosinate-ammonium |
| (I-27) | Iodosulfuron |
| (I-27) | Ioxynil |
| (I-27) | Isoproturon |
| (I-27) | Isoxachlortole |
| (I-27) | Isoxaflutole |
| (I-27) | Lactofen |
| (I-27) | Linuron |
| (I-27) | Mefenacet |
| (I-27) | Mesosulfuron |
| (I-27) | Metamitron |
| (I-27) | Methabenzthiazuron |
| (I-27) | Metribuzin |
| (I-27) | Neburon |
| (I-27) | Oxadiargyl |
| (I-27) | Oxadiazon |
| (I-27) | Oxaziclomefone |
| (I-27) | Phenmedipham |
| (I-27) | Propanil |
| (I-27) | Propoxycarbazone-sodium |
| (I-27) | Pyraclonil |
| (I-27) | Pyraflufen-ethyl |
| (I-27) | Sulcotrione |
| (I-28) | Aclonifen |
| (I-28) | Amicarbazone |
| (I-28) | Amidosulfuron |
| (I-28) | Amitrole |

(fortgesetzt)

| Wirkstoff der Gruppe (1) | Wirkstoff der Gruppe (2) + gegebenenfalls Wirkstoff der Gruppe (3) |
|---|---|
| (I-28) | Anilofos |
| (I-28) | Asulam |
| (I-28) | Benazolin-ethyl |
| (I-28) | Benfuresate |
| (I-28) | Bifenox |
| (I-28) | Bispyribac-sodium |
| (I-28) | Bromoxynil |
| (I-28) | Desmedipham |
| (I-28) | Diclofop-methyl |
| (I-28) | Diflufenican |
| (I-28) | Ethofumesate |
| (I-28) | Ethoxysulfuron |
| (I-28) | Fenoxaprop-ethyl |
| (I-28) | Fenoxaprop-P-ethyl |
| (I-28) | Fentrazamide |
| (I-28) | Fluazifop-P-butyl |
| (I-28) | Fenoxaprop-P-ethyl + Mefenpyr-diethyl |
| (I-28) | Fenoxaprop-P-ethyl + Isoxadifen-ethyl |
| (I-28) | Fluazolate |
| (I-28) | Flucarbazone-sodium |
| (I-28) | Flufenacet |
| (I-28) | Flurtamone |
| (I-28) | Foramsulfuron |
| (I-28) | Glufosinate |
| (I-28) | Glufosinate-ammonium |
| (I-28) | Iodosulfuron |
| (I-28) | Ioxynil |
| (I-28) | Isoproturon |
| (I-28) | Isoxachlortole |
| (I-28) | Isoxaflutole |
| (I-28) | Lactofen |
| (I-28) | Linuron |
| (I-28) | Mefenacet |
| (I-28) | Mesosulfuron |
| (I-28) | Metamitron |
| (I-28) | Methabenzthiazuron |
| (I-28) | Metribuzin |

(fortgesetzt)

| Wirkstoff der Gruppe (1) | Wirkstoff der Gruppe (2) + gegebenenfalls Wirkstoff der Gruppe (3) |
|---|---|
| (I-28) | Neburon |
| (I-28) | Oxadiargyl |
| (I-28) | Oxadiazon |
| (I-28) | Oxaziclomefone |
| (I-28) | Phenmedipham |
| (I-28) | Propanil |
| (I-28) | Propoxycarbazone-sodium |
| (I-28) | Pyraclonil |
| (I-28) | Pyraflufen-ethyl |
| (I-28) | Sulcotrione |
| (I-29) | Aclonifen |
| (I-29) | Amicarbazone |
| (I-29) | Amidosulfuron |
| (I-29) | Amitrole |
| (I-29) | Anilofos |
| (I-29) | Asulam |
| (I-29) | Benazolin-ethyl |
| (I-29) | Benfuresate |
| (I-29) | Bifenox |
| (I-29) | Bispyribac-sodium |
| (I-29) | Bromoxynil |
| (I-29) | Desmedipham |
| (I-29) | Diclofop-methyl |
| (I-29) | Diflufenican |
| (I-29) | Ethofumesate |
| (I-29) | Ethoxysulfuron |
| (I-29) | Fenoxaprop-ethyl |
| (I-29) | Fenoxaprop-P-ethyl |
| (I-29) | Fentrazamide |
| (I-29) | Fluazifop-P-butyl |
| (I-29) | Fenoxaprop-P-ethyl + Mefenpyr-diethyl |
| (I-29) | Fenoxaprop-P-ethyl + Isoxadifen-ethyl |
| (I-29) | Fluazolate |
| (I-29) | Flucarbazone-sodium |
| (I-29) | Flufenacet |
| (I-29) | Flurtamone |
| (I-29) | Foramsulfuron |

(fortgesetzt)

| Wirkstoff der Gruppe (1) | Wirkstoff der Gruppe (2) + gegebenenfalls Wirkstoff der Gruppe (3) |
|---|---|
| (I-29) | Glufosinate |
| (I-29) | Glufosinate-ammonium |
| (I-29) | Iodosulfuron |
| (I-29) | Ioxynil |
| (I-29) | Isoproturon |
| (I-29) | Isoxachlortole |
| (I-29) | Isoxaflutole |
| (I-29) | Lactofen |
| (I-29) | Linuron |
| (I-29) | Mefenacet |
| (I-29) | Mesosulfuron |
| (I-29) | Metamitron |
| (I-29) | Methabenzthiazuron |
| (I-29) | Metribuzin |
| (I-29) | Neburon |
| (I-29) | Oxadiargyl |
| (I-29) | Oxadiazon |
| (I-29) | Oxaziclomefone |
| (I-29) | Phenmedipham |
| (I-29) | Propanil |
| (I-29) | Propoxycarbazone-sodium |
| (I-29) | Pyraclonil |
| (I-29) | Pyraflufen-ethyl |
| (I-29) | Sulcotrione |
| (I-30) | Aclonifen |
| (I-30) | Amicarbazone |
| (I-30) | Amidosulfuron |
| (I-30) | Amitrole |
| (I-30) | Anilofos |
| (I-30) | Asulam |
| (I-30) | Benazolin-ethyl |
| (I-30) | Benfuresate |
| (I-30) | Bifenox |
| (I-30) | Bispyribac-sodium |
| (I-30) | Bromoxynil |
| (I-30) | Desmedipham |
| (I-30) | Diclofop-methyl |

(fortgesetzt)

| Wirkstoff der Gruppe (1) | Wirkstoff der Gruppe (2) + gegebenenfalls Wirkstoff der Gruppe (3) |
|---|---|
| (I-30) | Diflufenican |
| (I-30) | Ethofumesate |
| (I-30) | Ethoxysulfuron |
| (I-30) | Fenoxaprop-ethyl |
| (I-30) | Fenoxaprop-P-ethyl |
| (I-30) | Fentrazamide |
| (I-30) | Fluazifop-P-butyl |
| (I-30) | Fenoxaprop-P-ethyl + Mefenpyr-diethyl |
| (I-30) | Fenoxaprop-P-ethyl + Isoxadifen-ethyl |
| (I-30) | Fluazolate |
| (I-30) | Flucarbazone-sodium |
| (I-30) | Flufenacet |
| (I-30) | Flurtamone |
| (I-30) | Foramsulfuron |
| (I-30) | Glufosinate |
| (I-30) | Glufosinate-ammonium |
| (I-30) | Iodosulfuron |
| (I-30) | Ioxynil |
| (I-30) | Isoproturon |
| (I-30) | Isoxachlortole |
| (I-30) | Isoxaflutole |
| (I-30) | Lactofen |
| (I-30) | Linuron |
| (I-30) | Mefenacet |
| (I-30) | Mesosulfuron |
| (I-30) | Metamitron |
| (I-30) | Methabenzthiazuron |
| (I-30) | Metribuzin |
| (I-30) | Neburon |
| (I-30) | Oxadiargyl |
| (I-30) | Oxadiazon |
| (I-30) | Oxaziclomefone |
| (I-30) | Phenmedipham |
| (I-30) | Propanil |
| (I-30) | Propoxycarbazone-sodium |
| (I-30) | Pyraclonil |
| (I-30) | Pyraflufen-ethyl |

(fortgesetzt)

| Wirkstoff der Gruppe (1) | Wirkstoff der Gruppe (2) + gegebenenfalls Wirkstoff der Gruppe (3) |
|---|---|
| (I-30) | Sulcotrione |
| (I-31) | Aclonifen |
| (I-31) | Amicarbazone |
| (I-31) | Amidosulfuron |
| (I-31) | Amitrole |
| (I-31) | Anilofos |
| (I-31) | Asulam |
| (I-31) | B enazolin-ethyl |
| (I-31) | Benfuresate |
| (I-31) | Bifenox |
| (I-31) | Bispyribac-sodium |
| (I-31) | Bromoxynil |
| (I-31) | Desmedipham |
| (I-31) | Diclofop-methyl |
| (I-31) | Diflufenican |
| (I-31) | Ethofumesate |
| (I-31) | Ethoxysulfuron |
| (I-31) | Fenoxaprop-ethyl |
| (I-31) | Fenoxaprop-P-ethyl |
| (I-31) | Fentrazamide |
| (I-31) | Fluazifop-P-butyl |
| (I-31) | Fenoxaprop-P-ethyl + Mefenpyr-diethyl |
| (I-31) | Fenoxaprop-P-ethyl + Isoxadifen-ethyl |
| (I-31) | Fluazolate |
| (I-31) | Flucarbazone-sodium |
| (I-31) | Flufenacet |
| (I-31) | Flurtamone |
| (I-31) | Foramsulfuron |
| (I-31) | Glufosinate |
| (I-31) | Glufosinate-ammonium |
| (I-31) | Iodosulfuron |
| (I-31) | Ioxynil |
| (I-31) | Isoproturon |
| (I-31) | Isoxachlortole |
| (I-31) | Isoxaflutole |
| (I-31) . | Lactofen |
| (I-31) | Linuron |

(fortgesetzt)

| Wirkstoff der Gruppe (1) | Wirkstoff der Gruppe (2) + gegebenenfalls Wirkstoff der Gruppe (3) |
|---|---|
| (I-31) | Mefenacet |
| (I-31) | Mesosulfuron |
| (I-31) | Metamitron |
| (I-31) | Methabenzthiazuron |
| (I-31) | Metribuzin |
| (I-31) | Neburon |
| (I-31) | Oxadiargyl |
| (I-31) | Oxadiazon - |
| (I-31) | Oxaziclomefone |
| (I-31) | Phenmedipham |
| (I-31) | Propanil |
| (I-31) | Propoxycarbazone-sodium |
| (I-31) | Pyraclonil |
| (I-31) | Pyraflufen-ethyl |
| (I-31) | Sulcotrione |
| (I-32) | Aclonifen |
| (I-32) | Amicarbazone |
| (I-32) | Amidosulfuron |
| (I-32) | Amitrole |
| (I-32) | Anilofos |
| (I-32) | Asulam |
| (I-32) | Benazolin-ethyl |
| (I-32) | Benfuresate |
| (I-32) | Bifenox |
| (I-32) | Bispyribac-sodium |
| (I-32) | Bromoxynil |
| (I-32) | Desmedipham |
| (I-32) | Diclofop-methyl |
| (I-32) | Diflufenican |
| (I-32) | Ethofumesate |
| (I-32) | Ethoxysulfuron |
| (I-32) | Fenoxaprop-ethyl |
| (I-32) | Fenoxaprop-P-ethyl |
| (I-32) | Fentrazamide |
| (I-32) | Fluazifop-P-butyl |
| (I-32) | Fenoxaprop-P-ethyl + Mefenpyr-diethyl |
| (I-32) | Fenoxaprop-P-ethyl + Isoxadifen-ethyl |

(fortgesetzt)

| Wirkstoff der Gruppe (1) | Wirkstoff der Gruppe (2) + gegebenenfalls Wirkstoff der Gruppe (3) |
|---|---|
| (I-32) | Fluazolate |
| (I-32) | Flucarbazone-sodium |
| (I-32) | Flufenacet |
| (I-32) | Flurtamone |
| (I-32) | Foramsulfuron |
| (I-32) | Glufosinate |
| (I-32) | Glufosinate-ammonium |
| (I-32) | Iodosulfuron |
| (I-32) | Ioxynil |
| (I-32) | Isoproturon |
| (I-32) | Isoxachlortole |
| (I-32) | Isoxaflutole |
| (I-32) | Lactofen |
| (I-32) | Linuron |
| (I-32) | Mefenacet |
| (I-32) | Mesosulfuron |
| (I-32) | Metamitron |
| (I-32) | Methabenzthiazuron |
| (I-32) | Metribuzin |
| (I-32) | Neburon |
| (I-32) | Oxadiargyl |
| (I-32) | Oxadiazon |
| (I-32) | Oxaziclomefone |
| (I-32) | Phenmedipham |
| (I-32) | Propanil |
| (I-32) | Propoxycarbazone-sodium |
| (I-32) | Pyraclonil |
| (I-32) | Pyraflufen-ethyl |
| (I-32) | Sulcotrione |
| (I-33) | Aclonifen |
| (I-33) | Amicarbazone |
| (I-33) | Amidosulfuron |
| (I-33) | Amitrole |
| (I-33) | Anilofos |
| (I-33) | Asulam |
| (I-33) | Benazolin-ethyl |
| (I-33) | Benfuresate |

(fortgesetzt)

| Wirkstoff der Gruppe (1) | Wirkstoff der Gruppe (2) + gegebenenfalls Wirkstoff der Gruppe (3) |
|---|---|
| (I-33) | Bifenox |
| (I-33) | Bispyribac-sodium |
| (I-33) | Bromoxynil |
| (I-33) | Desmedipham |
| (I-33) | Diclofop-methyl |
| (I-33) | Diflufenican |
| (I-33) | Ethofumesate |
| (I-33) | Ethoxysulfuron |
| (I-33) | Fenoxaprop-ethyl |
| (I-33) | Fenoxaprop-P-ethyl |
| (I-33) | Fentrazamide |
| (I-33) | Fluazifop-P-butyl |
| (I-33) | Fenoxaprop-P-ethyl + Mefenpyr-diethyl |
| (I-33) | Fenoxaprop-P-ethyl + Isoxadifen-ethyl |
| (I-33) | Fluazolate |
| (I-33) | Flucarbazone-sodium |
| (I-33) | Flufenacet |
| (I-33) | Flurtamone |
| (I-33) | Foramsulfuron |
| (I-33) | Glufosinate |
| (I-33) | Glufosinate-ammonium |
| (I-33) | lodosulfuron |
| (I-33) | Ioxynil |
| (I-33) | Isoproturon |
| (I-33) | Isoxachlortole |
| (I-33) | Isoxaflutole |
| (I-33) | Lactofen |
| (I-33) | Linuron |
| (I-33) | Mefenacet |
| (I-33) | Mesosulfuron |
| (I-33) | Metamitron |
| (I-33) | Methabenzthiazuron |
| (I-33) | Metribuzin |
| (I-33) | Neburon |
| (I-33) | Oxadiargyl |
| (I-33) | Oxadiazon |
| (I-33) | Oxaziclomefone |

(fortgesetzt)

| Wirkstoff der Gruppe (1) | Wirkstoff der Gruppe (2) + gegebenenfalls Wirkstoff der Gruppe (3) |
|---|---|
| (I-33) | Phenmedipham |
| (I-33) | Propanil |
| (I-33) | Propoxycarbazone-sodium |
| (I-33) | Pyraclonil . |
| (I-33) | Pyraflufen-ethyl |
| (I-33) | Sulcotrione |
| (I-34) | Aclonifen |
| (I-34) | Amicarbazone |
| (I-34) | Amidosulfuron |
| (I-34) | Amitrole |
| (I-34) | Anilofos |
| (I-34) | Asulam |
| (I-34) | Benazolin-ethyl |
| (I-34) | Benfuresate |
| (I-34) | Bifenox |
| (I-34) | Bispyribac-sodium |
| (I-34) | Bromoxynil |
| (I-34) | Desmedipham |
| (I-34) | Diclofop-methyl |
| (I-34) | Diflufenican |
| (I-34) | Ethofumesate |
| (I-34) | Ethoxysulfuron |
| (I-34) | Fenoxaprop-ethyl |
| (I-34) | Fenoxaprop-P-ethyl |
| (I-34) | Fentrazamide |
| (I-34) | Fluazifop-P-butyl |
| (I-34) | Fenoxaprop-P-ethyl + Mefenpyr-diethyl |
| (I-34) | Fenoxaprop-P-ethyl + Isoxadifen-ethyl |
| (I-34) | Fluazolate |
| (I-34) | Flucarbazone-sodium |
| (I-34) | Flufenacet |
| (I-34) | Flurtamone |
| (I-34) | Foramsulfuron |
| (I-34) | Glufosinate |
| (I-34) | Glufosinate-ammonium |
| (I-34) | Iodosulfuron |
| (I-34) | Ioxynil |

(fortgesetzt)

| Wirkstoff der Gruppe (1) | Wirkstoff der Gruppe (2) + gegebenenfalls Wirkstoff der Gruppe (3) |
|---|---|
| (I-34) | Isoproturon |
| (I-34) | Isoxachlortole |
| (I-34) | Isoxaflutole |
| (I-34) | Lactofen |
| (I-34) | Linuron |
| (I-34) | Mefenacet |
| (I-34) | Mesosulfuron |
| (I-34) | Metamitron |
| (I-34) | Methabenzthiazuron |
| (I-34) | Metribuzin |
| (I-34) | Neburon |
| (I-34) | Oxadiargyl |
| (I-34) | Oxadiazon |
| (I-34) | Oxaziclomefone |
| (I-34) | Phenmedipham |
| (I-34) | Propanil |
| (I-34) | Propoxycarbazone-sodium |
| (I-34) | Pyraclonil |
| (I-34) | Pyraflufen-ethyl |
| (I-34) | Sulcotrione |
| (I-35) | Aclonifen |
| (I-35) | Amicarbazone |
| (I-35) | Amidosulfuron |
| (I-35) | Amitrole |
| (I-35) | Anilofo |
| (I-35) | Asulam |
| (I-35) | Benazolin-ethyl |
| (I-35) | Benfuresate |
| (I-35) | Bifenox |
| (I-35) | Bispyribac-sodium |
| (I-35) | Bromoxynil |
| (I-35) | Desmedipham |
| (I-35) | Diciofop-methyl |
| (I-35) | Diflufenican |
| (I-35) | Ethofumesate |
| (I-35) | Ethoxysulfuron |
| (I-35) | Fenoxaprop-ethyl |

(fortgesetzt)

| Wirkstoff der Gruppe (1) | Wirkstoff der Gruppe (2) + gegebenenfalls Wirkstoff der Gruppe (3) |
|---|---|
| (I-35) | Fenoxaprop-P-ethyl |
| (I-35) | Fentrazamide |
| (I-35) | Fluazifop-P-butyl |
| (I-35) | Fenoxaprop-P-ethyl + Mefenpyr-diethyl |
| (I-35) | Fenoxaprop-P-ethyl + Isoxadifen-ethyl |
| (I-35) | Fluazolate |
| (I-35) | Flucarbazone-sodium |
| (I-35) | Flufenacet |
| (I-35) | Flurtamone |
| (I-35) | Foramsulfuron |
| (I-35) | Glufosinate |
| (I-35) | Glufosinate-ammonium |
| (I-35) | Iodosulfuron |
| (I-35) | Ioxynil |
| (I-35) | Isoproturon |
| (I-35) | Isoxachlortole |
| (I-35) | Isoxaflutole |
| (I-35) | Lactofen |
| (I-35) | Linuron |
| (I-35) | Mefenacet |
| (I-35) | Mesosulfuron |
| (I-35) | Metamitron |
| (I-35) | Methabenzthiazuron |
| (I-35) | Metribuzin |
| (I-35) | Neburon |
| (I-35) | Oxadiargyl |
| (I-35) | Oxadiazon |
| (I-35) | Oxaziclomefone |
| (I-35) | Phenmedipham |
| (I-35) | Propanil |
| (I-35) | Propoxycarbazone-sodium |
| (I-35) | Pyraclonil |
| (I-35) | Pyraflufen-ethyl |
| (I-35) | Sulcotrione |
| (I-36) | Aclonifen |
| (I-36) | Amicarbazone |
| (I-36) | Amidosulfuron |

(fortgesetzt)

| Wirkstoff der Gruppe (1) | Wirkstoff der Gruppe (2) + gegebenenfalls Wirkstoff der Gruppe (3) |
|---|---|
| (I-36) | Amitrole |
| (I-36) | Anilofos |
| (I-36) | Asulam |
| (I-36) | Benazolin-ethyl |
| (I-36) | Benfuresate |
| (I-36) | Bifenox |
| (I-36) | Bispyribac-sodium |
| (I-36) | Bromoxynil |
| (I-36) | Desmedipham |
| (I-36) | Diclofop-methyl |
| (I-36) | Diflufenican |
| (I-36) | Ethofumesate |
| (I-36) | Ethoxysulfuron |
| (I-36) | Fenoxaprop-ethyl |
| (I-36) | Fenoxaprop-P-ethyl |
| (I-36) | Fentrazamide |
| (I-36) | Fluazifop-P-butyl |
| (I-36) | Fenoxaprop-P-ethyl + Mefenpyr-diethyl |
| (I-36) | Fenoxaprop-P-ethyl + Isoxadifen-ethyl |
| (I-36) | Fluazolate |
| (I-36) | Flucarbazone-sodium |
| (I-36) | Flufenacet |
| (I-36) | Flurtamone |
| (I-36) | Foramsulfuron |
| (I-36) | Glufosinate |
| (I-36) | Glufosinate-ammonium |
| (I-36) | Iodosulfuron |
| (I-36) | Ioxynil |
| (I-36) | Isoproturon |
| (I-36) | Isoxachlortole |
| (I-36) | Isoxaflutole |
| (I-36) | Lactofen |
| (I-36) | Linuron |
| (I-36) | Mefenacet |
| (I-36) | Mesosulfuron |
| (I-36) | Metamitron |
| (I-36) | Methabenzthiazuron |

(fortgesetzt)

| Wirkstoff der Gruppe (1) | Wirkstoff der Gruppe (2) + gegebenenfalls Wirkstoff der Gruppe (3) |
|---|---|
| (I-36) | Metribuzin |
| (I-36) | Neburon |
| (I-36) | Oxadiargyl |
| (I-36) | Oxadiazon |
| (I-36) | Oxaziclomefone |
| (I-36) | Phenmedipham |
| (I-36) | Propanil |
| (I-36) | Propoxycarbazone-sodium |
| (I-36) | Pyraclonil |
| (I-36) | Pyraflufen-ethyl |
| (I-36) | Sulcotrione |
| (I-37) | Aclonifen |
| (I-37) | Amicarbazone |
| (I-37) | Amidosulfuron |
| (I-37) | Amitrole |
| (I-37) | Anilofos |
| (I-37) | Asulam |
| (I-37) | Benazolin-ethyl |
| (I-37) | Benfuresate |
| (I-37) | Bifenox |
| (I-37) | Bispyribac-sodium |
| (I-37) | Bromoxynil |
| (I-37) | Desmedipham |
| (I-37) | Diclofop-methyl |
| (I-37) | Diflufenican |
| (I-37) | Ethofumesate |
| (I-37) | Ethoxysulfuron |
| (I-37) | Fenoxaprop-ethyl |
| (I-37) | Fenoxaprop-P-ethyl |
| (I-37) | Fentrazamide |
| (I-37) | Fluazifop-P-butyl |
| (I-37) | Fenoxaprop-P-ethyl + Mefenpyr-diethyl |
| (I-37) | Fenoxaprop-P-ethyl + Isoxadifen-ethyl |
| (I-37) | Fluazolate |
| (I-37) | Flucarbazone-sodium |
| (I-37) | Flufenacet |
| (I-37) | Flurtamone |

(fortgesetzt)

| Wirkstoff der Gruppe (1) | Wirkstoff der Gruppe (2) + gegebenenfalls Wirkstoff der Gruppe (3) |
|---|---|
| (I-37) | Foramsulfuron |
| (I-37) | Glufosinate |
| (I-37) | Glufosinate-ammonium |
| (I-37) | Iodosulfuron |
| (I-37) | Ioxynil |
| (I-37) | Isoproturon |
| (I-37) | Isoxachlortole |
| (I-37) | Isoxaflutole |
| (I-37) | Lactofen |
| (I-37) | Linuron |
| (I-37) | Mefenacet |
| (I-37) | Mesosulfuron |
| (I-37) | Metamitron |
| (I-37) | Methabenzthiazuron |
| (I-37) | Metribuzin |
| (I-37) | Neburon |
| (I-37) | Oxadiargyl |
| (I-37) | Oxadiazon |
| (I-37) | Oxaziclomefone |
| (I-37) | Phenmedipham |
| (I-37) | Propanil |
| (I-37) | Propoxycarbazone-sodium |
| (I-37) | Pyraclonil |
| (I-37) | Pyraflufen-ethyl |
| (I-37) | Sulcotrione |
| (I-38) | Aclonifen |
| (I-38) | Amicarbazone |
| (I-38) | Amidosulfuron |
| (I-38) | Amitrole |
| (I-38) | Anilofos |
| (I-38) | Asulam |
| (I-38) | Benazolin-ethyl |
| (I-38) | Benfuresate |
| (I-38) | Bifenox |
| (I-38) | Bispyribac-sodium |
| (I-38) | Bromoxynil |
| (I-38) | Desmedipham |

(fortgesetzt)

| Wirkstoff der Gruppe (1) | Wirkstoff der Gruppe (2) + gegebenenfalls Wirkstoff der Gruppe (3) |
|---|---|
| (I-38) | Diclofop-methyl |
| (I-38) | Diflufenican |
| (I-38) | Ethofumesate |
| (I-38) | Ethoxysulfuron |
| (I-38) | Fenoxaprop-ethyl |
| (I-38) | Fenoxaprop-P-ethyl |
| (I-38) | Fentrazamide |
| (I-38) | Fluazifop-P-butyl |
| (I-38) | Fenoxaprop-P-ethyl + Mefenpyr-diethyl |
| (I-38) | Fenoxaprop-P-ethyl + Isoxadifen-ethyl |
| (I-38) | Fluazolate |
| (I-38) | Flucarbazone-sodium |
| (I-38) | Flufenacet |
| (I-38) | Flurtamone |
| (I-38) | Foramsulfuron |
| (I-38) | Glufosinate |
| (I-38) | Glufosinate-ammonium |
| (I-38) | Iodosulfuron |
| (I-38) | Ioxynil |
| (I-38) | Isoproturon |
| (I-38) | Isoxachlortole |
| (I-38) | Isoxaflutole |
| (I-38) | Lactofen |
| (I-38) | Linuron |
| (I-38) | Mefenacet |
| (I-38) | Mesosulfuron |
| (I-38) | Metamitron |
| (I-38) | Methabenzthiazuron |
| (I-38) | Metribuzin |
| (I-38) | Neburon |
| (I-38) | Oxadiargyl |
| (I-38) | Oxadiazon |
| (I-38) | Oxaziclomefone |
| (I-38) | Phenmedipham |
| (I-38) | Propanil |
| (I-38) | Propoxycarbazone-sodium |
| (I-38) | Pyraclonil |

(fortgesetzt)

| Wirkstoff der Gruppe (1) | Wirkstoff der Gruppe (2) + gegebenenfalls Wirkstoff der Gruppe (3) |
|---|---|
| (I-38) | Pyraflufen-ethyl |
| (I-38) | Sulcotrione |
| (I-39) | Aclonifen |
| (I-39) | Amicarbazone |
| (I-39) | Amidosulfuron |
| (I-39) | Amitrole |
| (I-39) | Anilofos |
| (I-39) | Asulam |
| (I-39) | Benazolin-ethyl |
| (I-39) | Benfuresate |
| (I-39) | Bifenox |
| (I-39) | Bispyribac-sodium |
| (I-39) | Bromoxynil |
| (I-39) | Desmedipham |
| (I-39) | Diclofop-methyl |
| (I-39) | Diflufenican |
| (I-39) | Ethofumesate |
| (I-39) | Ethoxysulfuron |
| (I-39) | Fenoxaprop-ethyl |
| (I-39) | Fenoxaprop-P-ethyl |
| (I-39) | Fentrazamide |
| (I-39) | Fluazifop-P-butyl |
| (I-39) | Fenoxaprop-P-ethyl + Mefenpyr-diethyl |
| (I-39) | Fenoxaprop-P-ethyl + Isoxadifen-ethyl |
| (I-39) | Fluazolate |
| (I-39) | Flucarbazone-sodium |
| (I-39) | Flufenacet |
| (I-39) | Flurtamone |
| (I-39) | Foramsulfuron |
| (I-39) | Glufosinate |
| (I-39) | Glufosinate-ammonium |
| (I-39) | Iodosulfuron |
| (I-39) | Ioxynil |
| (I-39) | Isoproturon |
| (I-39) | Isoxachlortole |
| (I-39) | Isoxaflutole |
| (I-39) | Lactofen |

(fortgesetzt)

| Wirkstoff der Gruppe (1) | Wirkstoff der Gruppe (2) + gegebenenfalls Wirkstoff der Gruppe (3) |
|---|---|
| (I-39) | Linuron |
| (I-39) | Mefenacet |
| (I-39) | Mesosulfuron |
| (I-39) | Metamitron |
| (I-39) | Methabenzthiazuron |
| (I-39) | Metribuzin |
| (I-39) | Neburon |
| (I-39) | Oxadiargyl |
| (I-39) | Oxadiazon |
| (I-39) | Oxaziclomefone |
| (I-39) | Phenmedipham |
| (I-39) | Propanil. |
| (I-39) | Propoxycarbazone-sodium |
| (I-39) | Pyraclonil |
| (I-39) | Pyraflufen-ethyl |
| (I-39) | Sulcotrione |

Es wurde nun überraschend gefunden, dass die vorstehend definierten Wirkstoffkombinationen aus den substituierten Carbonsäureaniliden der Formel (I) und den vorstehend angeführten Wirkstoffen der Gruppe (2) bei sehr guter Nutzpflanzen-Verträglichkeit eine besonders hohe herbizide Wirksamkeit aufweisen und in verschiedenen Kulturen, vor allem in Baumwolle, Gerste, Kartoffeln, Mais, Raps, Reis, Roggen, Soja, Sonnenblumen, Weizen, Zuckerrohr und Zuckerrüben, insbesondere in Gerste, Mais, Reis und Weizen, zur selektiven Bekämpfung von monokotylen und dikotylen Unkräutern verwendet werden können und dass sie auch zur Bekämpfung von monokotylen und dikotylen Unkräutern im semi- und nicht-selektiven Bereich verwendet werden können.

Überraschenderweise ist die herbizide Wirksamkeit der erfindungsgemäßen Wirkstoffkombinationen aus Verbindungen der oben aufgeführten Gruppen (1) und (2) deutlich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstofflcombinationen auch sonst schwer bekämpfbare Unkräuter gut bekämpfen. Die neuen Wirkstoffkombinationen stellen somit eine wertvolle Bereicherung der Herbizide dar.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstofflcombinationen in relativ großen Bereichen variiert werden. Im Allgemeinen entfallen auf 1 Gewichtsteil Wirkstoff der Formel (I) 0,001 bis 1000 Gewichtsteile, vorzugsweise 0,002 bis 500 Gewichtsteile und besonders bevorzugt 0,01 bis 100 Gewichtsteile Wirkstoff der Gruppe (2).

Es ist auch als überraschend anzusehen, dass aus einer Vielzahl von bekannten Safenern oder Antidots, die befähigt sind, die schädigende Wirkung eines Herbizids auf die Kulturpflanzen zu antagonisieren, gerade die oben aufgeführten Verbindungen der Gruppe (3) geeignet sind, die schädigende Wirkung von Wirkstoffen der Formel (I) und deren Salzen, gegebenenfalls auch in Kombination mit einem oder mehreren der oben angeführten Wirkstoffe der Gruppe (2), auf die Kulturpflanzen annähernd vollständig aufzuheben, ohne dabei die herbizide Wirksamkeit gegenüber den Unkräutern zu beeinträchtigen.

Überraschenderweise wurde zudem gefunden, dass auch die herbizid wirksame Substanz 2,4-Dichlorophenoxy-essigsäure (2,4-D) und ihre Derivate im vorliegenden Fall die oben beschriebene Safeneraufgabe übernehmen können.

Eine bevorzugte Ausführungsform ist daher auch eine Mischung enthaltend eine Verbindung der Formel (I) und/oder deren Salze einerseits und 2,4-D und/oder dessen Derivate andererseits, gegebenenfalls in Kombination mit

einem oder mehreren der oben angeführten Wirkstoffe der Gruppe (2). Typische Derivate von 2,4-D sind z.B. deren Ester.

Überraschenderweise wurde ebenfalls gefunden, dass auch die herbizid wirksamen Substanzen (4-Chlor-2-methylphenoxy)essigsäure (MCPA) und (+-)-2-(4-Chlor-2-methylphenoxy)propansäure (Mecoprop) im vorliegenden Fall eine Safeneraufgabe übernehmen können. Die genannten Verbindungen sind in den folgenden Patentanmeldungen beschrieben: JP 63 072 605 und GB 00 820 180.

Die Verbindungen Diethyl-1-(2,4-dichlorophenyl)-4,5-dihydro-5-methyl-1H-pyrazole-3,5-dicarboxylate (Mefenpyr-diethyl), (1-Methyl-hexyl)-[(5-chloro-8-quinolinyl)oxy]-acetate (Cloquintocet-mexyl) und Ethyl-1-(2,4-dichlorophenyl)-5-(trichloromethyl)-1H-1,2,4-triazole-3-carboxylate (Fenchlorazole-ethyl) sind in den folgenden Patentanmeldungen beschrieben: DE-A-39 39 503, EP- A-191 736 bzw. DE-A-35 25 205. 2,4-D ist ein bekanntes Herbizid.

Der vorteilhafte Effekt der Kulturpflanzenverträglichkeit der erfindungsgemäßen Wirkstoffkombinationen ist bei bestimmten Konzentrationsverhältnissen ebenfalls besonders stark ausgeprägt. Jedoch können die Gewichtsverhältnisse der Wirkstoffe in den Wirkstoffkombinationen in relativ großen Bereichen variiert werden. Im Allgemeinen entfallen auf 1 Gewichtsteil Wirkstoff der Formel (I) oder dessen Mischungen mit Wirkstoffen der Gruppe (2) 0,001 bis 1000 Gewichtsteile, vorzugsweise 0,01 bis 100 Gewichtsteile und besonders bevorzugt 0,1 bis 10 Gewichtsteile einer der oben unter (c) genannten, die Kulturpflanzen Verträglichkeit verbessernden Verbindungen (Antidots/Safener).

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Pflanzenteile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhiozome aufgeführt werden. Zu den Pflanzenteilen gehört auch vegetatives und generatives Vermehrungsmaterial, beispielsweise Stecklinge, Knollen, Rhizome, Ableger und Samen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch genteclinologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus *Bacillus thuringiensis* (z.B. durch die Gene kodierend für CryIA(a), CryIA(b), CryIA(c), CryIIA, CryIIIA, CryIIIB2, Cry9c Cry2Ab,

Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link@ (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt.

Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfmdungsgemäß mit den Verbindungen der allgemeinen Formel (I) bzw. den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Verbindungen bzw. Mischungen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen weiterhin durch ein- oder mehrschichtiges Umhüllen.

Unter den durch biotechnologische und gentechnologische Methoden oder durch Kombination dieser Methoden erhaltenen Pflanzen werden solche Pflanzen hervorgehoben, die sog. ALS-, 4-HPPD-, EPSPS- und/oder PPO-Hemmstoffe tolerieren, wie z.B. Acuron-Pflanzen.

Die erfindungsgemäßen Wirkstoffe können z.B. bei den folgenden Pflanzen verwendet werden:

Dikotyle Unkräuter der Gattungen: Abutilon, Amaranthus, Ambrosia, Anoda, Anthemis, Aphanes, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Dikotyle Kulturen der Gattungen: Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia.

Monokotyle Unkräuter der Gattungen: Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum.

Monokotyle Kulturen der Gattungen: Allium, Ananas, Asparagus, Avena, Hordeum, Oryza, Panicum, Saccharum, Secale, Sorghum, Triticale, Triticum, Zea.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäß zu verwendenden Wirkstoffkombinationen können sowohl in konventionellen Anbauverfahren (Reihenk-ulturen mit geeigneter Reihenweite) in Plantagenkulturen (z.B. Wein, Obst, Zitrus) sowie in Industrie- und Gleisanlagen, auf Wegen und Plätzen, aber auch zur Stoppelbehandlung und beim Minimum-Tillage-Verfahren eingesetzt werden. Sie eignen sich weiterhin als Abbrenner (Krautabtötung z.B. in Kartoffeln) oder als Defoliantien (z.B. in Baumwolle). Ferner sind sind sie für den Einsatz auf Bracheflächen geeignet. Weitere Einsatzgebiete sind Baumschulen, Forst, Grünland und Zierpflanzenbau.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methyl-isobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulieruligen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Rako Binol") oder Ammoniumsalze wie z.B. Ammoniumsulfät oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.: "Calculating synergistic and antagonistic responses ofherbicide combinations", Weeds 15, Seiten 20 - 22, 1967):

Wenn

X= % Schädigung durch Herbizid A (Wirkstoff der Formel I) bei p kg/ha Aufwandmenge

und

Y= % Schädigung durch Herbizid B(Wirkstoff der Formel II) bei q kg/ha Aufwandmenge

E= die erwartete Schädigung der Herbizide A und B bei p und q kg/ha Aufwandmenge,

dann ist

$$E = X + Y - (X * Y/100).$$

Ist die tatsächliche Schädigung größer als berechnet, so ist die Kombination in ihrer Wirkung überadditiv, das heißt, sie zeigt einen synergistischen Effekt,

Die zu erwartende Wirkung für eine gegebene Kombination dreier Herbizide kann ebenfalls der oben angegebenen Literatur entnommen werden.

**Anwendungsbeispiele:**

Beispiel A

Post-emergence-Test / Gewächshaus

Testpflanzen werden unter kontrollierten Bedingungen (Temperatur und Licht) herangezogen. Sobald die Pflanzen eine Wuchshöhe von 5 bis 15 cm erreicht haben, wird die Testsubstanz bzw. die Kombination der Testsubstanzen in der Weise aufgespritzt, dass die jeweils gewünschten Wirkstoffmengen pro Flächeneinheit ausgebracht werden. Die Konzentration der Spritzbrühe wird so gewählt, dass in 500 Liter Wasser/ha die jeweils gewünschten Wirkstoffinengen ausgebracht werden.

Nach der Spritzanwendung werden die Pflanzgefäße im Gewächshaus bei konstanten Licht- und Temperaturbedingungen untergebracht.

Nach 5 Tagen (5d) und/oder drei Wochen (21d) wird der Schädigungsgrad der Pflanzen bonitiert in % Schädigung im Vergleich zur Entwicklung der unbehandelten Kontrolle.

Es bedeuten:

0 % = keine Wirkung (wie unbehandelte Kontrolle)
100 % = totale Vernichtung

Wirkstoffe, Aufwandmengen, Testpflanzen und Resultate gehen aus den nachfolgenden Tabellen hervor. Soweit nicht anders angegeben, wurden die Versuche bei Anwesenheit von 0,5 % Renex 36 durchgeführt.
a.i. steht für "active ingredient" (Wirkstoff).
HORVW steht für *Hordeum vulgare* (Wintergerste).
TRZAW steht für *Triticum aestivum* (Winterweizen).

**Tabelle 3**

| Wirkstoff | Aufwandmenge [g ai/ha] | HORVW 5d | HORVW 21d | TRZAW 5d | TRZAW 21d |
|---|---|---|---|---|---|
| **Mefenpyrdiethyl** | 50 | 0 | 0 | 0 | 0 |
| Cloquintocet-mexyl | 50 | 0 | 0 | 0 | 0 |
| Isoxadifen | 50 | 0 | 0 | 0 | 0 |

Tabelle 4

| Wirkstoff*) | Aufwandmenge [g ai/ha] | HORVW 5d | HORVW 21d | TRZAW 5d |
|---|---|---|---|---|
| Cloquintocet-mexyl | 50 | 0 | 0 | 0 |
| Isoxadifen | 50 | 0 | 0 | 0 |
| *)Ohne Zugabe von Renex 36 | | | | |

Tabelle 5

| Wirkstoff | Aufwandmenge [g ai/ha] | HORVW 21d |
|---|---|---|
| **Bsp.I-26** | 60<br>30<br>15 | 40<br>20<br>10 |
| Bsp. I-26 + Mefenpyr-diethyl | 60+50<br>30+50<br>15+50 | 5<br>5<br>0 |

Tabelle 6

| Wirkstoff | Aufwandmenge g ai/ha | HORVW 21d |
|---|---|---|
| **Bsp. I-26** | 60 | 40 |
| Bsp. I-26 + Cloquintocet-mexyl | 60+50 | 20 |

Tabelle 7

| Wirkstoff | Aufwandmenge g ai/ha | TRZAW 21d |
|---|---|---|
| Bsp. I-26 | 60<br>30 | 30<br>20 |
| Bsp. I-26 + Mefenpyr-diethyl | 60+50<br>30+50 | 10<br>5 |
| Bsp. I-26 + Cloquintocet-mexyl | 60+50<br>30+50 | 10<br>5 |

Tabelle 8

| Wirkstoff | Aufwandmenge g ai/ha | TRZAW 21 d |
|---|---|---|
| Bsp.I-26 | 60 | 30 |
| Bsp. I-26 + Isoxadifen | 60+50 | 20 |

Tabelle 9

| Wirkstoff | Aufwandmenge g ai/ha | HORVW 5d |
|---|---|---|
| Bsp. I-31 | 60<br>30<br>15 | 50<br>40<br>30 |

(fortgesetzt)

| Wirkstoff | Aufwandmenge g ai/ha | HORVW 5d |
|---|---|---|
| Bsp. I-31 + Mefenpyr-diethyl | 60+50<br>30+50<br>15+50 | 30<br>25<br>20 |
| Bsp. I-31 + Cloquintocet-mexyl | 60+50<br>30+50<br>15+50 | 25<br>20<br>20 |
| Bsp. I-31 + Isoxadifen | 60+50<br>30+50<br>15+50 | 20<br>20<br>15 |

**Tabelle 10**

| Wirkstoff | Aufwandmenge g ai/ha | RZAW 5d |
|---|---|---|
| Bsp. I-31 | 60<br>30 | 20<br>20 |
| Bsp. I-31 + Mefenpyr-diethyl | 60+50<br>30+50 | 10<br>10 |

**Tabelle 11**

| Wirkstoff | Aufwandmenge g ai/ha | HORVW 5d |
|---|---|---|
| Bsp. I-32 | 60<br>30 | 40<br>25 |
| Bsp. I-32 + Mefenpyr-diethyl | 60+50<br>30+50 | 20<br>15 |
| Bsp. I-32+ Cloquintocet-mexyl | 60+50<br>30+50 | 20<br>15 |
| Bsp. I-32 + Isoxadifen | 60+50 | 25 |

**Tabelle 12**

| Wirkstoff | Aufwandmenge g ai/ha | HORVW 5d |
|---|---|---|
| Bsp. I-33 | 60 | 40 |
| Bsp. I-33 + Mefenpyr-diethyl | 60+50 | 20 |
| Bsp. I-33 + Cloquintocet-mexyl | 60+50 | 30 |
| Bsp. I-33 + Isoxadifen | 60+50 | 10 |

**Tabelle 13**

| Wirkstoff | Aufwandmenge g ai/ha | HORVW 21d |
|---|---|---|
| Bsp. I-33 | 60<br>30 | 20<br>15 |

(fortgesetzt)

| Wirkstoff | Aufwandmenge g ai/ha | HORVW 21d |
|---|---|---|
| Bsp. I-33 + Isoxadifen | 60+50<br>30+50 | 10<br>5 |

**Tabelle 14**

| Wirkstoff | Aüfwandmenge g ai/ha | TRZAW 5d |
|---|---|---|
| **Bsp. I-33** | 60 | 25 |
| Bsp. I-33 + Mefenpyr-diethyl | 60+50 | 15 |
| Bsp. I-33 + Cloquintocet-mexyl | 60+50 | 10 |
| Bsp. I-33 + Isoxadifen | 60+50 | 5 |

**Tabelle 15**

| Wirkstoff | Aufwandmenge g ai/ha | TRZAW 21d |
|---|---|---|
| Bsp.I-33 | 60<br>30 | 15<br>10 |
| Bsp. I-33 + Isoxadifen | 60+50<br>30+50 | 5<br>0 |

**Tabelle 15**

| Wirkstoff | Aufwandmenge g ai/ha | HORVW 5d |
|---|---|---|
| Bsp. I-29 | 15 | 10 |
| Bsp.I-29+Cloquintocet-mexyl | 15+50 | 0 |

**Tabelle 16**

| Wirkstoff | Aufwandmenge g ai/ha | HORVW 5d |
|---|---|---|
| **Bsp. I-40** | 60 | 30 |
| Bsp. I-40 + Mefenpyr-diethyl | 60+50 | 20 |
| Bsp. I-40+ Cloquintocet-mexyl | 60+50 | 20 |

**Tabelle 17**

| Wirkstoff | Aufwandmenge g ai/ha | HORVW 21d |
|---|---|---|
| **Bsp. I-40** | 60 | 20 |
| Bsp. I-40 + Mefenpyr-diethyl | 60+50 | 10 |
| Bsp. I-40 + Cloquintocet-mexyl | 60+50 | 10 |
| Bsp. I-40 + Isoxadifen | 60+50 | 10 |

**Tabelle 18**

| Wirkstoff | Aufwandmenge g ai/ha | TRZAW 5d |
|---|---|---|
| Bsp. I-40 | 60 | 20 |
| Bsp. I-40 + Cloquintocet-mexyl | 60+50 | 10 |

**Tabelle 19**

| Wirkstoff | Aufwandmenge g ai/ha | HORVW 5d |
|---|---|---|
| Bsp. I-41 | 30<br>15 | 25<br>20 |
| **Bsp. I-41 + Cloquintocet-mexyl** | 30+50<br>15+50 | 15<br>5 |

**Tabelle 20**

| Wirkstoff | Aufwandmenge g ai/ha | HORVW 5d |
|---|---|---|
| Bsp. I-42 | 60 | 30 |
| Bsp. I-42 + Mefenpyr-diethyl | 60+50 | 20 |
| Bsp. I-42 + Cloquintocet-mexyl | 60+50 | 20 |

**Tabelle 21**

| Wirkstoff | Aufwandmenge g ai/ha | HORVW 5d |
|---|---|---|
| Bsp. I-42 | 60<br>30<br>15 | 30<br>20<br>15 |
| Bsp. I-42 + Isoxadifen | 60+50<br>30+50<br>15+50 | 20<br>10<br>5 |

**Tabelle 22**

| Wirkstoff | Aufwandmenge g ai/ha | HORVW 21d |
|---|---|---|
| Bsp.I-42 | 60 | 20 |
| Bsp.I-42+Mefenpyr-diethyl | 60+50 | 10 |
| Bsp. I-42 + Cloquintocet-mexyl | 60+50 | 10 |
| Bsp. I-42 + Isoxadifen | 60+50 | 10 |

**Tabelle 23**

| Wirkstoff | Aufwandmenge g ai/ha | TRZAW 5d |
|---|---|---|
| Bsp. I-43 | 30<br>15 | 15<br>15 |
| Bsp. I-43 + Cloquintocet-mexyl | 30+25<br>15+25 | 5<br>5 |

**Tabelle 24**

| Wirksfoff*) | Aufwandmenge g ai/ha | HORVW 21d |
|---|---|---|
| **Bsp. I-43** | 15 | 10 |
| Bsp. I-43 + Isoxadifen | 15+25 | 0 |
| *) Ohne Zusatz von Renex 36 | | |

**Tabelle 25**

| Wirkstoff | Aufwandmenge g ai/ha | HORVW 5d |
|---|---|---|
| Bsp.I-14 | 60 | 30 |
| Bsp.I-14+Mefenpyr-diethyl | 60+50 | 20 |

**Tabelle 26**

| Wirkstoff | Aufwandmenge g ai/ha | TRZAW 5d |
|---|---|---|
| Bsp. I-14 | 60 | 20 |
| Bsp. I-14+Mefenpyr-diethyl | 60+50 | 10 |

**Tabelle 27**

| Wirkstoff | Aufwandmenge g ai/ha | HORVW 21d |
|---|---|---|
| Bsp. I-1 | 60<br>30 | 40<br>20 |
| Bsp. I-1 + Mefenpyr-diethyl | 60+50<br>30+50 | 15<br>10 |
| Bsp. I-1 + Cloquintocet-mexyl | 60+50<br>30+50 | 15<br>10 |
| Bsp. I-1 + Isoxadifen | 60+50<br>30+50 | 15<br>10 |

**Tabelle 28**

| Wirkstoff | Aufwandmenge g ai/ha | HORVW 5d |
|---|---|---|
| Bsp.I-2 | 60<br>30 | 60<br>40 |
| Bsp. I-2 + Mefenpyr-diethyl | 60+50<br>30+50 | 25<br>25 |
| Bsp. I-2 + Cloquintocet-mexyl | 60+50<br>30+50 | 30<br>25 |
| Bsp. I-2 + Isoxadifen | 60+50<br>30+50 | 40<br>30 |

**Tabelle 29**

| Wirkstoff | Aufwandmenge g ai/ha | HORVW 5d |
|---|---|---|
| Bsp. I-24 | 30<br>15 | 60<br>40 |
| Bsp. I-24 + Mefenpyr-diethyl | 30+50<br>15+50 | 40<br>30 |

**Tabelle 30**

| Wirkstoff | Aufwandmenge g ai/ha | HORVW 5d |
|---|---|---|
| Bsp.I-24 | 60<br>30<br>15 | 70<br>60<br>40 |
| Bsp. I-24 + Cloquintocet-mexyl | 60+50<br>30+50<br>15+50 | 30<br>25<br>25 |
| Bsp. I-24 + Isoxadifen | 60+50<br>30+50<br>15+50 | 30<br>30<br>25 |

**Patentansprüche**

**1.** Mittel, **gekennzeichnet durch** einen wirksamen Gehalt an einer Wirkstoffkombination umfassend

(a) zumindest eine Verbindung der allgemeinen Formel (I)

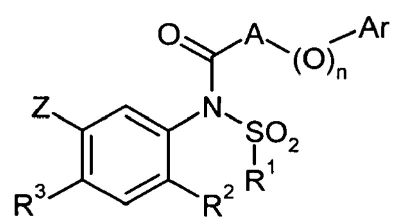

(I)

in welcher

n für die Zahlen 0 oder 1 steht,
A für Alkandiyl (Alkylen) oder Alkendiyl mit jeweils bis zu 6 Kohlenstoffatomen steht,
Ar für gegebenenfalls substituiertes Aryl mit 6 oder 10 Kohlenstoffatomen oder für gegebenenfalls substituiertes Heterocyclyl mit bis zu 9 Kohlenstoffatomen und 1 bis 4 Stickstoffatomen und/oder gegebenenfalls 1 oder 2 Sauerstoff- oder Schwefelatomen steht,
wobei die jeweils möglichen Substituenten aus folgender Aufzählung zu entnehmen sind:
Nitro, Cyano, Carboxy, Carbamoyl, Thiocarbamoyl, Halogen, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Halogenalkylthio, $C_1$-$C_4$-Alkylsulfinyl, $C_1$-$C_4$-Halogenalkylsulfinyl, $C_1$-$C_4$-Alkylsulfonyl, $C_1$-$C_4$-Halogenalkylsulfonyl, $C_1$-$C_4$-Alkylamino, Di-($C_1$-$C_4$-alkyl)-amino, $C_1$-$C_4$-Alkylcarbonyl, $C_1$-$C_4$-Alkoxycarbonyl, $C_1$-$C_4$-Alkylaminocarbonyl, Di-($C_1$-$C_4$-alkyl)-aminoarbonyl, Di-($C_1$-$C_4$-alkyl)-aminosulfonyl,
$R^1$ für gegebenenfalls **durch** Halogen substituiertes Alkyl mit 1 bis 6 Kohlenstoffatomen,
für gegebenenfalls **durch** Halogen substituiertes Alkenyl mit 2 bis 6 Kohlenstoffatomen,
für gegebenenfalls **durch** Halogen oder $C_1$-$C_4$-Alkyl substituiertes Cycloalkyl mit 3 bis 6 Kohlenstoffatomen,

für jeweils gegebenenfalls **durch** Nitro, Cyano, Halogen, $C_1$-$C_4$-Alkyl oder $C_1$-$C_4$-Alkoxy substituiertes Aryl oder Arylalkyl mit jeweils 6 oder 10 Kohlenstoffatomen in der Arylgruppe und gegebenenfalls 1 bis 4 Kohlenstoffatomen im Alkylteil, oder
für gegebenenfalls **durch** Nitro, Cyano, Halogen, $C_1$-$C_4$-Alkyl oder $C_1$-$C_4$-Alkoxy substituiertes Heterocyclyl mit 5 Kohlenstoffatomen und 1 bis 4 Stickstoffatomen und/oder 1 oder 2 Sauerstoff- oder Schwefelatomen steht,
$R^2$ für Cyano, Carbamoyl, Thiocarbamoyl, Halogen, oder für jeweils gegebenenfalls **durch** Halogen substituiertes Alkyl oder Alkoxy mit jeweils 1 bis 4 Kohlenstoffatomen steht,
$R^3$ für Wasserstoff, Cyano, Carbamoyl, Thiocarbamoyl oder Halogen steht, und
Z für eine der nachstehend skizzierten Gruppierungen steht,

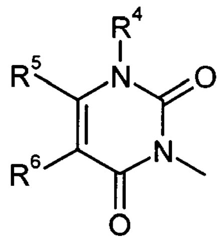
$(Z^1)$

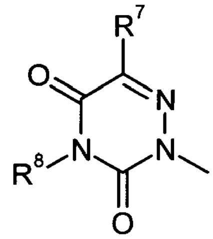
$(Z^2)$

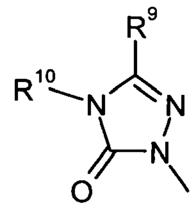
$(Z^3)$

worin

$R^4$ für Wasserstoff, Amino oder gegebenenfalls **durch** Halogen substituiertes Alkyl mit 1 bis 4 Kohlenstoffatomen steht,
$R^5$ für Carboxy, Cyano, Carbamoyl, Thiocarbamoyl oder jeweils gegebenenfalls **durch** Halogen substituiertes Alkyl oder Alkoxycarbonyl mit jeweils 1 bis 4 Kohlenstoffatomen in den Alkylgruppen steht,
$R^6$ für Wasserstoff, Halogen oder gegebenenfalls **durch** Halogen substituiertes Alkyl mit 1 bis 4 Kohlenstoffatomen steht,
$R^7$ für Wasserstoff, Cyano, Halogen, oder für jeweils gegebenenfalls **durch** Cyano, Halogen oder $C_1$-$C_4$-Alkoxy substituiertes Alkyl, Alkoxy, Alkylthio, Alkylamino oder Dialkylamino mit jeweils 1 bis 4 Kohlenstoffatomen in den Alkylgruppen steht, und
$R^8$ für Wasserstoff oder für jeweils gegebenenfalls **durch** Cyano, Halogen oder $C_1$-$C_4$-Alkoxy substituiertes Alkyl, Alkoxy, Alkylamino, Alkylcarbonyl oder Alkoxycarbonyl mit jeweils 1 bis 4 Kohlenstoffatomen in den Alkylgruppen steht,
$R^9$ für Wasserstoff, Cyano, Halogen oder eine der Gruppierungen -$R^{11}$, -O-$R^{11}$, S-$R^{11}$, SO-$R^{11}$ oder $SO_2$-$R^{11}$ steht,
$R^{10}$ für Wasserstoff, Hydroxy, Amino, oder eine der Gruppierungen -$R^{11}$ oder -O-$R^{11}$ steht, und
$R^{11}$ für gegebenenfalls **durch** Cyano, Halogen oder $C_1$-$C_4$-Alkoxy substituiertes Alkyl mit 1 bis 6 Kohlenstoffatomen,
für jeweils gegebenenfalls **durch** Halogen substituiertes Alkenyl oder Alkinyl mit jeweils 2 bis 6 Kohlenstoffatomen,
für gegebenenfalls **durch** Cyano, Halogen oder $C_1$-$C_4$-Alkyl substituiertes Cycloalkyl mit 3 bis 6 Kohlenstoffatomen, oder
für jeweils gegebenenfalls **durch** Nitro, Cyano, Halogen, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl oder Benzyl steht,

und
(b) eine die Kulturpflanzen-Verträglichkeit verbessernde Verbindung aus der folgenden Gruppe von Verbindungen:

4-Dichloracetyl-1-oxa-4-aza-spiro[4.5]-decan (AD-67), 1-Dichloracetyl-hexahydro-3,3,8a-trimethylpyrrolo [1,2-a]-pyrimidin-6(2H)-on (BAS-145138), 4-Dichloracetyl-3,4-dihydro-3-methyl-2H-1,4-benzoxazin (Benoxacor), 4-Carboxy-3,4-dihydro-2H-1-benzopyran-4-essigsäure (CL-304415), 5-Chlor-chinolin-8-oxy-essigsäure-(1-methyl-hexylester) (Cloquintocet-mexyl), α-(Cyanomethox-imino)-phenylacetonitril (Cyometrinil), 2,4-Dichlor-phenoxy-essigsäure (2,4-D), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methylphenyl)-N'-(1-methyl-1-phenyl-ethyl)-harnstoff (Daimuron, Dymron), 4,6-Dichlor-2-phenyl-pyrimidin (Fenclorim), 1-(2,4-Dichlor-phenyl)-5-trichlormethyl-1H-1,2,4-triazol-3-carbonsäure-ethylester (Fenchlorazol-ethyl), 2-Chlor-4-trifluormethyl-thiazol-5-carbonsäure-phenylmethylester (Flurazole), 4-Chlor-N-(1,3-dioxolan-2-yl-methoxy)-α-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), (4-Chlor-2-methyl-phenoxy)-essigsäure (MCPA), (+-)-2-(4-Chlor-2-methyl-phenoxy)-propansäure (Mecoprop), Diethyl-1-(2,4-dichlorphenyl)-4,5-dihydro-5-methyl-1 H-pyrazol-3,5-dicarboxylat (Mefenpyr-diethyl) 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2,5-trimethyl-oxazolidin (R-29148), N-Cyclopropyl-4-[[(2-methoxy-5-methyl-benzoyl)-amino]-sulfonyl]-benzamid, N-[[(4-Methoxyacetylamino)-phenyl]-sulfonyl-2-methoxy-benzamid und N-[[(4-Methylaminocarbonylamino)-phenyl]-sulfonyl-2-methoxy-benzamid, (3-Oxo-isochroman-4-ylidenmethoxy)-essigsäure-methylester und (3-Oxo-1 H-2-benzothiopyran-4-(3H)-ylidenmethoxy)-essigsäuremethylester, 1-Ethyl-4-hydroxy-3(1H-tetrazolyl-5-yl-carbonyl)-2(1H)-chinolin.

**2.** Mittel gemäß Anspruch 1, **dadurch gekenzeichnet, dass**

n für die Zahl 0 steht,
A für Alkandiyl (Alkylen) mit 1 bis 5 Kohlenstoffatomen oder Alkendiyl mit 2 bis 5 Kohlenstoffatomen steht,
Ar für jeweils gegebenenfalls substituiertes Phenyl oder Naphthyl, oder für jeweils gegebenenfalls substituiertes Heterocyclyl aus der Reihe Furyl, Tetrahydrofuryl, Thienyl, Tetrahydrothienyl, Benzofuryl, Dihydrobenzofuryl, Benzothienyl, Pyrrolyl, Pyrazolyl, Pyranyl, Benzopyranyl, Dihydrobenzopyranyl, Tetrahydrobenzopyranyl, Pyridinyl, Chinolinyl oder Pyrimidinyl steht,
wobei die jeweils möglichen Substituenten vorzugsweise aus folgender Aufzählung zu entnehmen sind:

Nitro, Cyano, Carboxy, Carbamoyl, Thiocarbamoyl, Fluor, Chlor, Brom, Methyl, Ethyl, n- oder i-Propyl, n-, i-, s- oder t-Butyl, Trifluormethyl, Methoxy, Ethoxy, n- oder i-Propoxy, n-, i-, s- oder t-Butoxy, Difluormethoxy, Trifluormethoxy, Methylthio, Ethylthio, n- oder i-Propylthio, n-, i-, s- oder t-Butylthio, Difluormethylthio, Trifluormethylthio, Methylsulfinyl, Ethylsulfinyl, n- oder i-Propylsulfinyl, Trifluormethylsulfinyl, Methylsulfonyl, Ethylsulfonyl, n- oder i-Propylsulfonyl, Trifluormethylsulfonyl, Methylamino, Ethylamino, n- oder i-Propylamino, n-, i-, s- oder t-Butylamino, Dimethylamino, Diethyl-amino, Acetyl, Propionyl, n- oder i-Butyroyl, Methoxycarbonyl, Ethoxycarbonyl, n- oder i-Propoxycarbonyl, Methylaminocarbonyl, Ethylaminocarbonyl, n- oder i-Propylaminocarbonyl, Dimethylaminocarbonyl, Diethylaminocarbonyl, Dimethylaminosulfonyl, Diethylaminosulfonyl,

$R^1$ für gegebenenfalls durch Fluor, Chlor und/oder Brom substituiertes Alkyl mit 1 bis 5 Kohlenstoffatomen,
für gegebenenfalls durch Fluor, Chlor und/oder Brom substituiertes Alkenyl mit 2 bis 5 Kohlenstoffatomen,
für gegebenenfalls durch Fluor, Chlor und/oder Brom oder $C_1$-$C_4$-Alkyl substituiertes Cycloalkyl mit 3 bis 6 Kohlenstoffatomen,
für jeweils gegebenenfalls durch Nitro, Cyano, Fluor, Chlor und/oder Brom, Methyl, Ethyl, n- oder i-Propyl, n-, i-, s- oder t-Butyl, Methoxy, Ethoxy, n- oder i-Propoxy, n-, i-, s- oder t-Butoxy substituiertes Aryl
oder Arylalkyl mit jeweils 6 oder 10 Kohlenstoffatomen in der Arylgruppe und gegebenenfalls 1 bis 3 Kohlenstoffatomen im Alkylteil, oder für gegebenenfalls durch Nitro, Cyano, Fluor, Chlor und/oder Brom, Methyl, Ethyl, n- oder i-Propyl, n-, i-, s- oder t-Butyl, Methoxy, Ethoxy, n- oder i-Propoxy, n-, i-, s- oder t-Butoxy substituiertes Heterocyclyl mit 5 Kohlenstoffatomen und 1 bis 3 Stickstoffatomen und/oder 1 oder 2 Sauerstoff- oder Schwefelatomen steht,
$R^2$ für Cyano, Carbamoyl, Thiocarbamoyl, Fluor, Chlor, Brom, oder für jeweils gegebenenfalls durch Fluor, Chlor und/oder Brom substituiertes Methyl, Ethyl, n- oder i-Propyl, Methoxy, Ethoxy oder n- oder i-Propoxy steht,
$R^3$ für Wasserstoff, Cyano, Carbamoyl, Thiocarbamoyl, Fluor, Chlor oder Brom steht,
Z für eine der nachstehend skizzierten Gruppierungen steht,

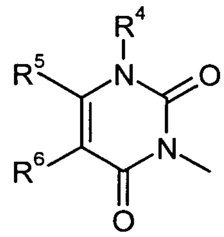

$(Z^1)$

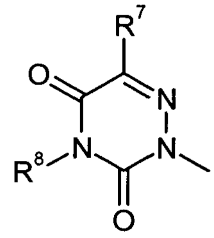

$(Z^2)$

$R^4$ für Wasserstoff, Amino oder gegebenenfalls durch Fluor, Chlor und/oder Brom substituiertes Methyl, Ethyl oder n- oder i-Propyl steht,
$R^5$ für Carboxy, Cyano, Carbamoyl, Thiocarbamoyl oder jeweils gegebenenfalls durch Fluor, Chlor und/oder Brom substituiertes Methyl, Ethyl, n- oder i-Propyl, Methoxycarbonyl, Ethoxycarbonyl oder n- oder i-Propoxycarbonyl steht,
$R^6$ für Wasserstoff, Fluor, Chlor, Brom oder jeweils gegebenenfalls durch Fluor, Chlor und/oder Brom substituiertes Methyl, Ethyl oder n- oder i-Propyl steht,
$R^7$ für Wasserstoff, Cyano, Fluor, Chlor, Brom oder jeweils gegebenenfalls durch Cyano, Fluor, Chlor, Brom, Methoxy, Ethoxy, n- oder i-Propoxy, n-, i-, s- oder t-Butoxy substituiertes Alkyl, Alkoxy, Alkylthio, Alkylamino oder Dialkylamino mit jeweils 1 bis 3 Kohlenstoffatomen in den Alkylgruppen steht,
$R^8$ für Wasserstoff oder jeweils gegebenenfalls durch Cyano, Fluor, Chlor, Brom oder Methoxy, Ethoxy, n- oder i-Propoxy, n-, i-, s- oder t-Butoxy substituiertes Alkyl, Alkoxy, Alkylamino, Alkylcarbonyl oder Alkoxycarbonyl mit jeweils 1 bis 3 Kohlenstoffatomen in den Alkylgruppen steht,
$R^9$ für Wasserstoff, Cyano, Fluor, Chlor, Brom oder eine der Gruppierungen $-R^{11}$, $-O-R^{11}$, $S-R^{11}$ oder $SO_2-R^{11}$ steht,
$R^{10}$ für Wasserstoff, Hydroxy, Amino oder die Gruppierung $-R^{11}$ steht,

und

$R^{11}$ für gegebenenfalls durch Cyano, Fluor, Chlor, Brom, Methoxy, Ethoxy, n- oder i-Propoxy, n-, i-, s- oder t-Butoxy substituiertes Alkyl mit 1 bis 4 Kohlenstoffatomen,
für jeweils gegebenenfalls durch Halogen substituiertes Alkenyl oder Alkinyl mit jeweils 2 bis 4 Kohlenstoffatomen,
für gegebenenfalls durch Cyano, Fluor, Chlor, Brom, Ethyl, Methyl, n- oder i-Propyl oder n-, i-, s- oder t-Butyl substituiertes Cycloalkyl mit 3 bis 6 Kohlenstoffatomen, oder
für jeweils gegebenenfalls durch Nitro, Cyano, Fluor, Chlor, Brom, $C_1$-$C_4$-Alkyl, $C_1$-$C_4$-Halogenalkyl, $C_1$-$C_4$-Alkoxy oder $C_1$-$C_4$-Halogenalkoxy substituiertes Phenyl oder Benzyl steht.

**3.** Mittel gemäß Anspruch 1 oder 2, **dadurch gekennzeichnet, dass**

A für Methylen, Ethan-1,1-diyl (Ethyliden), Ethan-1,2-diyl (Dimethylen), Propan-1,1-diyl (Propyliden), Propan-1,2-diyl, Propan-1,3-diyl (Trimethylen), Ethen-1,2-diyl, Propen-1,2-diyl oder Propen-2,3-diyl steht,
Ar für gegebenenfalls substituiertes Phenyl, oder für gegebenenfalls substituiertes Heterocyclyl aus der Reihe Furyl, Tetrahydrofuryl, Thienyl, Benzofuryl, Dihydrobenzofuryl, Benzothienyl, Pyrrolyl, Pyrazolyl, Benzopyranyl, Dihydrobenzopyranyl, Tetrahydrobenzopyranyl, Pyridinyl oder Pyrimidinyl steht,
wobei die jeweils möglichen Substituenten vorzugsweise aus folgender Aufzählung zu entnehmen sind:

Nitro, Cyano, Carboxy, Carbamoyl, Thiocarbamoyl, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy, Trifluormethoxy, Methylthio, Ethylthio, n- oder i-Propylthio, Difluormethylthio, Trifluormethylthio, Methylsulfinyl, Ethylsulfinyl, Trifluormethylsulfinyl, Methylsulfonyl, Ethylsulfonyl, Trifluormethylsulfonyl, Methylamino, Ethylamino, n- oder i-Propylamino, Dimethylamino, Diethyl-amino, Acetyl, Propionyl, n- oder i-Butyroyl, Methoxycarbonyl, Ethoxycarbonyl, n- oder i-Propoxycarbonyl, Methylaminocarbonyl, Ethylaminocarbonyl, n- oder i-Propylaminocarbonyl, Dimethylaminocarbonyl, Diethylaminocarbonyl, Dimethylaminosulfonyl, Diethylaminosul-

fonyl,

$R^1$ für jeweils gegebenenfalls durch Fluor, Chlor und/oder Brom substituiertes Methyl, Ethyl, n- oder i-Propyl, n-, i-, s- oder t-Butyl,
für jeweils gegebenenfalls durch Fluor, Chlor und/oder Brom substituiertes Ethenyl, Propenyl oder Butenyl,
für jeweils gegebenenfalls durch Fluor, Chlor, Brom, Methyl, Ethyl, n- oder i-Propyl substituiertes Cyclopropyl, Cyclobutyl, Cyclopentyl oder Cyclohexyl,
für jeweils gegebenenfalls durch Nitro, Cyano, Fluor, Chlor, Brom, Methyl, Ethyl, n- oder i-Propyl, n-, i-, s- oder t-Butyl, Methoxy, Ethoxy, n- oder i-Propoxy substituiertes Phenyl, Naphthyl, Benzyl oder Phenylethyl, oder
für jeweils gegebenenfalls durch Fluor, Chlor, Brom, Methyl, Ethyl, n- oder i-Propyl, n-, i-, s- oder t-Butyl, Methoxy, Ethoxy, n- oder i-Propoxy substituiertes Heterocyclyl aus der Reihe Furyl, Thienyl, Pyrazolyl oder Pyridinyl steht,
$R^2$ für Cyano, Carbamoyl, Thiocarbamoyl, Fluor, Chlor, Brom, oder für jeweils gegebenenfalls durch Fluor und/oder Chlor substituiertes Methyl, Ethyl, Methoxy oder Ethoxy steht,
$R^3$ für Wasserstoff, Cyano, Fluor oder Chlor steht,
Z für die nachstehend skizzierte Gruppierung ($Z^1$) steht,

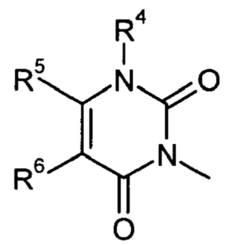

($Z^1$)

$R^4$ für Wasserstoff, Amino oder jeweils gegebenenfalls durch Fluor substituiertes Methyl oder Ethyl steht,
$R^5$ für Carboxy, Cyano, Carbamoyl, Thiocarbamoyl oder jeweils gegebenenfalls durch Fluor und/oder Chlor substituiertes Methyl, Ethyl, Methoxycarbonyl oder Ethoxycarbonyl steht,
$R^6$ für Wasserstoff, Fluor, Chlor, Brom oder jeweils gegebenenfalls durch Fluor und/oder Chlor substituiertes Methyl oder Ethyl steht,
$R^7$ für Wasserstoff, Cyano, Fluor, Chlor, Brom oder jeweils gegebenenfalls durch Cyano, Fluor, Chlor, Methoxy, Ethoxy, n- oder i-Propoxy substituiertes Methyl, Ethyl, n- oder i-Propyl, Methoxy, Ethoxy, n- oder i-Propoxy, Methylthio, Ethylthio, n- oder i-Propylthio, , Methylamino, Ethylamino, n- oder i-Propylamino, Dimethylamino oder Diethylamino steht,
$R^8$ für Wasserstoff oder jeweils gegebenenfalls durch Cyano, Fluor, Chlor, Methoxy, Ethoxy, n- oder i-Propoxy substituiertes Methyl, Ethyl, n- oder i-Propyl, Methoxy, Ethoxy, n- oder i-Propoxy, Methylamino, Ethylamino, n- oder i-Propylamino, Acetyl, Propionyl, n- oder i-Butyroyl, Methoxycarbonyl, Ethoxycarbonyl, n- oder i-Propoxycarbonyl steht,
$R^9$ für Wasserstoff, Cyano, Fluor, Chlor, Brom oder die Gruppierung -O-$R^{11}$ oder $SO_2$-$R^{11}$ steht,
$R^{10}$ für Wasserstoff oder die Gruppierung -$R^{11}$ steht, und
$R^{11}$ für jeweils gegebenenfalls durch Cyano, Fluor, Chlor, Brom, Methoxy, Ethoxy, n- oder i-Propoxy substituiertes Methyl, Ethyl, n- oder i-Propyl, n-, i-, s- oder t-Butyl,
für jeweils gegebenenfalls durch Fluor, Chlor und/oder Brom substituiertes Ethenyl, Propenyl, Butenyl, Ethinyl, Propinyl oder Butinyl,
für jeweils gegebenenfalls durch Cyano, Fluor, Chlor, Brom, Methyl, Ethyl, n- oder i-Propyl substituiertes Cyclopropyl, Cyclobutyl, Cyclopentyl oder Cyclohexyl, oder
für jeweils gegebenenfalls durch Nitro, Cyano, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy substituiertes Phenyl oder Benzyl steht.

4. Mittel gemäß einem der Ansprüche 1 bis 3, **dadurch gekennzeichnet, dass**

A für Methylen, Ethan-1,1-diyl (Ethyliden), Ethan-1,2-diyl (Dimethylen), Propan-1,1-diyl (Propyliden), Ethen-1,2-diyl, Propen-1,2-diyl oder Propen-2,3-diyl steht,
Ar für gegebenenfalls substituiertes Phenyl, Pyridinyl oder Pyrimidinyl steht,
wobei die jeweils möglichen Substituenten vorzugsweise aus folgender Aufzählung zu entnehmen sind:

Cyano, Carbamoyl, Thiocarbamoyl, Fluor, Chlor, Brom, Methyl, Ethyl, Trifluormethyl, Methoxy, Ethoxy und Trifluormethoxy,

$R^1$ für jeweils gegebenenfalls durch Fluor und/oder Chlor substituiertes Methyl, Ethyl, n- oder i-Propyl, n-, i- oder s-Butyl, für gegebenenfalls durch Fluor, Chlor oder Methyl substituiertes Cyclopropyl, für jeweils gegebenenfalls durch Fluor, Chlor, Brom, Methyl, Ethyl, Methoxy oder Ethoxy substituiertes Phenyl oder Benzyl, oder für jeweils gegebenenfalls durch Fluor, Chlor, Brom, Methyl, Ethyl, Methoxy oder Ethoxy substituiertes Heterocyclyl aus der Reihe Furyl, Thienyl, Pyrazolyl oder Pyridinyl steht,
$R^2$ für Cyano, Chlor, Brom oder Trifluormethyl steht,
$R^3$ für Wasserstoff, Fluor oder Chlor steht,
$R^4$ für Wasserstoff, Amino oder Methyl steht,
$R^5$ für Cyano oder Trifluormethyl steht,
$R^6$ für Wasserstoff, Chlor, Brom oder Methyl steht,
$R^7$ für Wasserstoff, Cyano, Fluor, Chlor, Brom oder jeweils gegebenenfalls durch Fluor und/oder Chlor substituiertes Methyl oder Ethyl steht,
$R^8$ für Wasserstoff oder jeweils gegebenenfalls durch Fluor substituiertes Methyl oder Ethyl steht,
$R^9$ für Wasserstoff, Chlor, Brom oder die Gruppierung -$R^{11}$ steht, und
$R^{11}$ für jeweils gegebenenfalls durch Fluor, Chlor, Methoxy oder Ethoxy substituiertes Methyl, Ethyl, n- oder i-Propyl, oder für gegebenenfalls durch Fluor, Chlor oder Methyl substituiertes Cyclopropyl steht.

**5.** Mittel gemäß einem der Ansprüche 1 bis 4, **dadurch gekennzeichnet, dass** sie unter (b) einen Wirkstoff aus der folgenden Gruppe von Wirkstoffen enthalten:

5-Chlor-chinolin-8-oxy-essigsäure-(1-methyl-hexylester) (Cloquintocet-mexyl), Ethyl-4,5-dihydro-5,5-diphenyl-3-isoxazolcarboxylat (Isoxadifen-ethyl) und Diethyl-1-(2,4-dichlor-phenyl)-4,5-dihydro-5-methyl-1H-pyrazol-3,5-dicarboxylat (Mefenpyr-diethyl), 4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (BAS-145138), 4-Dichloracetyl-3,4-dihydro-3-methyl-2H-1,4-benzoxazin (Benoxacor), 2,2-Dichlor-N,N-di-2-propenyl-acetamid (Dichlormid), 3-Dichloracetyl-5-(2-furanyl)-2,2-dimethyl-oxazolidin (Furilazole, MON-13900) und 3-Dichloracetyl-2,2,5-trimethyl-oxazolidin (R-29148).

**6.** Mittel gemäß einem der Ansprüche 1 bis 5, **dadurch gekennzeichnet, dass** sie als Wirkstoff der Gruppe (b) Mefenpyr-diethyl enthalten.

**7.** Verwendung eines Mittels gemäß einem der Ansprüche 1 bis 6 zur Bekämpfung von unerwünschten Pflanzen.

**8.** Verfahren zum Bekämpfen von unerwünschten Pflanzen, **dadurch gekennzeichnet, dass** man ein Mittel gemäß einem der Ansprüche 1 bis 6 auf die Pflanzen und/oder ihren Lebensraum einwirken lässt.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9832746 A
- WO 0002867 A
- WO 0075119 A
- WO 9210660 A
- WO 9530661 A
- EP 303153 A
- WO 9626206 A
- WO 9831681 A
- WO 0128341 A
- WO 9966795 A
- WO 9813361 A
- WO 9900020 A
- JP 63072605 A
- GB 00820180 A
- DE 3939503 A
- EP 191736 A
- DE 3525205 A


### In der Beschreibung aufgeführte Nicht-Patentliteratur


- **COLBY, S.R.** Calculating synergistic and antagonistic responses ofherbicide combinations. *Weeds,* 1967, vol. 15, 20-22